# EUROPEAN PATENT APPLICATION

(11) **EP 4 780 067 A1**
(43) Date of publication of application: **22.07.2026**
(21) Application number: 24870287.0
(22) Date of filing: 27.08.2024
(51) Int. Cl.: H04W 36/00

(54) **COMMUNICATION METHOD AND RELATED APPARATUS**

(30) Priority: 27.09.2023 CN 202311271246
(71) Applicant: HUAWEI TECHNOLOGIES CO., LTD., Shenzhen 518129 (CN)
(72) Inventor: ZHU, Shichao, Shenzhen, Guangdong 518129 (CN); SUN, Fei, Shenzhen, Guangdong 518129 (CN); ZHU, Yuanping, Shenzhen, Guangdong 518129 (CN); SHI, Yulong, Shenzhen, Guangdong 518129 (CN)
(74) Representative: Grünecker Patent- und Rechtsanwälte PartG mbB
(86) International application number: PCT/CN2024/114941
(87) International publication number: WO 2025/066741

(57) **Abstract**

A communication method and a related apparatus are provided, relating to the field of communication technologies. The communication method includes: A relay node sends first information to a first donor node when a first triggering condition is met, where the first information includes an outcome of setting up a first F1 interface between the relay node and a target donor node. In this method, the first information is sent to the first donor node, so that the first donor node learns that the relay node does not set up an F1 interface with a second donor node indicated by the first donor node, and/or the first donor node learns that the relay node sets up an F1 interface with a target donor node configured by a network management system. Therefore, the first donor node can initiate a UE handover procedure to a correct donor node (the target donor node), thereby avoiding that the relay node cannot normally complete DU migration due to conflict between CU triggering and OAM triggering, and ensuring that the relay node successfully completes DU migration.

## Description

This application claims priority to Chinese Patent Application No. 202311271246.8, filed with the China National Intellectual Property Administration on September 27, 2023, and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

Compared to 4th generation mobile communication systems, 5th generation (5th generation, 5G) mobile communication systems and future mobile communication systems impose stricter requirements on various network performance indicators. For example, compared with 4G, 5G targets a 1000-fold increase in capacity, wider coverage, and ultra-reliable low-latency communication. On the one hand, given the abundant high-frequency carrier frequency resources, the use of high-frequency small cell networking becomes increasingly popular in hotspot areas, to meet the ultra-high capacity requirement of 5G. However, high-frequency carriers suffer from poor propagation and are highly susceptible to blockage and severe attenuation, resulting in limited coverage. Therefore, this necessitates a large quantity of densely deployed small cells. However, it is costly to provide optical fiber backhaul for the large quantity of densely deployed small cells, and construction is difficult. Therefore, there is a need for an economical and convenient backhaul solution. On the other hand, in consideration of wide coverage requirements, there is also a need for a flexible and convenient access and backhaul solution since it is difficult and costly to deploy optical fibers for network coverage in some remote areas. An integrated access and backhaul (integrated access and backhaul, IAB) technology provides an idea to resolve the foregoing two problems. Access links (access link) and backhaul links (backhaul link, BL) thereof both use a wireless transmission solution, reducing optical fiber deployment.

In IAB networks, a relay node RN (relay node) or an IAB node (IAB node) may provide wireless access services and service data forwarding for a user equipment (UE, user equipment). Service data of the UE is transmitted by the IAB node to an IAB donor (IAB donor) through a wireless backhaul link. The IAB donor may also be referred to as a donor node (donor node) or a donor base station (donor gNodeB, DgNB). The IAB node includes a mobile termination (mobile termination, MT) part and a distributed unit (distributed unit, DU) part. When oriented to a parent node of the IAB node, the IAB node may serve as a terminal device, that is, a role of the MT. When being oriented to a child node of the IAB node (the child node may be another IAB node or a UE), the IAB node is considered as a network device, that is, a role of the DU. The donor base station (DgNB) may be an access network element having complete base station functions, or may be an access network element in a form in which a central unit (centralized unit, CU) and a distributed unit (distributed unit, DU) are separated. The donor base station is connected to a core network (for example, connected to a 5G core network) element serving the UE, and provides a wireless backhaul function for the IAB node.

In the IAB networks, DU migration of the IAB node supports two triggering manners: source CU triggering and operation, administration and maintenance (operation administration and maintenance, OAM) triggering. In the source CU triggering manner, a source CU sends indication information that carries a target CU to a DU of the IAB node, and the DU completes a migration operation based on the indication information. The source CU is a CU connected to the DU before migration, and the target CU is a CU connected to the DU after migration. In the OAM triggering manner, an OAM server can directly perform pre-configuration on the IAB node or remotely trigger the IAB node to perform DU migration. However, source CU triggering conflicts with OAM triggering, and consequently, the IAB node cannot normally complete DU migration.

### SUMMARY

Implementations of this application provide a communication method and a related apparatus, so that when an IAB node performs DU migration, a triggering conflict caused by CU triggering and OAM triggering can be processed, thereby ensuring that the IAB node completes DU migration.

In this application, both a CU (or a donor) connected to an MT and a CU (or a donor) connected to a DU mean logical connections, and do not represent direct physical connections. For example, the MT has a radio resource control (radio resource control, RRC) connection with the CU connected to the MT, and the DU has an F1 interface connection with the CU connected to the DU. In addition, the logical connection may be a to-be-set-up state (for example, the DU has determined to set up an F1 connection with a CU, and in this case, the F1 interface has not been set up, and F1 interface setup is to be initiated) or a set-up state (for example, the DU has set up an F1 interface with a CU connected to the DU). In this application, migration of a relay node generally is DU migration of the relay node.

According to a **first aspect**, an implementation of this application provides a communication method. The method may be performed by a communication apparatus. The communication apparatus may be a device, or may be a chip (system) or a circuit used in the device. This is not limited in this application. The method is applied to a relay node, and includes:

The relay node sends first information to a first donor node when a first triggering condition is met, where the first information includes an outcome of setting up a first F1 interface between the relay node and a target donor node and an identifier of the target donor node; or the first information includes an outcome of setting up a first F1 interface between the relay node and a target donor node, an identifier of the target donor node, and a DU migration triggering manner of the relay node.

The first triggering condition includes at least one of the following:
being based on second information provided by a network management system, where the second information indicates the relay node to set up the first F1 interface with the target donor node; or the relay node receives third information from the first donor node, where the third information indicates the relay node to set up a second F1 interface with a second donor node, and the second donor node is different from the target donor node.

According to the communication method provided in this implementation of this application, the relay node sends the first information to the first donor node when the first triggering condition is met, where the first information includes the outcome of setting up the first F1 interface between the relay node and the target donor node and carries the identifier of the target donor node and/or the DU migration triggering manner, and the target donor node is different from the second donor node. Therefore, the first donor node learns that the relay node does not set up an F1 interface with the second donor node indicated by the first donor node, and/or the first donor node learns that the relay node sets up an F1 interface with a target donor node configured by the network management system, so that the first donor node can initiate a UE handover procedure to a correct donor node (that is, the target donor node), thereby avoiding a case in which the relay node cannot normally complete DU migration because CU triggering conflicts with OAM triggering, and ensuring that the relay node successfully completes DU migration.

The relay node in this implementation of this application may be a device equipped with a processor/chip that can be configured to execute computer-executable instructions, or may be a processor/chip that can be configured to execute computer-executable instructions. The relay node in this implementation of this application includes a terminal side part oriented to a parent node and a network side part oriented to a child node, for example, may include an MT and a DU, or may include an MT and a gNB. This is not limited in this implementation of this application. DU migration and MT migration of the relay node are completely decoupled. Therefore, a donor node connected to the MT of the relay node may be different from or the same as a donor node connected to the DU. For example, both the MT and the DU of the relay node are connected to the first donor node. For another example, the MT of the relay node is connected to the second donor node, and the DU of the relay node is connected to the first donor node. When the communication method in this implementation of this application is applied to an IAB network, the relay node may be an IAB node, a DU of the IAB node is connected to the first donor node, and a donor node connected to an MT of the IAB node is not limited in this implementation of this application, for example, may be the first donor node, the second donor node, or the target donor node.

The first donor node in this implementation of this application may be a device equipped with a processor/chip that can be configured to execute computer-executable instructions, or may be a processor/chip that can be configured to execute computer-executable instructions. The first donor node in this implementation of this application is a source CU corresponding to the DU of the relay node, and the first donor node is connected to the DU of the relay node before the relay node performs DU migration. When the communication method in this implementation of this application is applied to an IAB network, the relay node may be an IAB node, and the first donor node may be connected to a DU of the IAB node.

The second donor node and the target donor node in this implementation of this application may be devices equipped with a processor/chip that can be configured to execute computer-executable instructions, or may be processors/chips that can be configured to execute computer-executable instructions. In this implementation of this application, the second donor node is an incorrect donor node after DU migration, and the target donor node is a correct donor node after DU migration. For example, when a triggering conflict occurs, an indication triggered by the network management system prevails. In this case, a donor node indicated by the network management system is a correct donor node, and a donor node indicated by the first donor node is an incorrect donor node. For example, when a triggering conflict occurs, an indication triggered by the network management system prevails, the network management system indicates to migrate the DU of the relay node to a third donor node, and the first CU indicates to migrate the relay node to a fourth donor node. In this case, the third donor node is a correct donor node, and the fourth donor node is an incorrect donor node.

The network management system in this implementation of this application may be a device equipped with a processor/chip that can be configured to execute computer-executable instructions, or may be a processor/chip that can be configured to execute computer-executable instructions. The network management system in this implementation of this application is a network management system of the relay node, and can communicate with the relay node. The network management system generally is an operation, administration and maintenance (orchestration and management, OAM) server. OAM triggering mentioned above generally means that the OAM indicates, through pre-configuration or remote control, the relay node to perform DU migration. When the communication method in this implementation of this application is applied to an IAB network, the network management system may be an OAM server, and the OAM server may be connected to an IAB node. For example, the OAM is connected to the IAB node by using a PDU session of an MT, or the OAM is directly connected to the IAB node through an IP network. This is not limited in this embodiment of this application.

The first triggering condition in this implementation of this application includes but is not limited to the following: being based on the second information provided by the network management system, where the second information indicates the relay node to set up the first F1 interface with the target donor node; or the relay node receives the third information from the first donor node, where the third information indicates the relay node to set up the second F1 interface with the second donor node, and the second donor node is different from the target donor node.

The first information in this implementation of this application includes the outcome of setting up the first F1 interface between the relay node and the target donor node. For example, the outcome may be that the relay node and the target donor node complete F1 interface setup, or may be that the relay node and the target donor node do not complete F1 interface setup. This is not limited in this implementation of this application. Optionally, the first information may be carried in an F1 application protocol (F1 application protocol, F1AP) message, and the F1AP message may further carry the identifier of the target donor node, for example, a gNB ID and/or an IP address. The first information carries the identifier of the target donor node, so that the first donor node can communicate with the target donor node, and indicate the target donor node to perform UE handover. In a possible implementation, the identifier of the target donor node that is carried in the first information may alternatively be represented by an identifier (for example, an NR cell global identifier NCGI) of a target cell (that is, a cell of a target DU), and the first donor node may obtain the identifier of the target donor node based on the identifier of the target cell.

In some scenarios, the first information may further carry the DU migration triggering manner (for example, OAM triggering). Specifically, in a scenario in which CU triggering conflicts with OAM triggering, when OAM triggering prevails, the first information carries the DU migration triggering manner (for example, OAM triggering), so that the first donor node can learn of a reason why the relay node does not set up an F1 interface based on an indication of the first donor node.

Optionally, the first information may be carried in a class 1 RESPONSE message or a REJECT/FAILURE message of an F1 message of CU triggering, or may be carried in a separate class 2 message. The class 1 message requires a response from a peer end, and the class 2 message does not require a response from a peer end. For example, a class 1 message (for example, RESPONSE/REJECT/FAILURE) sent by the relay node to the first donor node is used to respond to another class 1 message (for example, REQUEST) sent by the first donor node to the relay node. If the relay node sends a class 2 message to the first donor node, the class 2 message does not need to be a response message of a specific message, and the class 2 message may be understood as a notification message.

The second information may be information pre-configured by the network management system. For example, the pre-configured information indicates the relay node to perform DU migration at a specified time point. Specifically, the pre-configured information indicates the relay node to start DU migration one hour after the relay node accesses a network. How to perform pre-configuration, content of the pre-configured information, and the like are not limited in this implementation of this application. Alternatively, the second information may be sent by the network management system to the relay node through remote control. For example, the network management system may send the second information to the relay node by using a PDU session of an MT or through an IP network.

It may be understood that the relay node generates the first information when the first triggering condition is met. In this case, the first triggering condition may be understood as a condition for triggering the relay node to generate the first information. Optionally, the relay node further sends the first information when the first triggering condition is met. In this case, the first triggering condition may be understood as a condition for triggering the relay node to generate and send the first information.

In the IAB network, DU migration of an IAB node supports two triggering manners: source CU triggering and OAM triggering. In the source CU triggering (which is referred to as "CU triggering" subsequently) manner, a source CU sends indication information that carries a target CU to a DU of the IAB node, and the DU completes a migration operation based on the indication information. The source CU is a CU connected to the DU before migration, and the target CU is a CU connected to the DU after migration. In the OAM triggering manner, the OAM server can directly perform pre-configuration on the IAB node or remotely trigger the IAB node to perform DU migration. Apparently, both CU triggering and OAM triggering can indicate the relay node to perform DU migration. If CU triggering and OAM triggering occur at the same time, the relay node may not normally complete DU migration, or may migrate to an incorrect donor node. In addition, when the two triggering manners conflict, at least one triggering indication (for example, CU triggering) is not completed, which may cause a control failure, an information transmission error, or another exception.

However, in this implementation of this application, the first triggering condition for generating (or generating and sending) an outcome of setting up an F1 interface between the relay node and the target donor node is clearly provided, and the foregoing F1 interface setup outcome can be used to enable the first donor node to send UE handover indication information to a correct donor node, thereby avoiding a case in which DU migration of the relay node cannot be normally completed or a migration error occurs. When the relay node meets the first triggering condition, the relay node can generate (or generate and send) the first information in time, so that the first donor node can initiate a user equipment (user equipment, UE) handover request to a correct donor node (the target donor node) based on the first information. In this way, the relay node normally completes DU migration, and the DU of the relay node does not migrate to an incorrect donor node.

In a possible implementation, when the first triggering condition is not met, for example, an F1 interface is not set up based on the second information (for example, the second information does not exist), or the second donor node is the same as the target donor node, when the outcome of setting up the first F1 interface with the target donor node is sent to the first donor node, the identifier of the target donor node is not carried, and optionally the DU migration triggering manner may be carried. This implementation can implicitly indicate, to the first donor node, that the target donor node is selected by the first donor node or is the same as that selected by the first donor node, so that signaling overheads are reduced while the first donor node can correctly determine the target donor node.

**In a possible implementation,** the outcome of the first F1 interface is that F1 interface setup between the relay node and the target donor node is completed.

In this implementation of this application, the outcome of the first F1 interface is that F1 interface setup between the relay node and the target donor node is completed (complete). The target donor node is different from a donor node indicated by CU triggering, or the target node is not indicated by CU triggering. The relay node sends F1 interface setup complete information of the relay node to the first donor node by using the first information, so that the first donor node can indicate a correct donor node (the target donor node) to perform UE handover. In this way, the relay node successfully completes DU migration.

**In a possible implementation,** the second information is further used to trigger release of the second F1 interface.

In this implementation of this application, the second information indicates the relay node to set up the first F1 interface with the target donor node, and the second F1 interface is an F1 interface between the relay node and the second donor node. If the relay node has set up the second F1 interface with the second donor node before receiving the second information, the second information is used to trigger release of the second F1 interface. This can enable the relay node to set up the first F1 interface with the target donor node. In addition, this can further save resources of the second donor node, and help the second donor node set up an F1 interface with another relay node.

Optionally, being based on the second information provided by the network management system is equivalent to OAM triggering. OAM triggering may occur after CU triggering and before the relay node receives a setup complete message of the second F1 interface. For example, OAM triggering may occur after the relay node sends an F1 interface setup message to the second donor node and before the relay node receives an F1 SETUP RESPONSE message from the second donor node.

**In a possible implementation,** the first information further includes an identifier of the target donor node and/or a DU migration triggering manner.

In this implementation of this application, the identifier of the target donor node may be, for example, a gNB ID and/or an IP address, and the DU migration triggering manner may be, for example, OAM triggering. The first information carries the identifier of the target donor node, so that the first donor node can communicate with the target donor node, and indicate the target donor node to perform UE handover. The first information carries the DU migration triggering manner, so that the first donor node can learn of a reason why the relay node does not set up an F1 interface based on an indication of the first donor node. The identifier of the target donor node may alternatively be represented by an identifier (for example, an NCGI) of a target cell, and the first donor node may obtain the identifier of the target donor node based on the identifier of the target cell.

Optionally, when the first F1 interface is an F1 interface indicated to be set up by OAM triggering and/or when OAM triggering is inconsistent with CU triggering, the first information may include the DU migration triggering manner.

Optionally, the first information may be carried in a class 1 RESPONSE message or a REJECT/FAILURE message of an F1 message of CU triggering, or may be carried in a separate class 2 message. The class 1 message requires a response from a peer end, and the class 2 message does not require a response from a peer end. For example, a class 1 message (for example, RESPONSE/REJECT/FAILURE) sent by the relay node to the first donor node is used to respond to another class 1 message (for example, REQUEST) sent by the first donor node to the relay node. If the relay node sends a class 2 message to the first donor node, the class 2 message does not need to be a response message of a specific message, and the class 2 message may be understood as a notification message.

According to a **second aspect**, an implementation of this application provides a communication method. The method may be performed by a communication apparatus. The communication apparatus may be a device, or may be a chip (system) or a circuit used in the device. This is not limited in this application. The method is applied to a first donor node, and includes:

The first donor node receives first information from a relay node when a first triggering condition is met, where the first information includes an outcome of setting up a first F1 interface between the relay node and a target donor node and an identifier of the target donor node; or the first information includes an outcome of setting up a first F1 interface between the relay node and a target donor node, an identifier of the target donor node, and a DU migration triggering manner of the relay node.

The first triggering condition includes at least one of the following:
being based on second information provided by a network management system, where the second information indicates the relay node to set up the first F1 interface with the target donor node; or the relay node receives third information from the first donor node, where the third information indicates the relay node to set up a second F1 interface with a second donor node, and the second donor node is different from the target donor node.

The relay node in this implementation of this application may be a device equipped with a processor/chip that can be configured to execute computer-executable instructions, or may be a processor/chip that can be configured to execute computer-executable instructions. The relay node in this implementation of this application includes a terminal side part oriented to a parent node and a network side part oriented to a child node, for example, may include an MT and a DU, or may include an MT and a gNB. This is not limited in this implementation of this application. DU migration and MT migration of the relay node are completely decoupled. Therefore, a donor node connected to the MT of the relay node may be different from or the same as a donor node connected to the DU. For example, both the MT and the DU of the relay node are connected to the first donor node. For another example, the MT of the relay node is connected to the second donor node, and the DU of the relay node is connected to the first donor node. When the communication method in this implementation of this application is applied to an IAB network, the relay node may be an IAB node, a DU of the IAB node is connected to the first donor node, and a donor node connected to an MT of the IAB node is not limited in this implementation of this application, for example, may be the first donor node, the second donor node, or the target donor node.

The first donor node in this implementation of this application may be a device equipped with a processor/chip that can be configured to execute computer-executable instructions, or may be a processor/chip that can be configured to execute computer-executable instructions. The first donor node in this implementation of this application is a source CU corresponding to the DU of the relay node, and the first donor node is connected to the DU of the relay node before the relay node performs DU migration. When the communication method in this implementation of this application is applied to an IAB network, the relay node may be an IAB node, and the first donor node may be connected to a DU of the IAB node.

The second donor node and the target donor node in this implementation of this application may be devices equipped with a processor/chip that can be configured to execute computer-executable instructions, or may be processors/chips that can be configured to execute computer-executable instructions. In this implementation of this application, the second donor node is an incorrect donor node after DU migration, and the target donor node is a correct donor node after DU migration. For example, when a triggering conflict occurs, an indication triggered by the network management system prevails. In this case, a donor node indicated by the network management system is a correct donor node, and a donor node indicated by the first donor node is an incorrect donor node. For example, when a triggering conflict occurs, an indication triggered by the network management system prevails, the network management system indicates to migrate the DU of the relay node to a third donor node, and the first CU indicates to migrate the relay node to a fourth donor node. In this case, the third donor node is a correct donor node, and the fourth donor node is an incorrect donor node.

The network management system in this implementation of this application may be a device equipped with a processor/chip that can be configured to execute computer-executable instructions, or may be a processor/chip that can be configured to execute computer-executable instructions. The network management system in this implementation of this application is a network management system of the relay node, and can communicate with the relay node. The network management system generally is an operation, administration and maintenance (orchestration and management, OAM) server. OAM triggering mentioned above generally means that the OAM indicates, through pre-configuration or remote control, the relay node to perform DU migration. When the communication method in this implementation of this application is applied to an IAB network, the network management system may be an OAM server, and the OAM server may be connected to an IAB node. For example, the OAM is connected to the IAB node by using a PDU session of an MT, or the OAM is directly connected to the IAB node through an IP network. This is not limited in this embodiment of this application.

The first information in this implementation of this application includes the outcome of setting up the first F1 interface between the relay node and the target donor node. For example, the outcome may be that the relay node and the target donor node complete F1 interface setup, or may be that the relay node and the target donor node do not complete F1 interface setup. This is not limited in this implementation of this application. The first information may be, for example, a message carried in an F1 application protocol (F1 application protocol, F1AP), and the message carries the identifier of the target donor node, for example, a gNB ID and/or an IP address. The first information carries the identifier of the target donor node, so that the first donor node can communicate with the target donor node, and indicate the target donor node to perform UE handover. In a possible implementation, the identifier of the target donor node that is carried in the first information may alternatively be represented by an identifier (for example, an NR cell global identifier NCGI) of a target cell, and the first donor node may obtain the identifier of the target donor node based on the identifier of the target cell.

In some scenarios, the first information may further carry the DU migration triggering manner (for example, OAM triggering). Specifically, in a scenario in which CU triggering conflicts with OAM triggering, when OAM triggering prevails, the first information carries the DU migration triggering manner (for example, OAM triggering), so that the first donor node can learn of a reason why the relay node does not set up an F1 interface based on an indication of the first donor node.

Optionally, the first information may be carried in a class 1 RESPONSE message or a REJECT/FAILURE message of an F1 message of CU triggering, or may be carried in a separate class 2 message. The class 1 message requires a response from a peer end, and the class 2 message does not require a response from a peer end. For example, a class 1 message (for example, RESPONSE/REJECT/FAILURE) sent by the relay node to the first donor node is used to respond to another class 1 message (for example, REQUEST) sent by the first donor node to the relay node. If the relay node sends a class 2 message to the first donor node, the class 2 message does not need to be a response message of a specific message, and the class 2 message may be understood as a notification message.

Generally, the F1 interface setup outcome that is received by the first donor node and that is returned by the relay node does not carry the identifier of the target donor node, and the first donor node sends a UE handover indication to a specified donor node based on indication information in CU triggering. For example, the CU indicates the relay node to set up an F1 interface with the second donor node, and the first donor node sends a UE handover indication to the second donor node after F1 interface setup is completed.

In a possible implementation, when the first triggering condition is not met, for example, the relay node does not set up an F1 interface based on the second information (for example, the second information does not exist), or the second donor node is the same as the target donor node, the outcome of the first F1 interface that is received by the first donor node does not carry the identifier of the target donor node, and optionally may carry the DU migration triggering manner. This implementation can implicitly indicate, to the first donor node, that the target donor node is selected by the first donor node or is the same as that selected by the first donor node, so that signaling overheads are reduced while the first donor node can correctly determine the target donor node.

In a possible implementation, depending on whether the identifier of the target donor node is carried when the relay node sends the F1 interface setup outcome, the first donor node can infer the DU migration triggering manner, and/or infer whether the second donor node is different from the target donor node. Specifically, if the identifier of the target donor node is carried when the relay node sends the F1 interface setup outcome, the first donor node considers that DU migration is triggered by the OAM, and/or the second donor node is different from the target donor node; or if the identifier of the target donor node is not carried when the relay node sends the F1 interface setup outcome, the first donor node considers that DU migration is triggered by the first donor node, or the second donor node is the same as the target donor node.

In a possible scenario, the first donor node sends a UE handover indication to the second donor node, but the relay node does not set up an F1 interface with the second donor node, and the relay node actually sets up an F1 interface with the target donor node. In this case, a handover exception may occur, and consequently the relay node cannot normally complete DU migration.

In this implementation of this application, the first donor node receives the first information, where the first information indicates the outcome of setting up the first F1 interface between the relay node and the target donor node. Therefore, the first donor node can learn that the relay node sets up an F1 interface with the target donor node, and send a UE handover indication to the target donor node, thereby ensuring that the relay node successfully completes DU migration.

**In a possible implementation,** the outcome of the first F1 interface is that F1 interface setup between the relay node and the target donor node is completed. For beneficial effects of this implementation, refer to beneficial effects of a corresponding implementation in the first aspect. Details are not described herein again.

According to a **third aspect**, an implementation of this application provides a communication method. The method may be performed by a communication apparatus. The communication apparatus may be a device, or may be a chip (system) or a circuit used in the device. This is not limited in this application. The method is applied to a relay node, and includes:

The relay node sends fourth information to a network management system, where the fourth information includes an outcome of setting up a third F1 interface between the relay node and a target donor node.

According to the communication method provided in this implementation of this application, the relay node sends the fourth information to the network management system, so that the network management system can obtain a current correct connection relationship of the relay node (the outcome of setting up the third F1 interface between the relay node and the target donor node). This helps the network management system perform subsequent management and trigger next DU migration of the relay node, thereby ensuring that the relay node can obtain correct indication information in a subsequent DU migration process. In this way, the relay node normally complete DU migration.

For the relay node, a first donor node, a second donor node, the target donor node, and an OAM server in this implementation of this application, refer to descriptions corresponding to the first aspect or the second aspect. Details are not described herein again.

The fourth information in this implementation of this application includes the outcome of setting up the third F1 interface between the relay node and the target donor node. For example, the outcome may be that the relay node and the target donor node complete F1 interface setup, or may be that the relay node and the target donor node do not complete F1 interface setup. This is not limited in this implementation of this application. The fourth information may carry an identifier of the target donor node, for example, a gNB ID and/or an IP address, and/or carry an identifier of a target cell, for example, an NR cell global identifier NCGI.

**In a possible implementation,** the relay node sends the fourth information to the network management system when a second triggering condition is met.

The second triggering condition includes at least one of the following:
the relay node receives fifth information from a first donor node, where the fifth information indicates the relay node to set up the third F1 interface with the target donor node; or being based on sixth information provided by the network management system, where the sixth information indicates the relay node to set up a fourth F1 interface with a second donor node, and the second donor node is different from the target donor node; or the relay node receives seventh information from the target donor node, where the seventh information indicates that setup of the third F1 interface is completed.

According to the communication method provided in this implementation of this application, the relay node sends the fourth information to the network management system when the second triggering condition is met. Therefore, when CU triggering conflicts with OAM triggering, the network management system can obtain a correct connection relationship of the relay node by using the fourth information, thereby helping the network management system perform subsequent management of the relay node and trigger next DU migration of the relay node.

The second triggering condition in this implementation of this application includes but is not limited to the following: the relay node receives the fifth information from the first donor node, where the fifth information indicates the relay node to set up the third F1 interface with the target donor node; or being based on the sixth information provided by the network management system, where the sixth information indicates the relay node to set up the fourth F1 interface with the second donor node, and the second donor node is different from the target donor node; or the relay node receives the seventh information from the target donor node, where the seventh information indicates that setup of the third F1 interface is completed (complete).

The fifth information may be carried in an F1AP message. The fifth information indicates the relay node to set up the third F1 interface with the target donor node, and may indicate the relay node to send an F1 interface setup request message to the target donor node.

The sixth information may be a message pre-configured by the network management system on the relay node, and pre-configuration time may be, for example, before the relay node accesses a network, or after the relay node accesses a network. This is not limited in this implementation of this application. The pre-configured information can indicate the relay node to perform DU migration at a preset moment and indicate a donor node of DU migration. For example, the pre-configured information can indicate the relay node to start DU migration one hour after the relay node accesses the network, and indicate the relay node to migrate to a CU of the target donor node. Alternatively, the sixth information may be a message sent by the network management system to the relay node through remote control triggering. For example, the sixth message is remotely sent to the relay node by using a PDU session of an MT or through an IP network, to indicate the relay node to set up the second F1 interface with the second donor node.

The seventh information may be carried in an F1AP message, for example, F1 SETUP RESPONSE. The relay node may generate the seventh information after the relay node receives an F1 interface setup complete message (for example, F1 SETUP RESPONSE) returned by the target donor node.

It may be understood that the relay node generates the fourth information when the second triggering condition is met. In this case, the second triggering condition may be understood as a condition for triggering the relay node to generate the fourth information. Optionally, the relay node further sends the fourth information when the second triggering condition is met. In this case, the second triggering condition may be understood as a condition for triggering the relay node to generate and send the fourth information.

In an IAB network, DU migration of an IAB node supports two triggering manners: source CU triggering and OAM triggering. In the source CU triggering (which is referred to as "CU triggering" subsequently) manner, a source CU sends indication information that carries a target CU to a DU of the IAB node, and the DU completes a migration operation based on the indication information. The source CU is a CU connected to the DU before migration, and the target CU is a CU connected to the DU after migration. In the OAM triggering manner, the OAM server can directly perform pre-configuration on the IAB node or remotely trigger the IAB node to perform DU migration. Apparently, both CU triggering and OAM triggering can indicate the relay node to perform DU migration. If CU triggering and OAM triggering occur at the same time, the relay node may not normally complete DU migration, or may migrate to an incorrect donor node. In addition, when the two triggering manners conflict, at least one triggering indication (for example, OAM triggering) is not completed, which may cause a control failure, an information transmission error, or another exception.

However, in this implementation of this application, a first triggering condition for generating (or generating and sending) an outcome of setting up an F1 interface between the relay node and the target donor node is clearly provided, and the foregoing F1 interface setup outcome can be used to enable the OAM to obtain a latest connection status of the relay node. When the relay node meets the first triggering condition, the relay node can generate (or generate and send) first information in time, so that the OAM updates a connection status of the relay node in time, thereby helping the OAM perform subsequent management of the relay node and trigger DU migration of the relay node again. Apparently, in this case, indication information of CU triggering prevails, and after the relay node sets up an F1 interface connection with a new donor node (the target donor node), the first donor node may send a UE handover indication to the new donor node. The first donor node learns that the relay node completes setup of a new F1 interface. For example, the relay node may send an F1 interface setup complete message to the first donor node. For example, the relay node sends the F1 interface setup complete message to the first donor node by using an F1AP message. Specifically, this is not limited in this implementation of this application.

**In a possible implementation,** the fifth information is further used to trigger release of the fourth F1 interface.

In this implementation of this application, the fifth information indicates the relay node to set up the third F1 interface with the target donor node, and the fourth F1 interface is an F1 interface between the relay node and the second donor node. If the relay node has set up the fourth F1 interface with the second donor node before receiving the fifth information, the fifth information is used to trigger release of the fourth F1 interface. This can enable the relay node to set up the third F1 interface with the target donor node. In addition, this can further save resources of the second donor node, and help the second donor node set up an F1 interface with another relay node.

Optionally, being based on the fifth information provided by the network management system is equivalent to OAM triggering. OAM triggering may occur after CU triggering and before the relay node receives a setup complete message of the fourth F1 interface. For example, OAM triggering may occur after the relay node sends an F1 interface setup message to the second donor node and before the relay node receives an F1 SETUP RESPONSE message from the second donor node.

**In a possible implementation,** the fourth information further includes an identifier of the target donor node and/or a DU migration triggering manner.

In this implementation of this application, the identifier of the target donor node may be, for example, a gNB ID and/or an IP address, and the DU migration triggering manner may be, for example, CU triggering. The fourth information carries the identifier of the target donor node, so that the OAM can learn that the relay node sets up an F1 interface with the target donor node, and adjust a connection relationship of the relay node, thereby facilitating subsequent management and next DU migration of the relay node. The fourth information carries the DU migration triggering manner, so that the OAM can learn whose indication the relay node followed to set up an F1 interface. In a possible implementation, the identifier of the target donor node that is carried in the fourth information may alternatively be represented by an identifier (for example, an NR cell global identifier NCGI) of a target cell, and the OAM may obtain the identifier of the target donor node based on the identifier of the target cell.

**In a possible implementation,** that the fourth information further includes the identifier of the target donor node and/or the DU migration triggering manner includes:

When the second triggering condition includes: the relay node receives the fifth information from the first donor node and/or being based on the sixth information provided by the network management system, the fourth information further includes the identifier of the target donor node and/or the DU migration triggering manner.

In this implementation of this application, that the relay node receives the fifth information from the first donor node is equivalent to that the first donor node indicates the relay node to set up an F1 interface with the target donor node (CU triggering). In this implementation of this application, when a triggering conflict occurs, CU triggering prevails. Therefore, when a triggering conflict occurs and indication information (the fifth information) of CU triggering is received, the fourth information is sent to the OAM, so that the OAM can update the connection relationship of the IAB node in time, thereby facilitating subsequent management. A case of being based on the sixth information provided by the network management system is equivalent to that a triggering conflict occurs, and an indication of CU triggering is different from that of OAM triggering (for example, the target donor node is different from the second donor node). In this case, the fourth information is sent to the OAM, so that the OAM can also update the connection relationship of the IAB node in time, thereby facilitating subsequent management.

According to a **fourth aspect**, an implementation of this application provides a communication method. The method may be performed by a communication apparatus. The communication apparatus may be a device, or may be a chip (system) or a circuit used in the device. This is not limited in implementations of this application. The method is applied to a network management system, and includes:

The network management system receives fourth information from a relay node, where the fourth information includes an outcome of setting up a third F1 interface between the relay node and a target donor node.

For descriptions of the relay node, a first donor node, a second donor node, the target donor node, and the OAM server in this implementation of this application, refer to related descriptions of the first aspect or the second aspect. Details are not described herein again.

The fourth information in this implementation of this application includes the outcome of setting up the third F1 interface between the relay node and the target donor node. For example, the outcome may be that the relay node and the target donor node complete F1 interface setup, or may be that the relay node and the target donor node do not complete F1 interface setup. This is not limited in this implementation of this application. The fourth information may carry an identifier of the target donor node, for example, a gNB ID and/or an IP address, or carry an identifier of a target cell, for example, an NR cell global identifier NCGI.

Generally, the network management system does not receive an F1 interface setup outcome returned by the relay node. After sending indication information, the network management system considers by default that the relay node performs DU migration based on the indication information, and the network management system adjusts a connection relationship of the relay node based on indication information of OAM triggering. For example, if the OAM indicates the relay node to set up an F1 interface with the second donor node, the OAM adjusts the connection relationship of the relay node to that the relay node sets up the F1 interface with the second donor node. However, when CU triggering conflicts with OAM triggering, the relay node may not set up an F1 interface based on the indication information of OAM triggering, causing an error in a connection relationship recorded by the OAM.

In a possible scenario, the OAM indicates the relay node to set up an F1 interface with the second donor node, but the relay node actually sets up an F1 interface with the target donor node based on an indication of CU triggering. In this case, the OAM may still consider that the relay node sets up the F1 interface with the second donor node, and perform a subsequent management operation, which may cause a management exception or the like because the OAM records an incorrect connection relationship of the relay node.

In this implementation of this application, the network management system receives the fourth information, where the fourth information indicates an outcome of setting up a first F1 interface between the relay node and the target donor node, so that the OAM can learn that the relay node sets up the F1 interface with the target donor node, and adjust the connection relationship of the relay node, thereby facilitating subsequent management and next DU migration of the relay node.

**In a possible implementation,** the fourth information further includes an identifier of the target donor node and/or a DU migration triggering manner. For beneficial effects of this implementation, refer to beneficial effects of a corresponding implementation in the third aspect. Details are not described herein again.

**In a possible implementation,** that the fourth information further includes the identifier of the target donor node and/or the DU migration triggering manner includes:

When the second triggering condition includes: the relay node receives the fifth information from the first donor node and/or being based on the sixth information provided by the network management system, the fourth information further includes the identifier of the target donor node and/or the DU migration triggering manner. For beneficial effects of this implementation, refer to beneficial effects of a corresponding implementation in the third aspect. Details are not described herein again.

According to a **fifth aspect**, an implementation of this application provides a communication method. The method may be performed by a communication apparatus. The communication apparatus may be a device, or may be a chip (system) or a circuit used in the device. This is not limited in implementations of this application. The method is applied to a relay node, and includes:

The relay node receives eighth information from a first donor node, and sends ninth information to the first donor node, where the eighth information indicates the relay node to perform DU migration, and the ninth information indicates that the relay node rejects the DU migration.

For the relay node, the first donor node, a second donor node, a target donor node, and an OAM server in this implementation of this application, refer to descriptions corresponding to the first aspect or the second aspect. Details are not described herein again.

According to the communication method provided in this embodiment of this application, when receiving indication information (the eighth information) of CU triggering, the relay node sends DU migration reject indication information to the first donor node. Because the relay node does not perform an action indicated by CU triggering, CU triggering may not conflict with OAM triggering, thereby avoiding an exception that may be caused by a triggering conflict, and ensuring that the relay node can successfully complete DU migration.

Optionally, in this implementation of this application, the eighth information indicates the relay node to perform DU migration, and may include an identifier of a donor node after migration, for example, a gNB ID and/or an IP address; and the ninth information indicates that the relay node rejects DU migration indicated by CU triggering, and is used to enable the first donor node to learn that the relay node does not perform DU migration based on an indication of the first donor node. The eighth information and the ninth information each may be carried in an F1AP message.

In an IAB network, DU migration of an IAB node supports two triggering manners: CU triggering and OAM triggering. In the CU triggering manner, a source CU sends indication information that carries a target CU to a DU of the IAB node, and the DU completes a migration operation based on the indication information. The source CU is a CU connected to the DU before migration, and the target CU is a CU connected to the DU after migration. In the OAM triggering manner, the OAM server can directly perform pre-configuration on the IAB node or remotely trigger the IAB node to perform DU migration. Apparently, both CU triggering and OAM triggering can indicate the relay node to perform DU migration. If CU triggering and OAM triggering occur at the same time, the relay node may not normally complete DU migration, or may migrate to an incorrect donor node. In addition, when the two triggering manners conflict, at least one triggering indication (for example, OAM triggering) is not completed, which may cause a control failure, an information transmission error, or another exception.

However, in this implementation of this application, when receiving the indication information of CU triggering, the relay node directly provides migration reject indication information, so that the relay node can perform a DU migration operation only based on indication information of OAM triggering, thereby avoiding a conflict between DU triggering and OAM triggering.

**In a possible implementation,** the ninth information includes a reason why the relay node rejects the DU migration.

In this implementation of this application, the DU migration reject reason may be, for example, that the relay node accepts only OAM triggering, or the relay node does not support CU triggering. This is not limited in this embodiment of this application. By providing the DU migration reject reason, the first relay node can also learn of and record a specific reason for rejecting DU migration this time. Therefore, the first donor node does not indicate the relay node to perform DU migration again, and the first donor node can further more clearly learn of a situation of the relay node, that is, the relay node rejects DU migration because the relay node does not support CU triggering or supports only OAM triggering, rather than the relay node rejects DU migration due to a reason, for example, because the relay node is abnormal, or the relay node temporarily cannot perform DU migration.

Optionally, the ninth information may be carried in a class 1 RESPONSE message or a REJECT/FAILURE message of an F1AP message of CU triggering, or may be carried in a separate class 2 message. Procedures in the F1AP message are classified into two types: a class 1 and a class 2. The class 1 procedure is a case requiring feedback in a same procedure, for example, F1 SETUP REQUEST--F1 SETUP RESPONSE/F1 SETUP FAILURE, GNB-DU CONFIGURATION UPDATE--GNB-DU CONFIGURATION UPDATE ACK/GNB-DU CONFIGURATION UPDATE FAILURE. The class 2 procedure is a procedure in which there is only one message in the procedure and no F1AP message needs to be fed back, for example, UL RRC MESSAGE TRANSFER or DL RRC MESSAGE TRANSFER.

In a possible implementation, a triggering condition for sending the ninth information is receiving the eighth information. After receiving the eighth information, the IAB node determines not to accept source CU triggering, and immediately returns the ninth information.

According to a **sixth aspect**, an implementation of this application provides a communication method. The method may be performed by a communication apparatus. The communication apparatus may be a device, or may be a chip (system), a circuit, or the like used in the device. This is not limited in this embodiment of this application. The method is applied to a first donor node, and includes:

The first donor node sends eighth information to a relay node, and receives ninth information from the relay node, where the eighth information indicates the relay node to perform DU migration, and the ninth information indicates that the relay node rejects the DU migration.

For the relay node, the first donor node, a second donor node, a target donor node, and an OAM server in this implementation of this application, refer to descriptions corresponding to the first aspect or the second aspect. Details are not described herein again.

According to the communication method provided in this implementation of this application, the first donor node sends indication information (the eighth information) of CU triggering to the relay node, and the first donor node receives CU triggering reject indication information (the ninth information). Because the relay node rejects an action indicated by CU triggering, CU triggering may not conflict with OAM triggering, thereby avoiding an exception that may be caused by a triggering conflict, and ensuring that the relay node can successfully complete DU migration.

In this implementation of this application, the eighth information indicates the relay node to perform DU migration, and may include an identifier of a donor node after migration, for example, a gNB ID and/or an IP address; and the ninth information indicates that the relay node rejects DU migration indicated by CU triggering, and is used to enable the first donor node to learn that the relay node does not perform DU migration based on an indication of the first donor node. The eighth information and the ninth information each may be carried in an F1AP message.

In an IAB network, DU migration of an IAB node supports two triggering manners: CU triggering and OAM triggering. In the CU triggering manner, a source CU sends indication information that carries a target CU to a DU of the IAB node, and the DU completes a migration operation based on the indication information. The source CU is a CU connected to the DU before migration, and the target CU is a CU connected to the DU after migration. In the OAM triggering manner, the OAM server can directly perform pre-configuration on the IAB node or remotely trigger the IAB node to perform DU migration. Apparently, both CU triggering and OAM triggering can indicate the relay node to perform DU migration. If CU triggering and OAM triggering occur at the same time, the relay node may not normally complete DU migration, or may migrate to an incorrect donor node. In addition, when the two triggering manners conflict, at least one triggering indication (for example, OAM triggering) is not completed, which may cause a control failure, an information transmission error, or another exception.

However, in this implementation of this application, when receiving the indication information of CU triggering, the relay node directly provides migration reject indication information, so that the relay node can perform a DU migration operation only based on indication information of OAM triggering, thereby avoiding a conflict between DU triggering and OAM triggering.

**In a possible implementation,** the eighth information includes a reason why the relay node rejects the DU migration.

For beneficial effects of this implementation, refer to beneficial effects of a corresponding implementation in the fifth aspect. Details are not described herein again.

According to a **seventh aspect**, an implementation of this application provides a communication method. The method may be performed by a communication apparatus. The communication apparatus may be a device, or may be a chip (system), a circuit, or the like used in the device. This is not limited in this embodiment of this application. The method is applied to a relay node, and includes:

The relay node receives tenth information from a network management system, where the tenth information indicates the relay node to perform DU migration.

The DU ignores the tenth information.

According to the communication method provided in this implementation of this application, when receiving indication information (the tenth information) of OAM triggering, the relay node ignores the indication information of OAM triggering (equivalent to not performing OAM triggering). In this way, the relay node performs DU migration only based on indication information of CU triggering, thereby avoiding a conflict when both CU triggering and OAM triggering occur, and ensuring that the relay node can normally complete DU migration.

For descriptions of the relay node, a first donor node, a second donor node, a target donor node, and the OAM in this implementation of this application, refer to related descriptions of the first aspect or the second aspect. Details are not described herein again.

The tenth information may be information pre-configured by the network management system on the relay node, or may be information sent by the network management system to the relay node through remote control. For descriptions of pre-configuration and remote control, refer to the foregoing descriptions. Details are not described herein again. The tenth information may include an identifier of a donor node after the relay node performs migration, for example, a gNB ID and/or an IP address. The tenth information may further include information such as time when the relay node performs DU migration.

That the DU ignores (ignore) the tenth information may be that the relay node refuses to receive pre-configured information of the network management system; or may be that the relay node deletes pre-configured information when the network management system performs pre-configuration on the relay node; or may be that when pre-configured information indicates that the relay node needs to perform migration, the relay node ignores the indication and does not perform DU migration based on the indication of the pre-configured information; or may be that the relay node ignores DU migration triggered by the network management system through remote control. In a possible implementation, a triggering condition for ignoring the tenth information is receiving the tenth information. After receiving the tenth information, the relay node directly ignores the tenth information even if no CU configures information about another target donor node.

In an IAB network, DU migration of an IAB node supports two triggering manners: source CU triggering and OAM triggering. In the source CU triggering (which is referred to as "CU triggering" subsequently) manner, a source CU sends indication information that carries a target CU to a DU of the IAB node, and the DU completes a migration operation based on the indication information. The source CU is a CU connected to the DU before migration, and the target CU is a CU connected to the DU after migration. In the OAM triggering manner, the OAM server can directly perform pre-configuration on the IAB node or remotely trigger the IAB node to perform DU migration. Apparently, both CU triggering and OAM triggering can indicate the relay node to perform DU migration. If CU triggering and OAM triggering occur at the same time, the relay node may not normally complete DU migration, or may migrate to an incorrect donor node. In addition, when the two triggering manners conflict, at least one triggering indication (for example, CU triggering) is not completed, which may cause a control failure, an information transmission error, or another exception.

However, in this implementation of this application, when the indication information of OAM triggering indicates the relay node to perform DU migration, the relay node ignores the indication information of OAM triggering, so that the relay node executes only the indication information of CU triggering, thereby avoiding a conflict between CU triggering and OAM triggering, and ensuring that the relay node normally completes DU migration.

**In a possible implementation,** the relay node sends eleventh information to the network management system, where the eleventh information indicates that DU migration triggered by the network management system is rejected or indicates the network management system not to trigger DU migration of the relay node.

In this implementation of this application, after receiving the indication information of OAM triggering, the relay node ignores the indication information of OAM triggering, and does not perform DU migration indicated by OAM triggering. In addition, the relay node further sends the eleventh information to the network management system (the OAM server), to indicate that OAM triggering is rejected or indicate the OAM server not to trigger DU migration of the relay node. In this way, the OAM server learns that DU migration indicated by the OAM server is not performed by the relay node, so that the OAM server does not adjust a connection relationship of the relay node based on the indication information of OAM triggering. The OAM server is indicated not to trigger DU migration, so that some control resources can be saved, and a conflict between OAM triggering and CU triggering is avoided again.

**Optionally,** the relay node sends indication information to the OAM server, where the indication information indicates the relay node to set up an F1 interface with the target donor node.

When the relay node ignores the indication information of OAM triggering, if the relay node performs DU migration based on the indication information of CU triggering, and notifies the OAM server of a DU migration status of the relay node, the OAM server can update a connection relationship of the relay node in time, thereby helping the OAM server perform subsequent management of the relay node.

In a possible implementation, a triggering condition for sending the eleventh information is receiving the tenth information. After receiving the tenth information, even if no source CU configures information about another target donor node, the relay node determines not to accept OAM triggering, and immediately returns the eleventh information.

According to an **eighth aspect**, an implementation of this application provides a communication method. The method may be performed by a communication apparatus. The communication apparatus may be a device, or may be a chip (system), a circuit, or the like used in the device. This is not limited in this embodiment of this application. The method is applied to a network management system, and includes:

The network management system sends tenth information to a relay node, where the tenth information indicates the relay node to perform DU migration.

The network management system receives eleventh information from the relay node, where the eleventh information indicates that DU migration triggered by the network management system is rejected or indicates the network management system not to trigger DU migration of the relay node.

According to the communication method provided in this implementation of this application, after sending indication information (the tenth information) of OAM triggering to the relay node, the network management system receives the eleventh information from the relay node, where the information indicates that the relay node rejects the indication information of OAM triggering, or the information indicates the network management system not to trigger DU migration of the relay node. In this way, the relay node performs DU migration only based on indication information of CU triggering, thereby avoiding a conflict when both CU triggering and OAM triggering occur, and ensuring that the relay node can normally complete DU migration.

For descriptions of the relay node, a first donor node, a second donor node, a target donor node, and the OAM in this implementation of this application, refer to related descriptions of the first aspect or the second aspect. Details are not described herein again.

The tenth information may be information pre-configured by the network management system on the relay node, or may be information sent by the network management system to the relay node through remote control. For descriptions of pre-configuration and remote control, refer to the foregoing descriptions. Details are not described herein again. The tenth information may include an identifier of a donor node after the relay node performs migration, for example, a gNB ID and/or an IP address. The tenth information may further include information such as time when the relay node performs DU migration.

For example, the eleventh information may be delivered to the relay node by using a PDU session between an IAB-MT and a core network.

In an IAB network, DU migration of an IAB node supports two triggering manners: source CU triggering and OAM triggering. In the source CU triggering (which is referred to as "CU triggering" subsequently) manner, a source CU sends indication information that carries a target CU to a DU of the IAB node, and the DU completes a migration operation based on the indication information. The source CU is a CU connected to the DU before migration, and the target CU is a CU connected to the DU after migration. In the OAM triggering manner, the OAM server can directly perform pre-configuration on the IAB node or remotely trigger the IAB node to perform DU migration. Apparently, both CU triggering and OAM triggering can indicate the relay node to perform DU migration. If CU triggering and OAM triggering occur at the same time, the relay node may not normally complete DU migration, or may migrate to an incorrect donor node. In addition, when the two triggering manners conflict, at least one triggering indication (for example, CU triggering) is not completed, which may cause a control failure, an information transmission error, or another exception.

However, in this implementation of this application, the network management system (the OAM server) receives the eleventh information sent by the relay node, to indicate that OAM triggering is rejected or indicate the OAM server not to trigger DU migration of the relay node. In this way, the OAM server learns that DU migration indicated by the OAM server is not performed by the relay node, so that the OAM server does not adjust a connection relationship of the relay node based on the indication information of OAM triggering. The OAM server is indicated not to trigger DU migration, so that some control resources can be saved, and a conflict between OAM triggering and CU triggering is avoided again.

**In a possible implementation,** the relay node sends the eleventh information to the network management system, where the eleventh information indicates that DU migration triggered by the network management system is rejected or indicates the network management system not to trigger DU migration of the relay node.

In this implementation of this application, after receiving the indication information of OAM triggering, the relay node ignores the indication information of OAM triggering, and does not perform DU migration indicated by OAM triggering. In addition, the relay node further sends the eleventh information to the network management system (the OAM server), to indicate that OAM triggering is rejected or indicate the OAM server not to trigger DU migration of the relay node. In this way, the OAM server learns that DU migration indicated by the OAM server is not performed by the relay node, so that the OAM server does not adjust a connection relationship of the relay node based on the indication information of OAM triggering. The OAM server is indicated not to trigger DU migration, so that some control resources can be saved, and a conflict between OAM triggering and CU triggering is avoided again.

**Optionally,** the relay node sends indication information to the OAM server, where the indication information indicates the relay node to set up an F1 interface with the target donor node.

When the relay node ignores the indication information of OAM triggering, if the relay node performs DU migration based on the indication information of CU triggering, and notifies the OAM server of a DU migration status of the relay node, the OAM server can update a connection relationship of the relay node in time, thereby helping the OAM server perform subsequent management of the relay node.

According to a **ninth aspect**, an implementation of this application provides a communication method. The method may be performed by a communication apparatus. The communication apparatus may be a device, or may be a chip (system) or a circuit used in the device. This is not limited in this application. The method is applied to a relay node, and includes:

The relay node sends twelfth information to a first donor node, where
the twelfth information indicates a DU migration triggering manner supported by the relay node; and/or the relay node receives thirteenth information from the first donor node, where the thirteenth information indicates the DU migration triggering manner supported by the relay node; and the triggering manner includes CU triggering and/or network management system triggering.

According to the communication method provided in this implementation of this application, the relay node sends the twelfth information to the first donor node, where the twelfth information indicates the DU migration triggering manner supported by the relay node; and/or the relay node receives the thirteenth information from the first donor node when a third condition is met, where the thirteenth information indicates the DU migration triggering manner supported by the relay node. In this way, the relay node and the first donor node can learn of the DU migration triggering manner supported by the relay node, thereby reducing a possibility of a triggering conflict.

For descriptions of the relay node, the first donor node, a second donor node, a target donor node, and an OAM server in this embodiment of this application, refer to related descriptions of the first aspect or the second aspect. Details are not described herein again.

Both the twelfth information and the thirteenth information in this embodiment of this application indicate the DU migration triggering manner supported by the relay node. For example, only CU triggering is supported, only OAM triggering is supported, or both CU triggering and OAM triggering are supported. When the relay node supports both CU triggering and OAM triggering, priorities of CU triggering and OAM triggering may be further set, for example, OAM triggering prevails (equivalent to the first aspect and the second aspect) or CU triggering prevails (equivalent to the third aspect and the fourth aspect).

The twelfth information may be carried in a class 1 procedure of F1AP, for example, an F1 SETUP REQUEST message or a GNB-DU CONFIGURATION UPDATE message; or may be carried in a class 2 procedure of F1AP. A specific message to be used is not limited in this embodiment of this application.

The thirteenth information may be carried in a class 1 procedure of F1AP, for example, an F1 SETUP RESPONSE message or a GNB-CU CONFIGURATION UPDATE message; or may be carried in a class 2 procedure of F1AP. A specific message to be used is not limited in this embodiment of this application.

**In a possible implementation,** that the relay node sends the twelfth information to the first donor node includes:

The relay node sends the twelfth information to the first donor node when a third triggering condition is met.

The third triggering condition includes at least one of the following:
the relay node completes network access; or the relay node completes DU migration.

The third triggering condition in this embodiment of this application includes but is not limited to the following: the relay node completes network access; or the relay node completes DU migration. It may be understood that, that the relay node completes network access generally means that a parent node of the relay node is already in a network, and the relay node and a donor node in the network complete F1 interface setup; or the relay node may serve a UE or a next-hop MT. That the relay node completes DU migration may mean that the relay node sets up a new F1 interface with a new donor node, a UE of the relay node has been handed over to the new DU, and an old F1 interface is released. For example, the relay node maintains an F1 interface connection with the first donor node before DU migration, and has an F1 interface connection with the target donor node after DU migration. The relay node creates two logical DUs in a DU migration process: DU1 and DU2. Before DU migration, the UE is in a cell corresponding to DU1. After DU migration, the UE is in a cell corresponding to DU2. Before DU migration, there is an F1 interface between DU1 and the first donor node. After DU migration, the F1 interface between DU1 and the first donor node is released, and DU2 and the target donor node complete F1 interface setup.

It may be understood that the relay node generates the twelfth information when the third triggering condition is met. In this case, the third triggering condition may be understood as a condition for triggering the relay node to generate the twelfth information. Optionally, the relay node further sends the twelfth information when the third triggering condition is met. In this case, the third triggering condition may be understood as a condition for triggering the relay node to generate and send the twelfth information.

In this implementation of this application, when the relay node completes network access or the relay node completes DU migration, the relay node sends the twelfth information to the first donor node, to indicate the DU migration triggering manner supported by the relay node, so that the relay node and the first donor node can learn of the DU migration triggering manner supported by the relay node, thereby reducing a possibility of a triggering conflict when the relay node performs DU migration again.

According to a **tenth aspect**, an implementation of this application provides a communication method. The method may be performed by a communication apparatus. The communication apparatus may be a device, or may be a chip (system) or a circuit used in the device. This is not limited in this application. The method is applied to a first donor node, and includes:

The first donor node sends thirteenth information to a relay node, where
the thirteenth information indicates a DU migration triggering manner supported by the relay node; and/or the first donor node receives twelfth information from the relay node, where the twelfth information indicates the DU migration triggering manner supported by the relay node; and the triggering manner includes CU triggering and/or network management system triggering.

For both the twelfth information and the thirteenth information in this implementation of this application, refer to related descriptions of the ninth aspect. Details are not described herein again.

For the relay node, the first donor node, a second donor node, a target donor node, and an OAM server in this implementation of this application, refer to related descriptions of the first aspect or the second aspect. Details are not described herein again.

In this implementation of this application, the foregoing triggering manner includes CU triggering and/or network management system triggering. If the foregoing triggering manner includes only CU triggering or only network management system triggering, the relay node can avoid a triggering conflict, thereby ensuring that the relay node normally completes DU migration. If the foregoing triggering manner includes both CU triggering and OAM triggering, a possible conflict may be processed by using the method provided in the first aspect, the second aspect, the third aspect, or the fourth aspect, thereby ensuring that the relay node normally completes DU migration.

For beneficial effects of this embodiment of this application, refer to beneficial effects of a corresponding implementation of the ninth aspect. Details are not described herein again.

**In a possible implementation,** that the first donor node sends the thirteenth information to the relay node includes:

The first donor node sends the thirteenth information to the relay node when a third triggering condition is met.

The third triggering condition includes at least one of the following:
the relay node completes network access; or the relay node completes DU migration.

For the third triggering condition in this implementation of this application, refer to related descriptions of the ninth aspect. Details are not described herein again.

In this implementation of this application, when the relay node completes network access or the relay node completes DU migration, the first donor node sends the thirteenth information to the relay master node, to indicate the DU migration triggering manner supported by the relay node, so that the relay node and the first donor node can learn of the DU migration triggering manner supported by the relay node, thereby reducing a possibility of a triggering conflict when the relay node performs DU migration again.

According to an **eleventh aspect**, an implementation of this application provides a communication method. The method may be performed by a communication apparatus. The communication apparatus may be a device, or may be a chip (system) or a circuit used in the device. This is not limited in this application. The method is applied to a first donor node, and includes:

The first donor node sends fourteenth information to a second donor node when a fourth triggering condition is met, where the fourteenth information indicates to cancel F1 interface setup between the second donor node and a relay node.

The fourth triggering condition includes:
receiving fifteenth information from the relay node, where the fifteenth information includes that the relay node and a target donor node complete F1 interface setup, and the target donor node is different from the second donor node.

According to the communication method provided in this implementation of this application, the first donor node sends the fourteenth information to the second donor node when the fourth triggering condition is met, where the fourteenth information indicates to cancel F1 interface setup between the second donor node and the relay node. This avoids an exception caused when the second donor node attempts to set up an F1 interface with the relay node again. In addition, the second donor node can further use a valid resource to set up an F1 interface with another relay node.

For the relay node, the first donor node, the second donor node, the target donor node, and an OAM server in this implementation of this application, refer to related descriptions of the first aspect or the second aspect. Details are not described herein again.

The fourth triggering condition in this embodiment of this application includes but is not limited to the following: the first donor node receives the fifteenth information from the relay node, where the fifteenth information indicates that the relay node and the target donor node complete F1 interface setup, and the target donor node is different from the second donor node. The fifteenth information may be carried in an F1AP message. The message may carry an identifier of the target donor node, for example, a gNB ID and/or an IP address.

The fourteenth information in this embodiment of this application may be information sent by the first donor node to the second donor node through an Xn interface. The message may carry the identifier of the target donor node, for example, the gNB ID and/or the IP address.

It may be understood that the first donor node generates the fourteenth information when the fourth triggering condition is met. In this case, the fourth triggering condition may be understood as a condition for triggering the first donor node to generate the fourteenth information. Optionally, the relay node further sends the fourteenth information when the fourth triggering condition is met. In this case, the fourth triggering condition may be understood as a condition for triggering the relay node to generate and send the fourteenth information.

According to a **twelfth aspect**, an implementation of this application provides a communication method. The method may be performed by a communication apparatus. The communication apparatus may be a device, or may be a chip (system) or a circuit used in the device. This is not limited in this application. The method is applied to a second donor node, and includes:

The second donor node receives fourteenth information from a first donor node, where the fourteenth information indicates to cancel F1 interface setup between the second donor node and a relay node.

According to the communication method provided in this implementation of this application, the second donor node receives the fourteenth information from the first donor node, where the fourteenth information indicates to cancel F1 interface setup between the second donor node and the relay node. This can avoid an exception caused when the second donor node attempts to set up an F1 interface with the relay node again. In addition, the second donor node can further use a valid resource to set up an F1 interface with another relay node.

For the relay node, the first donor node, the second donor node, a target donor node, and an OAM server in this implementation of this application, refer to related descriptions of the first aspect or the second aspect. Details are not described herein again.

The fourteenth information in this embodiment of this application may be information received by the second donor node from the first donor node through an Xn interface. The message may carry an identifier of the target donor node, for example, a gNB ID and/or an IP address.

According to a thirteenth aspect, an embodiment of this application provides a communication apparatus. The apparatus includes units configured to perform the method according to any implementation of the first aspect.

In a possible design, the apparatus includes:
a processing unit, configured to generate first information when a first triggering condition is met, where the first information includes an outcome of setting up a first F1 interface between the relay node and a target donor node and an identifier of the target donor node; or the first information includes an outcome of setting up a first F1 interface between the relay node and a target donor node, an identifier of the target donor node, and a DU migration triggering manner of the relay node.

The first triggering condition includes at least one of the following:
being based on second information provided by a network management system, where the second information indicates the relay node to set up the first F1 interface with the target donor node; or the relay node receives third information from a first donor node, where the third information indicates the relay node to set up a second F1 interface with a second donor node, and the second donor node is different from the target donor node.

In a possible implementation, the apparatus further includes:
a communication unit, configured to send the first information.

For the method performed by the processing unit and the communication unit, refer to the method corresponding to the first aspect. Details are not described herein again.

For beneficial effects brought by the thirteenth aspect and any possible implementation, refer to descriptions of beneficial effects corresponding to the first aspect and corresponding implementations. Details are not described herein again.

According to a fourteenth aspect, an embodiment of this application provides a communication apparatus. The apparatus includes units configured to perform the method according to any implementation of the second aspect.

In a possible design, the apparatus includes:
a communication unit.

The first donor node receives first information from a relay node when a first triggering condition is met, where the first information includes an outcome of setting up a first F1 interface between the relay node and a target donor node and an identifier of the target donor node; or the first information includes an outcome of setting up a first F1 interface between the relay node and a target donor node, an identifier of the target donor node, and a DU migration triggering manner of the relay node.

The first triggering condition includes at least one of the following:
being based on second information provided by a network management system, where the second information indicates the relay node to set up the first F1 interface with the target donor node; or the relay node receives third information from the first donor node, where the third information indicates the relay node to set up a second F1 interface with a second donor node, and the second donor node is different from the target donor node.

In a possible implementation, the apparatus further includes:
a processing unit, configured to process the first information.

For the method performed by the communication unit and the processing unit, refer to the method corresponding to the second aspect. Details are not described herein again.

For beneficial effects brought by the fourteenth aspect and any possible implementation, refer to descriptions of beneficial effects corresponding to the second aspect and corresponding implementations. Details are not described herein again.

According to a fifteenth aspect, an embodiment of this application provides a communication apparatus. The apparatus includes units configured to perform the method according to any implementation of the third aspect.

In a possible design, the apparatus includes:
a processing unit, configured to generate fourth information, where the fourth information includes an outcome of setting up a third F1 interface between the relay node and a target donor node.

In a possible implementation, the apparatus further includes:
a communication unit, configured to send the fourth information to a network management system.

In a possible implementation, the processing unit is specifically configured to generate the fourth information when a second triggering condition is met.

The second triggering condition includes at least one of the following:
the relay node receives fifth information from a first donor node, where the fifth information indicates the relay node to set up the third F1 interface with the target donor node; or being based on sixth information provided by the network management system, where the sixth information indicates the relay node to set up a fourth F1 interface with a second donor node, and the second donor node is different from the target donor node; or the relay node receives seventh information from the target donor node, where the seventh information indicates that setup of the third F1 interface is completed.

In a possible implementation, the communication unit is specifically configured to send the fourth information to the network management system when the second triggering condition is met.

For the method performed by the processing unit and the communication unit, refer to the method corresponding to the third aspect. Details are not described herein again.

For beneficial effects brought by the fifteenth aspect and any possible implementation, refer to descriptions of beneficial effects corresponding to the third aspect and corresponding implementations. Details are not described herein again.

According to a sixteenth aspect, an embodiment of this application provides a communication apparatus. The apparatus includes units configured to perform the method according to any implementation of the fourth aspect.

In a possible design, the apparatus includes:
a communication unit, configured to receive fourth information from a relay node, where the fourth information includes an outcome of setting up a third F1 interface between the relay node and a target donor node.

In a possible implementation, the apparatus further includes:
a processing unit, configured to process the fourth information.

For the method performed by the processing unit and the communication unit, refer to the method corresponding to the fourth aspect. Details are not described herein again.

For beneficial effects brought by the sixteenth aspect and any possible implementation, refer to descriptions of beneficial effects corresponding to the fourth aspect and corresponding implementations. Details are not described herein again.

According to a seventeenth aspect, an embodiment of this application provides a communication apparatus. The apparatus includes units configured to perform the method according to any implementation of the fifth aspect.

In a possible design, the apparatus includes:
a communication unit, configured to receive eighth information from a first donor node, where the eighth information indicates the relay node to perform DU migration.

In a possible implementation, the apparatus further includes:
a processing unit, configured to generate ninth information, where the ninth information indicates that the relay node rejects the DU migration.

In a possible implementation, the communication unit is further configured to send the ninth information to the first donor node.

For the method performed by the processing unit and the communication unit, refer to the method corresponding to the fifth aspect. Details are not described herein again.

For beneficial effects brought by the seventeenth aspect and any possible implementation, refer to descriptions of beneficial effects corresponding to the fifth aspect and corresponding implementations. Details are not described herein again.

According to an eighteenth aspect, an embodiment of this application provides a communication apparatus. The apparatus includes units configured to perform the method according to any implementation of the sixth aspect.

In a possible design, the apparatus includes:
a processing unit, configured to generate eighth information, where the eighth information indicates a relay node to perform DU migration.

In a possible implementation, the apparatus further includes:
a communication unit, configured to send the eighth information to the relay node.

In a possible implementation, the communication unit is further configured to receive ninth information from the relay node, where the ninth information indicates that the relay node rejects the DU migration.

For the method performed by the processing unit and the communication unit, refer to the method corresponding to the sixth aspect. Details are not described herein again.

For beneficial effects brought by the eighteenth aspect and any possible implementation, refer to descriptions of beneficial effects corresponding to the sixth aspect and corresponding implementations. Details are not described herein again.

According to a nineteenth aspect, an embodiment of this application provides a communication apparatus. The apparatus includes units configured to perform the method according to any implementation of the seventh aspect.

In a possible design, the apparatus includes:
a communication unit, configured to receive tenth information from a network management system, where the tenth information indicates the relay node to perform DU migration.

In a possible implementation, the apparatus further includes:
a processing unit, configured to process the tenth information, for example, ignore the tenth information.

For the method performed by the processing unit and the communication unit, refer to the method corresponding to the seventh aspect. Details are not described herein again.

For beneficial effects brought by the nineteenth aspect and any possible implementation, refer to descriptions of beneficial effects corresponding to the seventh aspect and corresponding implementations. Details are not described herein again.

According to a twentieth aspect, an embodiment of this application provides a communication apparatus. The apparatus includes units configured to perform the method according to any implementation of the eighth aspect.

In a possible design, the apparatus includes:
a processing unit, configured to generate tenth information, where the tenth information indicates a relay node to perform DU migration.

In a possible implementation, the apparatus further includes:
a communication unit, configured to send the tenth information to the relay node.

In a possible implementation, the communication unit is further configured to receive eleventh information from the relay node, where the eleventh information indicates that DU migration triggered by the network management system is rejected or indicates the network management system not to trigger DU migration of the relay node.

For the method performed by the processing unit and the communication unit, refer to the method corresponding to the eighth aspect. Details are not described herein again.

For beneficial effects brought by the twentieth aspect and any possible implementation, refer to descriptions of beneficial effects corresponding to the eighth aspect and corresponding implementations. Details are not described herein again.

According to a twenty-first aspect, an embodiment of this application provides a communication apparatus. The apparatus includes units configured to perform the method according to any implementation of the ninth aspect.

In a possible design, the apparatus includes:
a processing unit, configured to: generate twelfth information, where the twelfth information indicates a DU migration triggering manner supported by the relay node; and/or process thirteenth information from a first donor node, where the thirteenth information indicates the DU migration triggering manner supported by the relay node.

In a possible implementation, the apparatus further includes:
a communication unit, configured to send the twelfth information and/or receive the thirteenth information.

For the method performed by the processing unit and the communication unit, refer to the method corresponding to the ninth aspect. Details are not described herein again.

For beneficial effects brought by the twenty-first aspect and any possible implementation, refer to descriptions of beneficial effects corresponding to the ninth aspect and corresponding implementations. Details are not described herein again.

According to a twenty-second aspect, an embodiment of this application provides a communication apparatus. The apparatus includes units configured to perform the method according to any implementation of the tenth aspect.

In a possible design, the apparatus includes:
a processing unit, configured to generate thirteenth information, where the thirteenth information indicates a DU migration triggering manner supported by a relay node; and/or process twelfth information from the relay node, where the twelfth information indicates the DU migration triggering manner supported by the relay node.

The third triggering condition includes at least one of the following:
the relay node completes network access; or the relay node completes DU migration.

In a possible implementation, the apparatus further includes:
a communication unit, configured to send the thirteenth information and/or receive the twelfth information.

For the method performed by the processing unit and the communication unit, refer to the method corresponding to the tenth aspect. Details are not described herein again.

For beneficial effects brought by the twenty-second aspect and any possible implementation, refer to descriptions of beneficial effects corresponding to the tenth aspect and corresponding implementations. Details are not described herein again.

According to a twenty-third aspect, an embodiment of this application provides a communication apparatus. The apparatus includes units configured to perform the method according to any implementation of the eleventh aspect.

In a possible design, the apparatus includes:
a processing unit, configured to generate fourteenth information when a fourth triggering condition is met, where the fourteenth information indicates to cancel F1 interface setup between a second donor node and a relay node.

The fourth triggering condition includes:
receiving fifteenth information from the relay node, where the fifteenth information includes that the relay node and a target donor node complete F1 interface setup, and the target donor node is different from the second donor node.

In a possible implementation, the apparatus further includes:
a communication unit, configured to send the fourteenth information when the fourth triggering condition is met.

For the method performed by the processing unit and the communication unit, refer to the method corresponding to the eleventh aspect. Details are not described herein again.

For beneficial effects brought by the twenty-third aspect and any possible implementation, refer to descriptions of beneficial effects corresponding to the eleventh aspect and corresponding implementations. Details are not described herein again.

According to a twenty-fourth aspect, an embodiment of this application provides a communication apparatus. The apparatus includes units configured to perform the method according to any implementation of the twelfth aspect.

In a possible design, the apparatus includes:
a communication unit, configured to receive fourteenth information from a first donor node, where the fourteenth information indicates to cancel F1 interface setup between the second donor node and a relay node.

In a possible implementation, the apparatus further includes:
a processing unit, configured to process the fourteenth information.

For the method performed by the processing unit and the communication unit, refer to the method corresponding to the twelfth aspect. Details are not described herein again.

For beneficial effects brought by the twenty-fourth aspect and any possible implementation, refer to descriptions of beneficial effects corresponding to the twelfth aspect and corresponding implementations. Details are not described herein again.

Optionally, in the communication apparatus according to any one of the thirteenth aspect to the twenty-fourth aspect and any possible implementation:

In an implementation, the communication apparatus is a communication device. When the communication apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is a chip (system) or a circuit used in a communication device, the communication unit may be a communication interface (input/output interface), an interface circuit, an output circuit, an input circuit, a pin, a related circuit, or the like on the chip (system) or the circuit, and the processing unit may be at least one processor, processing circuit, logic circuit, or the like.

According to a twenty-fifth aspect, an embodiment of this application provides a communication apparatus. The communication apparatus includes a processor. The processor is coupled to a memory, and may be configured to execute instructions in the memory, to implement the method according to any one of the first aspect to the twelfth aspect and any possible implementation. Optionally, the communication apparatus further includes the memory. Optionally, the communication apparatus further includes a communication interface, and the processor is coupled to the communication interface.

According to a twenty-sixth aspect, an embodiment of this application provides a communication apparatus, including a logic circuit and a communication interface. The communication interface is configured to receive information or send information; and the logic circuit is configured to receive information or send information through the communication interface, so that the communication apparatus is enabled to perform the method according to any one of the first aspect to the twelfth aspect and any possible implementation.

According to a twenty-seventh aspect, an embodiment of this application provides a computer-readable storage medium. The computer-readable storage medium is configured to store a computer program (which may also be referred to as code or instructions). When the computer program is run on a computer, the method according to any one of the first aspect to the twelfth aspect and any possible implementation is implemented.

According to a twenty-eighth aspect, an embodiment of this application provides a computer program product. The computer program product includes a computer program (which may also be referred to as code or instructions). When the computer program is run, a computer is enabled to perform the method according to any one of the first aspect to the twelfth aspect and any possible implementation.

According to a twenty-ninth aspect, an embodiment of this application provides a chip. The chip includes a processor. The processor is configured to execute instructions. When the processor executes the instructions, the chip is enabled to perform the method according to any one of the first aspect to the twelfth aspect and any possible implementation. Optionally, the chip further includes a communication interface, and the communication interface is configured to receive a signal or send a signal.

According to a thirtieth aspect, an embodiment of this application provides a communication system. The communication system includes at least one of the communication apparatuses according to the thirteenth aspect to the twenty-fourth aspect, or the communication apparatus according to the twenty-fifth aspect, or the communication apparatus according to the twenty-sixth aspect, or the chip according to the twenty-ninth aspect.

According to a thirty-first aspect, an embodiment of this application provides a communication system. The communication system includes at least one of a relay node, a first donor node, a second donor node, and an OAM server. The first donor node is configured to perform the method according to any one of the first aspect, the third aspect, the fifth aspect, the seventh aspect, or the ninth aspect and any possible implementation. The first donor node is configured to perform the method according to any one of the second aspect, the sixth aspect, the tenth aspect, or the eleventh aspect and any possible implementation. The second donor node is configured to perform the method according to the twelfth aspect and any possible implementation. The OAM server is configured to perform the method according to the fourth aspect or the eighth aspect and any possible implementation.

In addition, in a process of performing the method according to any one of the first aspect to the twelfth aspect and any possible implementation, a process related to information sending and/or information receiving in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method according to any one of the first aspect to the twelfth aspect and any possible implementation, the processor may be a processor specially configured to perform the method, or may be a processor, for example, a general-purpose processor, that performs the method by executing computer instructions in a memory. The memory may be a non-transitory (non-transitory) memory, for example, a read-only memory (Read-Only Memory, ROM). The memory and the processor may be integrated on a same chip, or may be disposed on different chips. A type of the memory and a manner of disposing the memory and the processor are not limited in embodiments of this application.

In a possible implementation, at least one memory is located outside an apparatus.

In another possible implementation, at least one memory is located inside an apparatus.

In still another possible implementation, some memories in at least one memory are located inside an apparatus, and the other memories are located outside the apparatus.

In embodiments of this application, the processor and the memory may alternatively be integrated into one component, that is, the processor and the memory may alternatively be integrated together.

In embodiments of this application, the first triggering condition for generating (or generating and sending) an outcome of setting up an F1 interface between the relay node and the target donor node is clearly provided, and the foregoing F1 interface setup outcome can be used to enable the first donor node to send UE handover indication information to a correct donor node, thereby avoiding a case in which DU migration of the relay node cannot be normally completed or a migration error occurs. When the relay node meets the first triggering condition, the relay node can generate (or generate and send) the first information in time, so that the first donor node can initiate a user equipment (user equipment, UE) handover request to a correct donor node (the target donor node) based on the first information. In this way, the relay node normally completes DU migration, and the DU of the relay node does not migrate to an incorrect donor node.

### BRIEF DESCRIPTION OF DRAWINGS

To describe technical solutions in embodiments of this application more clearly, the following briefly describes the accompanying drawings used in embodiments of this application. It is clear that the accompanying drawings described below show merely some embodiments of this application, and a person of ordinary skill in the art may still derive other drawings from these accompanying drawings without creative efforts.
FIG. 1 is a diagram of a structure of an IAB system according to an embodiment of this application;
FIG. 2 is a diagram of a structure of an IAB node according to an embodiment of this application;
FIG. 3 is a diagram of a structure of an IAB network according to an embodiment of this application;
FIG. 4 is a diagram of a control plane protocol architecture in an IAB network according to an embodiment of this application;
FIG. 5 is a diagram of a user plane protocol architecture in an IAB network according to an embodiment of this application;
FIG. 6 shows an example of a diagram of an IAB network architecture according to an embodiment of this application;
FIG. 7 shows an example of a BAP topology of an IAB network according to an embodiment of this application;
FIG. 8 shows an example of DU migration in an IAB network according to an embodiment of this application;
FIG. 9 is a schematic flowchart of a communication method according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application;
FIG. 13 is a schematic flowchart of another communication method according to an embodiment of this application;
FIG. 14 is a schematic flowchart of another communication method according to an embodiment of this application;
FIG. 15 is a schematic flowchart of another communication method according to an embodiment of this application;
FIG. 16 is a schematic flowchart of another communication method according to an embodiment of this application;
FIG. 17 is a schematic flowchart of another communication method according to an embodiment of this application;
FIG. 18 is a schematic flowchart of another communication method according to an embodiment of this application;
FIG. 19 is a schematic flowchart of another communication method according to an embodiment of this application;
FIG. 20 is a schematic flowchart of another communication method according to an embodiment of this application;
FIG. 21 is a schematic flowchart of another communication method according to an embodiment of this application;
FIG. 22 is a diagram of a structure of a communication apparatus according to an embodiment of this application;
FIG. 23 is a diagram of a structure of a communication apparatus according to an embodiment of this application; and
FIG. 24 is a diagram of a structure of a chip according to an embodiment of this application.

### DESCRIPTION OF EMBODIMENTS

To make objectives, technical solutions, and advantages of this application more clearly, the following describes embodiments of this application with reference to accompanying drawings in embodiments of this application.

Terms "first", "second", and the like in this specification, the claims, and the accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

An "embodiment" mentioned in this specification means that a particular feature, structure, or characteristic described with reference to the embodiment may be included in at least one embodiment of this application. The phrase shown in various locations in this specification may not necessarily refer to a same embodiment, and is not an independent or optional embodiment exclusive from another embodiment. It may be explicitly and implicitly understood by a person skilled in the art that, in embodiments of this application, unless otherwise specified or there is a logic conflict, terms and/or descriptions in embodiments are consistent and may be mutually referenced, and technical features in different embodiments may be combined based on an internal logical relationship thereof to form a new embodiment.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate the following three cases: Only A exists, only B exists, and both A and B exist, where A and B may be singular or plural. A character "/" generally indicates an "or" relationship between the associated objects. In addition, "at least one of the following items (pieces)" or a similar expression thereof means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

It should be noted that, in this application, an "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device.

It should be noted that, in this application, "sending" may be understood as "outputting", and "receiving" may be understood as "inputting". In "sending information to A", "to A" indicates only a direction of information transmission, A is a destination, and "sending information to A" is not necessarily directly performed over an air interface. In addition, "sending information to A" includes directly sending the information to A, or includes indirectly sending the information to A through a transmitter. Therefore, "sending information to A" can also be understood as "outputting information destined for A". Similarly, "receiving information from A" indicates that a source of the information is A, and includes directly receiving the information from A, or includes indirectly receiving the information from A through a receiver. Therefore, "receiving information from A" can also be understood as "inputting information from A".

Before this application is described, some terms in embodiments of this application are first briefly explained and described, to facilitate understanding of a person skilled in the art.
(1) A terminal side device is a device that provides voice and/or data connectivity for a user. In embodiments of this application, the terminal side device may be referred to as a user equipment (user equipment, UE), a terminal device, a terminal, a mobile station (mobile station, MS), a mobile terminal (mobile terminal, MT), or the like. For example, the terminal side device may include a handheld device having a wireless connection function or a communication device connected to a wireless modem. The terminal side device may communicate with a core network through a radio access network (radio access network, RAN), and exchange a voice and/or data with the RAN.

Some examples of the terminal side device are a mobile station (mobile station, MS), a subscriber unit (subscriber unit), a cellular phone (cellular phone), a smartphone (smartphone), a wireless data card, a personal digital assistant (personal digital assistant, PDA), a computer, a tablet computer, a wireless modem (modem), a handheld device (handset), a laptop computer (laptop computer), a machine type communication (machine type communication, MTC) terminal, a wearable device, and a vehicle-mounted terminal device. The terminal side device further includes a limited device, for example, a device with low power consumption, a device with a limited storage capability, or a device with a limited computing capability. The terminal side device further includes an information sensing device such as a barcode, radio frequency identification (radio frequency identification, RFID), a sensor, a global positioning system (global positioning system, GPS), or a laser scanner.

A function of the terminal side device may be implemented through a hardware component inside the terminal device, and the hardware component may be a processor and/or a programmable chip inside the terminal device. Optionally, the chip may be implemented by an application-specific integrated circuit (application-specific integrated circuit, ASIC) or a programmable logic device (programmable logic device, PLD). The PLD may be any one of a complex programmable logical device (complex programmable logical device, CPLD), a field programmable gate array (field programmable gate array, FPGA), generic array logic (generic array logic, GAL), and a system on a chip (system on a chip, SoC), or any combination thereof.

(2) A donor base station (donor gNodeB) may also be referred to as a donor node, and a core network may be accessed through the donor node. In other words, the donor base station is a device that connects a terminal side device to the core network in a communication system. The donor base station is usually connected to the core network through a wired link (for example, an optical fiber cable). The donor base station may be responsible for receiving data from the core network and forwarding the data to a wireless backhaul device (for example, an IAB node), or receiving data from the wireless backhaul device and forwarding the data to the core network. Usually, the donor base station may be connected to a network in a wired manner.

In an example, the donor base station may include a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or the like, or may include an evolved NodeB (NodeB, eNB, or e-NodeB, evolved NodeB) in an LTE-advanced (LTE-Advanced, LTE-A) system, or may include a next generation NodeB (next generation NodeB, gNB) in a fifth generation (fifth generation, 5G) mobile communication technology new radio (new radio, NR) system, or the like. In another example, the donor base station may include a central unit (central unit, CU) (donor-CU or gNB-CU for short in this application) and a distributed unit (distributed unit, DU) (donor-DU or gNB-DU for short in this application). The gNB-CU and the gNB-DU are connected through an F1 interface. The F1 interface may further include a control plane interface (F1-C) and a user plane interface (F1-U). The donor-CU and the core network are connected through a next generation (next generation, NG) interface. The gNB-CU or the donor-CU may alternatively exist in a form in which a user plane (User plane, UP) (CU-UP for short in this application) and a control plane (Control plane, CP) (CU-CP for short in this application) are separated, that is, the gNB-CU or the donor-CU includes the CU-CP and the CU-UP. One gNB-CU may include one gNB-CU-CP and at least one gNB-CU-UP. Alternatively, one donor-CU may include one donor-CU-CP and at least one donor-CU-UP.

In different systems, a CU (or a CU-CP and a CU-UP), a DU, or an RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

A function of the donor base station may be implemented by a hardware component inside the donor base station, for example, a processor and/or a programmable chip inside the donor base station. For example, the chip may be implemented by an ASIC or a PLD. The PLD may be any one of a CPLD, an FPGA, GAL, and a SoC, or any combination thereof.

This application provides a communication method, applied to the field of communication technologies, for example, communication in an IAB network. To describe the solutions of this application more clearly, the following first describes some knowledge related to IAB.

In the IAB network, an IAB node may set up a wireless backhaul link to one or more upper-level nodes, and access a core network through the upper-level node. The upper-level node may perform control (for example, data scheduling, timing modulation, and power control) on a relay node by using a plurality of types of signaling. In addition, the relay node may set up an access link to one or more lower-level nodes, and provide an access service for the one or more lower-level nodes. The upper-level node of the relay node may be a base station, or may be another relay node. The lower-level node of the relay node may be a terminal, or may be another relay node. In some cases, an upper-level node of an IAB node may also be referred to as an upstream node or a parent node of the IAB node, and a lower-level node of the IAB node may also be referred to as a downstream node or a child node of the IAB node.

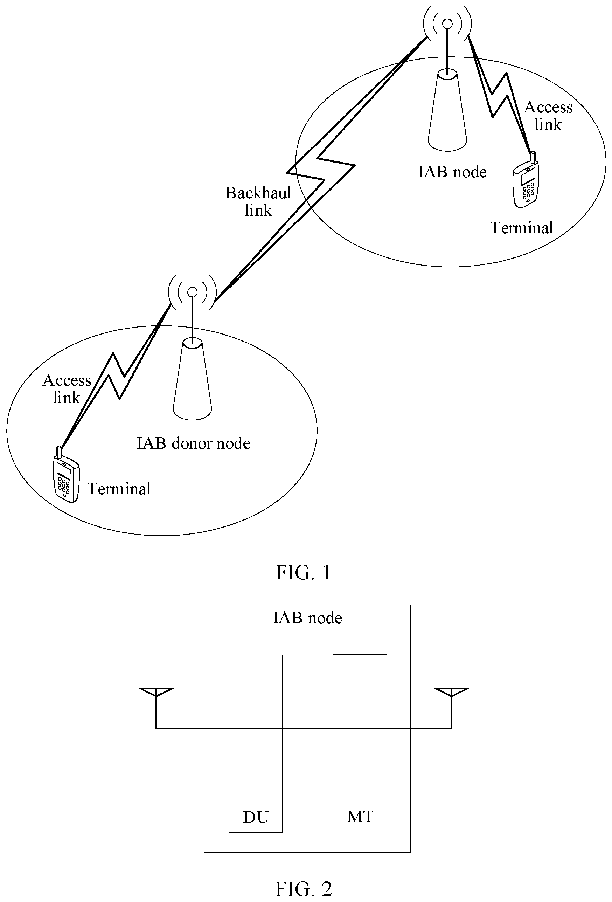

FIG. 1 is a diagram of a structure of an IAB system according to an embodiment of this application.

As shown in FIG. 1, an IAB node provides wireless access and wireless backhaul of an access service for a UE. An IAB donor node (IAB donor node) provides a wireless backhaul function for the IAB node and provides an interface between the UE and a core network. The IAB node is connected to the IAB donor node through a wireless backhaul link, so that the UE served by the IAB node is connected to the core network.

FIG. 2 is a diagram of a structure of an IAB node according to an embodiment of this application.

As shown in FIG. 2, an IAB node in NR may be divided into two parts: an MT and a DU. The MT may also be understood as a component that is similar to a UE and that is in the IAB node, and the MT is referred to as a function camping on the IAB node. Because the MT is similar to a function of a common UE, it may be understood that the MT is used for communication between the IAB node and an upper-level node. The DU is relative to a CU function of a network device, and the DU is used for communication between the IAB node and a lower-level node. It should be understood that the upper-level node may be a base station or another IAB node, and the lower-level node may be a UE or another IAB node.

The communication method provided in embodiments of this application may be applied to various communication systems including a relay node, for example, an NR system, an LTE system, an LTE-A system, a worldwide interoperability for microwave access (worldwide interoperability for microwave access, WiMAX) system, or a wireless local area network (wireless local area network, WLAN). In LTE, the relay node is generally referred to as an RN. In NR, the relay node is generally referred to as an IAB node. In some embodiments, the relay node may also be referred to as a relay device or a relay transmission reception point (relay transmission reception point, rTRP), and an upper-level node of the relay node may be a network device (including a DU of the network device, a CU of the network device, or the like).

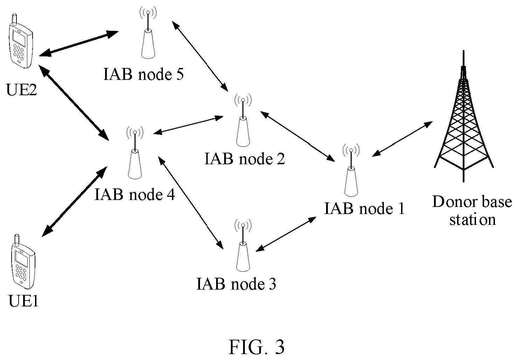

FIG. 3 is a diagram of a structure of an IAB network according to an embodiment of this application.

As shown in FIG. 3, the IAB network includes a plurality of UEs and a plurality of IAB nodes. In FIG. 3, an example in which two UEs and five IAB nodes are included is used. The two UEs are UE1 and UE2, and the five IAB nodes are an IAB node 1 to an IAB node 5. It should be understood that, in FIG. 3, a thick line indicates an access link, and a thin line indicates a backhaul link. UE2 may be connected to a donor base station through the IAB node 5, the IAB node 2, and the IAB node 1. UE2 may alternatively be connected to the donor base station through the IAB node 4, the IAB node 2, and the IAB node 1. UE2 may alternatively be connected to the donor base station through the IAB node 4, the IAB node 3, and the IAB node 1. UE1 may be connected to the donor base station through the IAB node 4, the IAB node 3, and the IAB node 1. UE1 may alternatively be connected to the donor base station through the IAB node 4, the IAB node 2, and the IAB node 1.

It should be noted that a communication system shown in FIG. 3 is merely an example, and does not constitute a limitation on an application scenario applicable to embodiments of this application. It should be understood that the IAB node is used in embodiments of this application only for description. This does not indicate that solutions in embodiments of this application are used only in an NR scenario. In embodiments of this application, the IAB node may be generally any node or device having a relay function, and use of the IAB node and the relay node in implementations of this application should be understood as having a same meaning.

In the IAB network, an IAB node is connected to a core network through an IAB donor node. For example, in a standalone (standalone, SA) 5G architecture, the IAB node is connected to a 5G core network (5G core network, 5GC/5GCN) through the IAB donor node. For another example, in a dual connectivity (dual connectivity, DC) or multi-connectivity (multi-connectivity, MC) 5G architecture (for example, a non-standalone (non-standalone, NSA) scenario), on a primary path, the IAB node may be connected to an evolved packet core (evolved packet core, EPC) through an evolved NodeB (evolved NodeB, eNB), or may be connected to the 5G core network through the IAB donor.

In the IAB network, one or more IAB nodes may be included on one transmission path between a UE and an IAB donor. Each IAB node needs to maintain a wireless backhaul link oriented to a parent node, and further needs to maintain a wireless link to a child node. If the child node of the IAB node is a UE, there is a wireless access link between the IAB node and the child node (that is, the UE) of the IAB node. If the child node of the IAB node is another IAB node, there is a wireless backhaul link between the IAB node and the child node (that is, the another IAB node) of the IAB node. For example, as shown in FIG. 3, on a path "UE1→IAB node 4→IAB node 3→IAB node 1→IAB donor", UE1 accesses the IAB node 4 through a wireless access link, the IAB node 4 is connected to the IAB node 3 through a wireless backhaul link, the IAB node 3 is connected to the IAB node 1 through a wireless backhaul link, and the IAB node 1 is connected to the IAB donor node through a wireless backhaul link.

In embodiments of this application, an access IAB node is an IAB node accessed by a UE, and an intermediate IAB node is an IAB node that provides a wireless backhaul service for a UE or an IAB node. For example, as shown in FIG. 3, on the path "UE1→IAB node 4→IAB node 3→IAB node 1→IAB donor", the IAB node 4 is an access IAB node, and the IAB node 3 and the IAB node 1 are intermediate IAB nodes. It should be noted that an IAB node is an access IAB node for a UE that accesses the IAB node, and is an intermediate IAB node for a UE that accesses another IAB node. Therefore, whether an IAB node is specifically an access IAB node or an intermediate IAB node is not fixed and may be determined based on a specific application scenario.

It should be noted that the communication system shown in FIG. 3 is merely an example, and does not constitute a limitation on an application scenario applicable to embodiments of this application. It should be understood that the IAB node is used in embodiments of this application only for description. This does not indicate that the solutions in embodiments of this application are used only in the new radio (new radio, NR) scenario.

There is an F1 interface between a DU of an IAB node and a CU of an IAB donor. The F1 interface may include two parts: a control plane part and a user plane part. The user plane part is maintained between the IAB-DU and an IAB-donor-CU-UP, and the control plane part is maintained between the IAB-DU and an IAB-donor-CU-CP. Certainly, the F1 interface may also be referred to as an F1* interface. A name of the interface is not limited in embodiments of this application. In addition, an example in which the interface is referred to as an F1 interface is used in this specification.

The F1 interface may support a user plane protocol (F1-U/F1*-U) and a control plane protocol (F1-C/F1*-C). The user plane protocol includes one or more of the following protocol layers: a general packet radio service (general packet radio service, GPRS) tunneling protocol user plane (GPRS tunneling protocol user plane, GTP-U) protocol layer, a user datagram protocol (user datagram protocol, UDP) protocol layer, an internet protocol (internet protocol, IP) protocol layer, and the like. The control plane protocol includes one or more of the following protocol layers: an F1 application protocol (F1 application protocol, F1AP), a stream control transport protocol (stream control transport protocol, SCTP), an IP protocol layer, and the like. Interface management, IAB-DU management, UE context-related configuration, and the like may be performed between the IAB node and the IAB donor through a control plane of an F1/F1* interface. Functions such as user plane data transmission and downlink transmission status feedback may be performed between the IAB node and the IAB donor through a user plane of the F1/F1* interface.

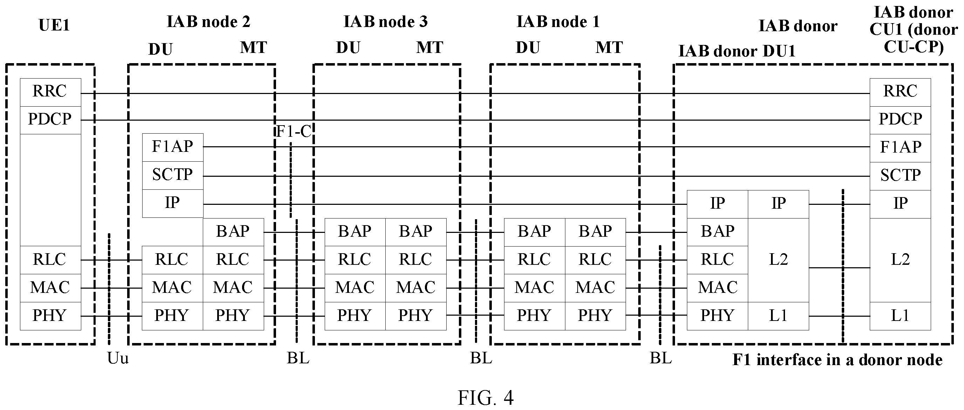

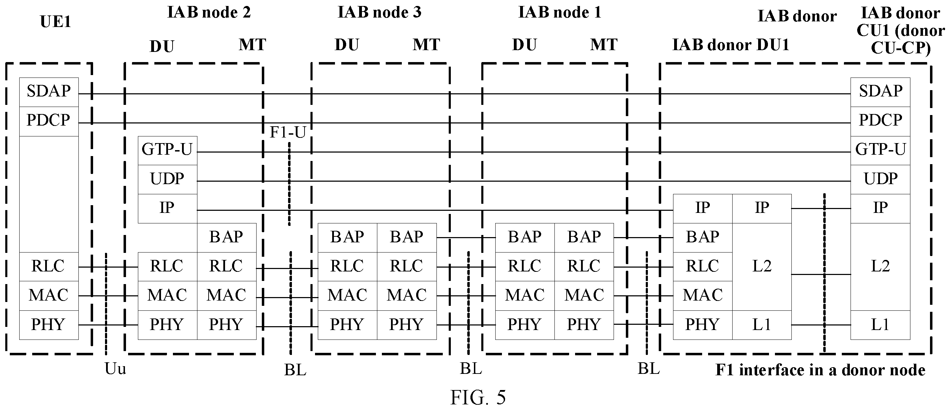

For example, FIG. 4 is a diagram of a control plane protocol architecture in an IAB network according to an embodiment of this application, and FIG. 5 is a diagram of a user plane protocol architecture in an IAB network according to an embodiment of this application.

For a control plane, as shown in FIG. 4, a Uu interface is set up between UE1 and an IAB2-DU, and peer protocol layers include radio link control (radio link control, RLC) protocol layers, media access control (media access control, MAC) layers, and physical layers (physical layer, PHY). An F1-C interface is set up between the IAB2-DU and an IAB donor CU 1, and peer protocol layers include F1AP layers and SCTP layers. An IAB donor DU 1 and the IAB donor CU 1 are connected in a wired manner, and peer protocol layers include internet protocol (internet protocol, IP) layers, L2, and L1. BLs are set up between an IAB node 2 and an IAB node 3, between the IAB node 3 and an IAB node 1, and between the IAB node 1 and the IAB donor DU 1, and peer protocol layers include backhaul adaptation protocol (backhaul adaptation protocol, BAP) layers, RLC layers, MAC layers, and PHY layers. In addition, peer radio resource control (radio resource control, RRC) layers and packet data convergence protocol (packet data convergence protocol, PDCP) layers are set up between UE1 and the IAB donor CU 1, and peer IP layers are set up between the IAB2-DU and the IAB donor DU 1.

It can be learned that, in comparison with a control plane protocol stack in a single air interface, in a control plane protocol stack in the IAB network, a DU of an access IAB node implements functions of a gNB-DU of the single air interface (to be specific, a function of setting up peer RLC layers, MAC layers, and PHY layers with a UE and a function of setting up peer F1AP layers and SCTP layers with a CU). In other words, the DU of the access IAB node in the IAB network implements the functions of the gNB-DU of the single air interface, and an IAB donor CU implements functions of a gNB-CU of the single air interface.

On the control plane, an RRC message is encapsulated in an F1AP message between the access IAB node and the IAB donor CU for transmission. Specifically, in an uplink direction, UE1 encapsulates the RRC message in a PDCP protocol data unit (protocol data unit, PDU), and sends the PDCP protocol data unit to the IAB2-DU after processing is sequentially performed at the RLC layer, the MAC layer, and the PHY layer. The IAB2-DU obtains the PDCP PDU after processing is sequentially performed at the PHY layer, the MAC layer, and the RLC layer, encapsulates the PDCP PDU in an F1AP message, and obtains an IP packet after processing is sequentially performed at the SCTP layer and the IP layer. An IAB2-MT sends the IP packet to an IAB3-DU after processing is separately performed at the BAP layer, the RLC layer, the MAC layer, and the PHY layer. The IAB3-DU obtains the IP packet after processing is sequentially performed at the PHY layer, the MAC layer, the RLC layer, and the BAP layer, and then an IAB3-MT sends the IP packet to an IAB1-DU by performing an operation similar to that of the IAB2-MT. Similarly, an IAB1-MT sends the IP packet to the IAB donor DU 1. After obtaining the IP packet through parsing, the IAB donor DU 1 sends the IP packet to the IAB donor CU 1. The IAB donor CU 1 obtains the RRC message after the IP packet is sequentially processed at the SCTP layer, the F1AP layer, and the PDCP layer. Operations in a downlink direction are similar. Details are not described herein again.

For a user plane, as shown in FIG. 5, a Uu interface is set up between UE1 and an IAB2-DU, and peer protocol layers include RLC layers, MAC layers, and PHY layers. An F1-U interface is set up between the IAB2-DU and an IAB donor CU 1, and peer protocol layers include GTP-U layers and user datagram protocol (user datagram protocol, UDP) layers. An IAB donor DU 1 and the IAB donor CU 1 are connected in a wired manner, and peer protocol layers include IP layers, L2, and L1. BLs are set up between an IAB node 2 and an IAB node 3, between the IAB node 3 and an IAB node 1, and between the IAB node 1 and the IAB donor DU 1, and peer protocol layers include BAP layers, RLC layers, MAC layers, and PHY layers. In addition, peer SDAP layers and PDCP layers are set up between UE1 and the IAB donor CU 1, and peer IP layers are set up between the IAB2-DU and the IAB donor DU 1.

It can be learned that, in comparison with a user plane protocol stack in a single air interface, in a user plane protocol stack in the IAB network, a DU of an access IAB node implements some functions of a gNB-DU of the single air interface (to be specific, a function of setting up peer RLC layers, MAC layers, and PHY layers with a terminal and a function of setting up peer GTP-U layers and UDP layers with the IAB donor CU 1). It may be understood that the DU of the access IAB node implements functions of the gNB-DU of the single air interface, and the IAB donor CU implements functions of a gNB-CU of the single air interface.

On the user plane, a PDCP data packet is encapsulated in a GTP-U tunnel between the access IAB node and the IAB donor CU for transmission. The GTP-U tunnel is set up on the F1-U interface.

The communication method provided in this application is mainly applied to an IAB network, including a standalone (standalone, SA) IAB network and a non-standalone (non-standalone, NSA) IAB network. An IAB node includes an MT part and a DU part. An IAB donor may be further divided into a DU part and a CU part, and the CU may be further divided into a CU-CP part and a CU-UP part.

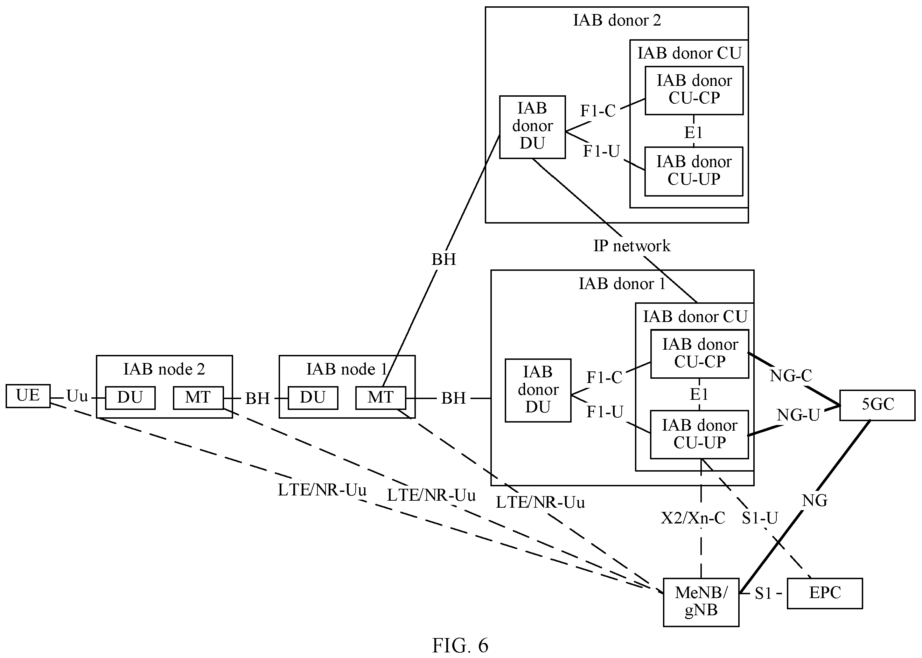

FIG. 6 shows an example of a diagram of an IAB network architecture according to an embodiment of this application.

FIG. 6 shows an example in which an IAB node is connected to an IAB donor through a wireless backhaul link. In FIG. 6, an example in which one UE, two IAB nodes, and two IAB donors are included is used. The two IAB nodes are an IAB node 1 and an IAB node 2, and the two IAB nodes each include an MT part and a DU part. The two IAB donors are an IAB donor 1 and an IAB donor 2. The two IAB donors are the IAB donor 1 and the IAB donor 2. Each IAB donor may be further divided into a DU part and a CU part, and the CU may be further divided into a CU-CP part and a CU-UP part. In FIG. 6, communication is performed between an MT of the IAB node 2 and a DU of the IAB node 1, between an MT of the IAB node 1 and a DU of the IAB donor 1, and between the MT of the IAB node 1 and a DU of the IAB donor 2 through wireless backhaul (backhaul, BH) links (link); a Uu interface is set up between the UE and an IAB2-DU; an F1-C interface is set up between an IAB donor DU and an IAB-donor-CU-CP, and an F1-U interface is set up between the IAB donor DU and an IAB-donor-CU-UP; and the DU of the IAB donor 2 is connected to a CU of the IAB donor 1 through an internet protocol (internet protocol, IP) network (network).

When an IAB node operates in an SA mode, the IAB node may set up single connectivity to one parent node, or may set up dual connectivity to two parent nodes. The two parent nodes may be controlled by a same IAB donor, or may be respectively controlled by different IAB donors. An F1 interface is set up between a DU part of the IAB node and one IAB donor, and the IAB donor may be connected to a 5G core network, that is, a dashed line part in FIG. 6. An IAB-donor-CU-CP is connected to a control plane network element (for example, an access and mobility management function) in the 5GC through an NG control plane interface (NG-C), and an IAB-donor-CU-UP is connected to a user plane network element (for example, a user plane function) in the 5GC through an NG user plane interface (NG-U).

When an IAB node operates in an NSA mode, an IAB-donor-CU-UP may be connected to an EPC (for example, connected to a serving network management system (serving gateway, SGW)) through an S1 user plane interface (S1-U), there is an LTE-Uu air interface connection between an MeNB and an MT of the IAB node, there is an X2-C interface between the MeNB and an IAB-donor-CU-CP, and the MeNB is connected to the EPC through an S1 interface (including an S1 interface user plane and an S1 interface control plane), that is, a dashed line part in FIG. 6.

In another possible case, the MeNB in FIG. 6 may alternatively be replaced with a 5G base station gNB. The LTE-Uu interface in FIG. 6 is correspondingly replaced with an NR-Uu interface. The gNB may set up a user plane interface and/or a control plane interface with the 5GC. The gNB and the IAB-donor provide a dual connectivity service for the IAB node. The gNB may serve as a primary base station or a secondary base station of the IAB node.

The foregoing is an example of an application scenario of the technical solutions in embodiments of this application. It should be understood that the technical solutions in embodiments of this application are not limited to being applied only to the network architecture shown in FIG. 6.

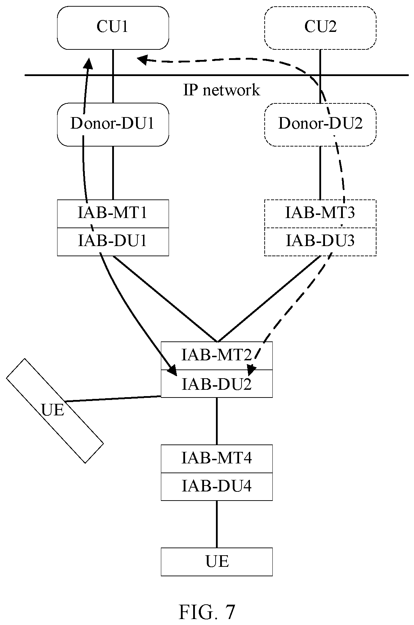

In an IAB network, an IAB node is movable, for example, an in-vehicle IAB node. For example, the movable IAB node may be referred to as a mobile IAB node (mobile IAB node, mIAB). As shown in FIG. 7, in a moving process, the mIAB node may be handed over from an IAB donor 1 to an IAB donor 2. Because coverage of donor-CU1 is limited, an F1 connection with an mIAB-DU cannot be always maintained. Therefore, the F1 connection of the mIAB-DU needs to be migrated from donor-CU1 to donor-CU2. In this scenario, a manner in which the mIAB-DU needs to migrate an RRC connection and the F1 connection from donor-CU1 to donor-CU2 may be referred to as full migration (Full migration).

For example, in the IAB network, to enhance network robustness and implement more refined load balancing and topology management, the mIAB node may perform a partial migration (Partial migration) process, that is, an MT (IAB-MT2 in FIG. 7) of the mIAB node is handed over from one parent node ( IAB node1 in FIG. 7) to another parent node ( IAB node3 in FIG. 7). The two parent nodes belong to topologies controlled by different donor CUs. To be specific, IAB node1 in FIG. 7 belongs to a topology (a solid-line box part in FIG. 7) controlled by donor-CU1, and IAB node3 belongs to a topology (a dashed-line box part in FIG. 7) controlled by donor-CU2. In the partial migration process, an RRC connection of IAB-MT2 is handed over from CU1 to CU2, but an F1 connection of IAB-DU2 is still terminated at CU1 (as shown by a solid-line arrow in FIG. 7), and is not migrated to CU2 together with IAB-MT2. It may be understood that an F1 connection of a child node, that is, an IAB node 4, of an IAB node 2 may also be terminated at CU1 (as shown by a dashed-line arrow in FIG. 7).

For example, an F1 interface of the IAB node 2 is terminated at CU1, and the IAB donor 1 may be referred to as an F1-terminating donor node (F1-terminating IAB-donor) of the IAB node 2. If there is an RRC connection between CU2 and the IAB node 2, but the F1 connection of the IAB node 2 is not terminated at CU2, the IAB donor 2 may be referred to as a non-F1-terminating IAB-donor (Non-F1-terminating IAB-donor) of the IAB node 2.

After the IAB node 2 is handed over from the topology of CU1 to the topology of CU2, to offload data traffic of the IAB node 2 from the topology of CU1 to the topology of CU2, the 3rd generation partnership project (3rd generation partnership project, 3GPP) Release-17 standard (R17) introduces an IAB transport migration management (IAB Transport Migration Management) process. To be specific, CU1 may perform an IAB transport migration management (IAB Transport Migration Management) process through an Xn interface with CU2 to offload the data traffic of the IAB node 2 to CU2. The IAB transport migration management process is specifically as follows:
Step S701: CU1 sends an IAB transport migration management request (IAB Transport Migration Management request) message to CU2, and correspondingly CU2 receives the IAB transport migration management request message.

CU1 is an F1-terminating IAB-donor of the IAB node 2, and CU2 is a non-F1-terminating IAB-donor of the IAB node 2. The IAB transport migration management request message is used to request to offload the data traffic of the IAB node 2 to CU2.

Step S702: CU2 sends an IAB transport migration management response (IAB Transport Migration Management response) message to CU1, and correspondingly CU1 receives the IAB transport migration management response message.

The IAB transport migration management response message is used to respond to the foregoing IAB transport migration management request message, to offload the data traffic of the IAB node 2 to CU2.

For details of the foregoing IAB transport migration management process, refer to the 3GPP protocol TS 38.423 R17, but this is not limited to the manner described in the foregoing protocol. In the foregoing IAB transport migration management process, CUs exchange quality of service (quality of service, QoS) of data traffic and corresponding integrated access and backhaul (integrated access and backhaul, IAB) configuration information, to implement data traffic offloading (offloading). It is specified in the R17 standard that the process is initiated by the F1-terminating IAB-donor (that is, CU1 in FIG. 7) to the non-F1-terminating IAB-donor (that is, CU2 in FIG. 7).

Further, in the IAB network, considering large-scale mobility of the IAB node, when the mIAB node moves far away, it may be difficult for the mIAB-DU to maintain an IP connection with an initial CU, or a transmission delay is large. Therefore, to support large-scale mobility, Rel-18 introduces an important feature: DU migration (DU migration).

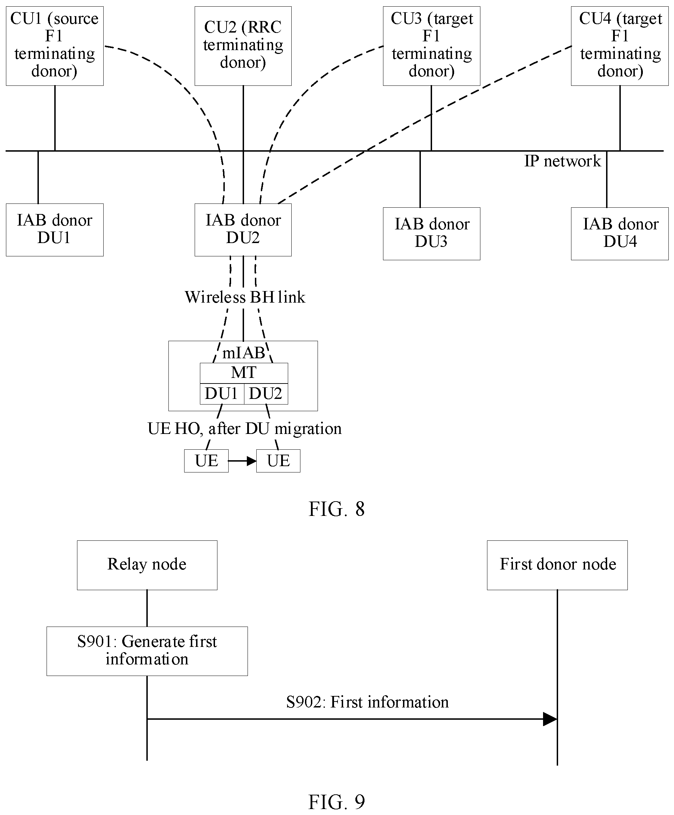

FIG. 8 shows an example of DU migration in an IAB network according to an embodiment of this application.

As shown in FIG. 8, an RRC connection of an mIAB-MT is always on CU2; and an F1 interface of an mIAB-DU may be migrated from CU1 to CU3, or an F1 interface of an mIAB-DU may be migrated from CU1 to CU4. mIAB-DU1 and mIAB-DU2 in FIG. 8 may be understood as two logical DUs on one physical DU. DU migration is implemented in the following manner: It is assumed that an original DU is mIAB-DU1, an m IAB node generates a new logical DU mIAB-DU2, mIAB-DU2 sets up an F1 interface with CU3, CU1 sends a handover request of a UE to CU3 to hand over the UE from a cell of mIAB-DU1 to a cell of mIAB-DU2, and then CU1 releases an F1 interface with mIAB-DU1. In this way, DU migration is completed. Alternatively, it is assumed that an original DU is mIAB-DU1, an m IAB node generates a new logical DU mIAB-DU2, mIAB-DU2 sets up an F1 interface with CU4, CU1 sends a handover request of a UE to CU4 to hand over the UE from a cell of mIAB-DU1 to a cell of mIAB-DU2, and then CU1 releases an F1 interface with mIAB-DU1. In this way, DU migration is completed.

In Rel-18, it is assumed that DU migration is completely decoupled from MT migration, that is, a CU of a DU may be always different from a CU of an MT. Therefore, if an F1 terminating CU of the mIAB-DU is always CU2, the MT is not necessarily handed over from CU1 to CU2 (although this is also a possibility). During DU migration, the MT may be in CU2, and the DU is migrated from CU1 to CU3 (especially, CU2 and CU1 or CU3 may be a same CU), or the DU is migrated from CU1 to CU4 (especially, CU2 and CU1 or CU4 may be a same CU). A reason for assuming that DU migration is completely decoupled from MT migration is that the DU migration process is complex (two logical DUs need to be generated, and a UE needs to be handed over to new logical DUs one by one), DU migration should not be frequent, and the CU of the DU should ideally be a CU with a large control range; and MT migration is MT handover and may be frequently performed, selection of the CU of the MT is determined based on signal quality, and the CU of the MT may be different from the CU of the DU.

Regarding how an IAB node learns of a CU to which a DU of the IAB node is to be connected when accessing a network and how the IAB node learns that the IAB node needs to perform DU migration and learns of a corresponding target CU, there are currently two manners: OAM triggering and CU triggering, which are described below.
(1) In the case of OAM triggering, an OAM configures a CU of an IAB-DU (which is a target CU in the case of DU migration) on an IAB node. For example, the CU may be pre-configured before IAB delivery (for example, for an IAB node whose approximate deployment location has been determined or that is deployed on a fixed running track, such as an IAB node on a bus). Alternatively, after an IAB-MT accesses a network, the OAM server selects, based on a location of the IAB node, a nearby base station suitable for serving as the CU of the IAB-DU, and delivers an identifier of the CU of the IAB-DU to the IAB node by using a PDU session between the IAB-MT and a core network.
(2) In the case of CU triggering, specifically, in a network access case, CU2 notifies an IAB-MT of an identifier of CU1. In the case of DU migration, CU1 notifies IAB-DU1 of an identifier of CU3 (generally, CU2 does not notify the IAB-MT because DU migration is triggered by a source CU of a DU), and IAB-DU1 triggers, through an internal interface, IAB-DU2 to initiate F1 interface setup to CU3.

Although the IAB node can determine that the IAB node needs to perform DU migration and determine a corresponding target CU through OAM triggering/CU triggering, in a case in which OAM triggering conflicts with CU triggering, the IAB node still cannot determine a target CU corresponding to DU migration, or the IAB node may determine an incorrect target CU corresponding to DU migration. For example, if OAM triggering indicates that a target CU corresponding to DU migration is CU2, and CU triggering indicates that a target CU corresponding to DU migration is CU3, the IAB node may not determine whether the target CU corresponding to DU migration is CU2 or CU3. It may be understood that a sequence of receiving indication information in OAM triggering and indication information in CU triggering by the IAB node is not limited. The indication information in CU triggering may be received in a process of performing DU migration based on the indication information in OAM triggering, or the indication information in OAM triggering may be received in a process of performing DU migration based on the indication information in CU triggering. In this case, because the IAB node cannot determine the target CU corresponding to DU migration, the IAB node may not normally perform DU migration, or DU migration may fail.

In view of this, embodiments of this application provide a new communication method, so that when performing DU migration, an IAB node can process a triggering conflict caused by CU triggering and OAM triggering, to determine a target CU corresponding to DU migration, thereby ensuring that the IAB node successfully completes DU migration.

FIG. 9 is a schematic flowchart of a communication method according to an embodiment of this application. The communication method is applied to the field of communication technologies, for example, communication in an IAB network. The communication method includes but is not limited to the following steps:
S901: A relay node generates first information.
S902: The relay node sends the first information to a first donor node, and correspondingly the first donor node receives the first information from the relay node.

It may be understood that the relay node in this implementation of this application may be a device equipped with a processor/chip that can be configured to execute computer-executable instructions, or may be a processor/chip that can be configured to execute computer-executable instructions. The relay node in this implementation of this application includes a terminal side part oriented to a parent node and a network side part oriented to a child node, for example, may include an MT and a DU, or may include an MT and a gNB. This is not limited in this implementation of this application. DU migration and MT migration of the relay node are completely decoupled. Therefore, a donor node connected to the MT of the relay node may be different from or the same as a donor node connected to the DU. For example, both the MT and the DU of the relay node are connected to the first donor node. For another example, the MT of the relay node is connected to a second donor node, and the DU of the relay node is connected to the first donor node. When the communication method in this implementation of this application is applied to an IAB network, the relay node may be an IAB node, a DU of the IAB node is connected to the first donor node, and a donor node connected to an MT of the IAB node is not limited in this implementation of this application, for example, may be the first donor node, the second donor node, or a target donor node. For example, the relay node may be the mIAB node in FIG. 8, to perform the communication method in this embodiment of this application, to determine a target CU corresponding to DU migration, thereby ensuring that the IAB node successfully completes DU migration.

It may be understood that the first donor node in this implementation of this application may be a device equipped with a processor/chip that can be configured to execute computer-executable instructions, or may be a processor/chip that can be configured to execute computer-executable instructions. The first donor node in this implementation of this application is a source CU corresponding to the DU of the relay node, and the first donor node is connected to the DU of the relay node before the relay node performs DU migration. When the communication method in this implementation of this application is applied to an IAB network, the relay node may be an IAB node, and the first donor node may be connected to a DU of the IAB node. For example, the first donor node may be CU1 in FIG. 8, to perform the communication method in this embodiment of this application, to determine a target CU corresponding to DU migration, thereby ensuring that the IAB node successfully completes DU migration.

The second donor node and the target donor node in this implementation of this application may be devices equipped with a processor/chip that can be configured to execute computer-executable instructions, or may be processors/chips that can be configured to execute computer-executable instructions. In this implementation of this application, the second donor node is an incorrect donor node after DU migration, and the target donor node is a correct donor node after DU migration. For example, when a triggering conflict occurs, an indication triggered by a network management system prevails. In this case, a donor node indicated by the network management system is a correct donor node, and a donor node indicated by the first donor node is an incorrect donor node. For example, when a triggering conflict occurs, the indication triggered by the network management system prevails, the network management system indicates to migrate the DU of the relay node to a third donor node, and the first CU indicates to migrate the relay node to a fourth donor node. In this case, the third donor node is a correct donor node, and the fourth donor node is an incorrect donor node. For example, the second donor node may be CU4 in FIG. 8, and the target donor node may be CU3 in FIG. 8, to perform the communication method in this embodiment of this application, to determine a target CU corresponding to DU migration, thereby ensuring that the IAB node successfully completes DU migration.

The network management system in this implementation of this application may be a device equipped with a processor/chip that can be configured to execute computer-executable instructions, or may be a processor/chip that can be configured to execute computer-executable instructions. The network management system in this implementation of this application is a network management system of the relay node, and can communicate with the relay node. The network management system generally is an operation, administration and maintenance (orchestration and management, OAM) server, and may be any network element in a core network. OAM triggering mentioned above generally means that the OAM indicates, through pre-configuration or remote control, the relay node to perform DU migration. When the communication method in this implementation of this application is applied to an IAB network, the network management system may be an OAM server, and the OAM server may be connected to an IAB node. For example, the OAM server is connected to an MT of the IAB node, or the OAM server is connected to a DU of the IAB node. This is not limited in this embodiment of this application.

**Specifically, S901 and/or S902 are/is performed when the following triggering condition is met:**
The relay node generates the first information when a first triggering condition is met. In this case, the first triggering condition may be understood as a condition for triggering the relay node to generate the first information. Optionally, the relay node further sends the first information when the first triggering condition is met. In this case, the first triggering condition may be understood as a condition for triggering the relay node to generate and send the first information.

**The first triggering condition includes but is not limited to one or more of the following:**
(1) Being based on second information provided by the network management system. Correspondingly, the network management system provides the second information for the relay node, where the second information indicates the relay node to set up a first F1 interface with the target donor node.
(2) The relay node receives third information from the first donor node, and correspondingly the first donor node sends the third information to the relay node, where the third information indicates the relay node to set up a second F1 interface with the second donor node, and the second donor node is different from the target donor node.

**It should be understood that** the foregoing listed several triggering conditions are merely used as possible examples for triggering execution of S901 and/or S902, and should not constitute a limitation on this embodiment of this application. All embodiments obtained based on a supplement to or a proper variation of the foregoing triggering conditions fall within the protection scope of this embodiment of this application.

The first information includes an outcome of setting up the first F1 interface between the relay node and the target donor node. For example, the outcome may be that the relay node and the target donor node complete F1 interface setup, or may be that the relay node and the target donor node do not complete F1 interface setup. This is not limited in this implementation of this application. The first information may further carry an identifier of the target donor node, for example, a gNB ID and/or an IP address. The first information may further carry an identifier (for example, an NR cell global identifier NCGI) of a target cell (that is, a cell of the target DU), and the first donor node may obtain the identifier of the target donor node based on the identifier of the target cell.

Optionally, the first information may be, for example, a message carried in an F1 application protocol (F1 application protocol, F1AP), for example, class 1 RESPONSE MESSAGE or class 2 MESSAGE.

Optionally, the second information may be information pre-configured by the network management system. For example, the pre-configured information indicates the relay node to perform DU migration at a specified time point. Specifically, the pre-configured information indicates the relay node to start DU migration one hour after the relay node accesses a network. How to perform pre-configuration, content of the pre-configured information, and the like are not limited in this implementation of this application. The second information may alternatively be sent by the network management system to the relay node through remote control. For example, the network management system may send the second information to the relay node through an IP network. Specifically, the network management system may first send the second information to a non-access stratum (non-access stratum, NAS) of the relay node, then the NAS sends the second information to an access stratum (access stratum, AS), and the relay node obtains the second information from the AS.

Optionally, the third information indicates the relay node to set up an F1 interface with the second donor node, and the third information may carry an identifier of the second donor node, for example, a gNB ID and/or an IP address.

Optionally, the third information may be carried in an F1AP message, and a message name may be MIAB F1 SETUP TRIGGERING.

In the IAB network, DU migration of an IAB node supports two triggering manners: source CU triggering and OAM triggering. In the source CU triggering (which is referred to as "CU triggering" subsequently) manner, a source CU sends indication information that carries a target CU to a DU of the IAB node, and the DU completes a migration operation based on the indication information. The source CU is a CU connected to the DU before migration, and the target CU is a CU connected to the DU after migration. In the OAM triggering manner, the OAM server can directly perform pre-configuration on the IAB node or remotely trigger the IAB node to perform DU migration. Apparently, both CU triggering and OAM triggering can indicate the relay node to perform DU migration. If CU triggering and OAM triggering occur at the same time, the relay node may not normally complete DU migration, or may migrate to an incorrect donor node. In addition, when the two triggering manners conflict, at least one triggering indication (for example, CU triggering) is not completed, which may cause a control failure, an information transmission error, or another exception.

However, in this implementation of this application, the first triggering condition for generating (or generating and sending) an outcome of setting up an F1 interface between the relay node and the target donor node is clearly provided, and the foregoing F1 interface setup outcome can be used to enable the first donor node to send UE handover indication information to a correct donor node, thereby avoiding a case in which DU migration of the relay node cannot be normally completed or a migration error occurs. When the relay node meets the first triggering condition, the relay node can generate (or generate and send) the first information in time, so that the first donor node can initiate a user equipment (user equipment, UE) handover request to a correct donor node (the target donor node) based on the first information. In this way, the relay node normally completes DU migration, and the DU of the relay node does not migrate to an incorrect donor node.

**In a possible implementation,** the outcome of the first F1 interface is that F1 interface setup between the relay node and the target donor node is completed.

It may be understood that, that F1 interface setup between the relay node and the target donor node is completed may be, for example, that the target donor node generates and sends an F1AP message (for example, F1 SETUP RESPONSE) to the relay node to indicate that F1 interface setup is completed, or that the relay node receives an F1AP message (for example, F1 SETUP RESPONSE) returned by the target donor node to indicate that F1 interface setup is completed.

In this implementation of this application, the outcome of the first F1 interface is that F1 interface setup between the relay node and the target donor node is completed (complete). The target donor node is different from a donor node indicated by CU triggering. The relay node sends F1 interface setup complete information of the relay node to the first donor node by using the first information, so that the first donor node can indicate a correct donor node (the target donor node) to perform UE handover. In this way, the relay node successfully completes DU migration.

**In a possible implementation,** the second information is further used to trigger release of the second F1 interface.

In this implementation of this application, the second information indicates the relay node to set up the first F1 interface with the target donor node, and the second F1 interface is an F1 interface between the relay node and the second donor node. If the relay node has set up the second F1 interface with the second donor node before receiving the second information, the second information is used to trigger release of the second F1 interface. This can enable the relay node to set up the first F1 interface with the target donor node. In addition, this can further save resources of the second donor node, and help the second donor node set up an F1 interface with another relay node.

Optionally, being based on the second information provided by the network management system is equivalent to that the OAM triggers DU migration of the relay node. OAM triggering may occur after CU triggering and before the relay node receives a setup complete message of the second F1 interface. For example, OAM triggering may occur after the relay node sends an F1 interface setup message to the second donor node and before the relay node receives an F1 SETUP RESPONSE message from the second donor node.

It should be noted that the second information may carry release indication information of the second F1 interface, or may not carry release indication information of the second F1 interface. If the second information carries the release indication information of the second F1 interface, the relay node may send a release request (for example, F1 REMOVAL REQUEST) of the second F1 interface to the second donor node based on the indication information. If the second information does not carry the release indication information of the second F1 interface, when receiving the second information, the relay node may consider by default that DU migration indicated by the second information prevails, to autonomously send a release request (for example, F1 REMOVAL REQUEST) of the second F1 interface to the second donor node. This is equivalent to that logic may be built in the relay node, that is, after indication information in OAM triggering is received, OAM triggering prevails by default, and a migration process indicated by CU triggering is terminated.

Triggering of release of the second F1 interface can ensure that setup of the first F1 interface is completed, so that the relay node successfully completes DU migration.

**In a possible implementation,** the first information further includes an identifier of the target donor node and/or a DU migration triggering manner.

In this implementation of this application, the identifier of the target donor node may be, for example, a gNB ID and/or an IP address, and the DU migration triggering manner may be, for example, OAM triggering. The first information carries the identifier of the target donor node, so that the first donor node can communicate with the target donor node, and indicate the target donor node to perform UE handover. The first information carries the DU migration triggering manner, so that the first donor node can learn of a reason why the relay node does not set up an F1 interface based on an indication of the first donor node.

Optionally, when the first F1 interface is an F1 interface indicated to be set up by OAM triggering and/or when OAM triggering is inconsistent with CU triggering, the first information may include the DU migration triggering manner.

Optionally, the first information may be carried in a class 1 RESPONSE message or a REJECT/FAILURE message of an F1 message of CU triggering, or may be carried in a separate class 2 message. The class 1 message requires a response from a peer end, and the class 2 message does not require a response from a peer end. For example, a class 1 message (for example, RESPONSE/REJECT/FAILURE) sent by the relay node to the first donor node is used to respond to another class 1 message (for example, REQUEST) sent by the first donor node to the relay node. If the relay node sends a class 2 message to the first donor node, the class 2 message does not need to be a response message of a specific message, and the class 2 message may be understood as a notification message.

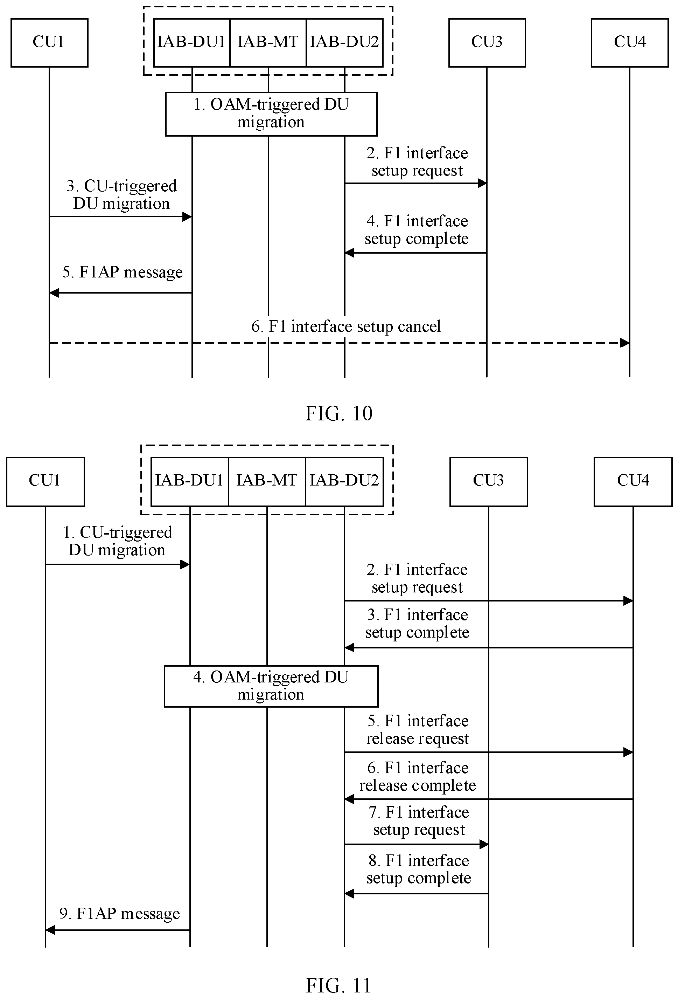

FIG. 10 is a schematic flowchart of a communication method according to an embodiment of this application. It may be understood that steps in this embodiment of this application may be considered as a proper variation of or a supplement to the embodiment in FIG. 9. Alternatively, it may be understood that the communication method in this embodiment of this application may be considered as an embodiment that can be independently performed. This is not limited in this application. The communication method provided in this embodiment of this application is applied to the field of communication technologies, for example, communication in an IAB network.

It may be understood that, for an IAB (including an IAB-DU and an IAB-MT) in the communication method provided in this embodiment of this application, refer to the relay node in the communication method shown in FIG. 9; for CU1, refer to the first donor node in the communication method shown in FIG. 9; for CU3 in the communication method provided in this embodiment of this application, refer to the target donor node in the communication method shown in FIG. 9; for CU4 in the communication method provided in this embodiment of this application, refer to the second donor node in the communication method shown in FIG. 9; and for an OAM in the communication method provided in this embodiment of this application, refer to the OAM server in the communication method shown in FIG. 9. Details are not described herein again.

The communication method may include one or more steps in step 1 to step 6. It should be understood that, for ease of description herein, a sequence of step 1 to step 6 is described, but this is not intended to limit execution to the foregoing sequence. An execution sequence, execution time, a quantity of execution times, and the like of the foregoing one or more steps are not limited in embodiments of this application. Step 1 to step 6 are specifically as follows:
Step 1: OAM-triggered DU migration.

It may be understood that OAM-triggered DU migration may be DU migration triggered through pre-configuration, or may be DU migration triggered through remote control. For details, refer to related descriptions about OAM triggering in FIG. 8. Details are not described herein again.

OAM triggering indicates that a target CU of DU migration of the IAB node is CU3. It should be noted that OAM-triggered DU migration generally means that indication information from the OAM server indicates that the IAB node is performing or is to perform DU migration. Correspondingly, the IAB node receives the indication information from the OAM server, and prepares to generate or is generating indication information for requesting to perform DU migration (for example, F1 SETUP REQUEST). Alternatively, the IAB node determines to perform DU migration based on OAM triggering. The target CU is CU3.

Step 2: IAB-DU2 sends an F1 interface setup request (for example, F1 SETUP REQUEST) to CU3, and correspondingly CU3 receives the F1 interface setup request from IAB-DU2.

Step 3: CU-triggered DU migration. Specifically, CU1 sends indication information of CU-triggered DU migration to IAB-DU1. For example, the message may be carried in an F1AP message, to indicate that a target CU of DU migration is CU4. Optionally, the message may carry an identifier of CU4, for example, a gNB ID and/or an IP address.

Step 4: CU3 sends an F1 interface setup complete message (for example, F1 SETUP RESPONSE) to IAB-DU2, and correspondingly IAB-DU2 receives the F1 interface setup complete message from CU3.

It should be noted that a sequence of performing step 3 and step 4 is not limited in this embodiment of this application. For example, step 3 may be performed before step 4, or step 4 may be performed before step 3.

Step 5: IAB-DU1 sends an F1AP message to CU1.

It can be learned from the foregoing steps that OAM triggering and CU triggering indicate different target CUs (CU3 and CU4), and the indication of OAM triggering prevails (that is, IAB-DU2 sets up an F1 interface with CU3). Because IAB-DU2 has set up the F1 interface with CU3, CU1 now needs to indicate CU3 to perform UE handover. Therefore, the F1AP message sent by IAB-DU1 to CU1 includes an outcome of setting up the F1 interface between IAB-DU2 and CU3, for example, complete of setup of the F1 interface between IAB-DU2 and CU3. Optionally, the F1AP message further carries an identifier of CU3, for example, a gNB ID and/or an IP address, so that CU1 sends a UE handover indication to a correct CU (CU3), to complete DU migration of the IAB node.

Optionally, the F1AP message may further carry indication information of a DU migration triggering manner (for example, OAM triggering).

Optionally, the F1AP message may be carried in a class 1 message of an F1 message of CU triggering, for example, a RESPONSE message or a REJECT/FAILURE message. Alternatively, the F1AP message may be carried in a class 2 message of an F1 message of CU triggering, for example, UL RRC MESSAGE TRANSFER or DL RRC MESSAGE TRANSFER.

Optionally, the F1AP message may carry the indication information of the DU migration triggering manner when the following conditions are met.

Step 6: CU1 sends F1 interface setup cancel indication information to CU4.

The indication information may be carried in an F1AP message. For example, specifically, the indication message indicates to cancel F1 interface setup between CU4 and IAB-DU2. Optionally, the indication information may carry an identifier of IAB-DU2, for example, a gNB ID and/or an IP address.

Step 6 is optional. For example, step 6 may be performed when one or more of the following conditions are met:
(1) CU1 receives the F1AP message in step 5. This is equivalent to that step 5 has been completed. For example, CU1 receives complete indication information of F1 interface setup between the relay node and the target donor node, and the target donor node is different from the second donor node. Specifically, CU1 receives complete indication information of F1 interface setup between IAB-DU2 and DU3.
(2) CU1 interacts with CU4. For example, CU1 sends indication information to CU4, to indicate CU4 to set up an F1 interface with IAB-DU2. Alternatively, CU1 sends indication information to CU4, to indicate that CU4 is to set up an F1 interface with IAB-DU2.
(3) There is a preset configuration in CU4, and the preset configuration indicates CU4 to set up an F1 interface with IAB-DU2.

Optionally, the condition 2 and the condition 3 occur in a DU migration process of the IAB node.

According to this embodiment of this application, it is clarified that OAM triggering prevails when a triggering conflict occurs in a DU migration process. This avoids a case in which a target CU of DU migration is not determined due to a triggering conflict, and can ensure that DU migration is successfully completed.

In the implementation shown in FIG. 10, OAM triggering is earlier than CU triggering, and OAM triggering prevails. However, alternatively, CU triggering may be earlier than OAM triggering, and OAM triggering prevails.

FIG. 11 is a schematic flowchart of another communication method according to an embodiment of this application. It may be understood that steps in this embodiment of this application may be considered as a proper variation of or a supplement to the embodiment in FIG. 9. Alternatively, it may be understood that the communication method in this embodiment of this application may be considered as an embodiment that can be independently performed. This is not limited in this application. The communication method provided in this embodiment of this application is applied to the field of communication technologies, for example, communication in an IAB network.

It may be understood that, for an IAB (including an IAB-DU and an IAB-MT) in the communication method provided in this embodiment of this application, refer to the relay node in the communication method shown in FIG. 9; for CU1, refer to the first donor node in the communication method shown in FIG. 9; for CU3 in the communication method provided in this embodiment of this application, refer to the target donor node in the communication method shown in FIG. 9; for CU4 in the communication method provided in this embodiment of this application, refer to the second donor node in the communication method shown in FIG. 9; and for an OAM in the communication method provided in this embodiment of this application, refer to the OAM server in the communication method shown in FIG. 9. Details are not described herein again.

The communication method may include one or more steps in step 1 to step 9. It should be understood that, for ease of description herein, a sequence of step 1 to step 9 is described, but this is not intended to limit execution to the foregoing sequence. An execution sequence, execution time, a quantity of execution times, and the like of the foregoing one or more steps are not limited in embodiments of this application. Step 1 to step 9 are specifically as follows:
Step 1: CU-triggered DU migration.

Specifically, CU1 sends an F1AP message to IAB-DU1, to indicate an IAB node to perform DU migration. Correspondingly, IAB-DU1 receives the F1AP message from CU1. Optionally, the message may carry an identifier of a target CU. For example, the target CU is CU4, and the F1AP message may carry a gNB ID and/or an IP address of CU4.

Step 2: IAB-DU2 initiates an F1 interface setup request to CU4, and correspondingly CU4 receives the F1 interface setup request sent by IAB-DU2.

For example, IAB-DU2 may initiate the F1 interface setup request to CU4 by using an F1AP message. The F1AP message may be, for example, an F1 SETUP REQUEST message. Optionally, the F1AP message may carry an identifier of IAB-DU2, for example, a gNB ID and/or an IP address.

Step 3: CU4 sends F1 interface setup complete information to IAB-DU2, and correspondingly IAB-DU2 receives the F1 interface setup complete information from CU4.

For example, CU4 may send the F1 interface setup complete message to IAB-DU2 by using an F1AP message. The F1AP message may be, for example, an F1 SETUP REQUEST message.

Step 4: OAM-triggered DU migration.

It may be understood that OAM-triggered DU migration may be DU migration triggered through pre-configuration, or may be DU migration triggered through remote control. For details, refer to related descriptions about OAM triggering in FIG. 8. Details are not described herein again.

OAM triggering indicates that a target CU of DU migration of the IAB node is CU3. It should be noted that OAM-triggered DU migration generally means that indication information from the OAM server indicates that the IAB node is performing or is to perform DU migration. Correspondingly, the IAB node receives the indication information from the OAM server, and prepares to generate or is generating indication information for requesting to perform DU migration (for example, F1 SETUP REQUEST). Alternatively, the IAB node determines to perform DU migration based on OAM triggering. The target CU is CU3.

Optionally, a sequence of performing step 3 and step 4 is not limited in this embodiment of this application. For example, step 3 may be performed before step 4, or step 4 may be performed before step 3.

Step 5: IAB-DU2 sends an F1 interface release request to CU4, and correspondingly CU4 receives the F1 interface release request from IAB-DU2.

After receiving indication information of OAM triggering, the IAB node learns that the indication information of OAM triggering needs to prevail. Therefore, IAB-DU2 sends the F1 interface release request to CU4. CU4 needs to release the F1 interface, so that IAB-DU2 can set up an F1 interface with a CU of another donor node.

The F1 interface release request may be carried in an F1AP message, for example, an F1 REMOVAL REQUEST message.

Optionally, if CU1 has started to hand over a UE to CU4 before step 4, the UE further needs to be handed over back to CU1 or another CU other than CU4.

Step 6: CU4 sends F1 interface release complete information to IAB-DU2, and correspondingly IAB-DU2 receives the F1 interface release complete information from CU4.

The F1 interface release complete information may be carried in an F1AP message, for example, an F1 REMOVAL RESPONSE message.

Step 7: IAB-DU2 sends an F1 interface setup request to CU3, and correspondingly CU3 receives the F1 interface setup request sent by IAB-DU2.

After IAB-DU2 receives the F1 interface release complete information sent by CU4, IAB-DU2 may send the F1 interface setup request information to CU3.

Optionally, the message may be carried in an F1AP message, for example, an F1 SETUP REQUEST message.

Step 8: CU3 sends F1 interface setup complete information to IAB-DU2, and correspondingly IAB-DU2 receives the F1 interface setup complete information sent by CU3.

Optionally, the information may be carried in an F1AP message, for example, an F1 SETUP RESPONSE message.

Step 9: IAB-DU1 sends an F1AP message to CU1.

It can be learned from the foregoing steps that OAM triggering and CU triggering indicate different target CUs (CU3 and CU4), and the indication of OAM triggering prevails (that is, IAB-DU2 sets up an F1 interface with CU3). Because IAB-DU2 has set up the F1 interface with CU3, CU1 now needs to indicate CU3 to perform UE handover. Therefore, the F1AP message sent by IAB-DU1 to CU1 includes an outcome of setting up the F1 interface between IAB-DU2 and CU3, for example, complete of setup of the F1 interface between IAB-DU2 and CU3. Optionally, the F1AP message further carries an identifier of CU3, for example, a gNB ID and/or an IP address, so that CU1 sends a UE handover indication to a correct CU (CU3), to complete DU migration of the IAB node.

Optionally, the F1AP message may further carry indication information of a DU migration triggering manner (for example, OAM triggering).

Optionally, the F1AP message may be carried in a class 1 message of an F1 message of CU triggering, for example, a RESPONSE message or a REJECT/FAILURE message. Alternatively, the F1AP message may be carried in a class 2 message of an F1 message of CU triggering, for example, UL RRC MESSAGE TRANSFER or DL RRC MESSAGE TRANSFER.

Optionally, the F1AP message may carry the indication information of the DU migration triggering manner when the following conditions are met.

According to this embodiment of this application, it is clarified that OAM triggering prevails when a triggering conflict occurs in a DU migration process. This avoids a case in which a target CU of DU migration is not determined due to a triggering conflict, and can ensure that DU migration is successfully completed.

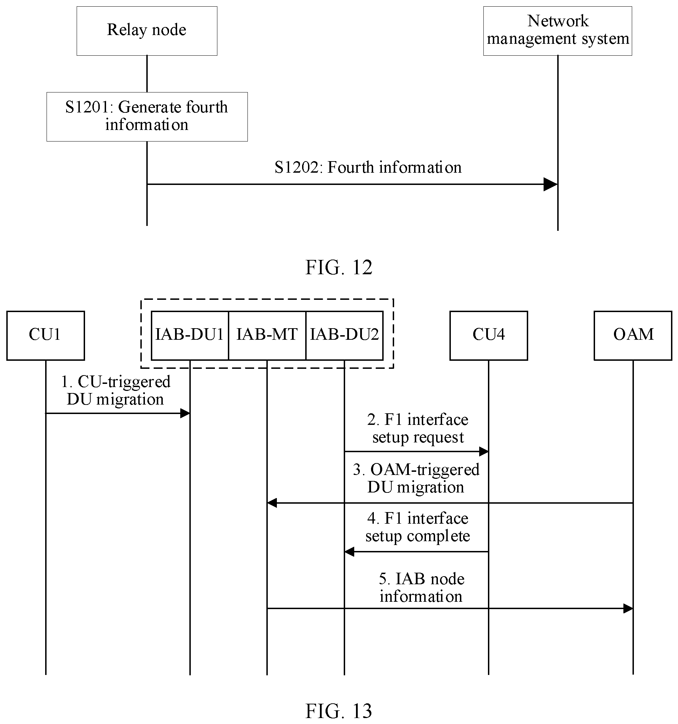

FIG. 12 is a schematic flowchart of another communication method according to an embodiment of this application. The communication method is applied to the field of communication technologies, for example, communication in an IAB network. The communication method includes but is not limited to the following steps:
S1201: A relay node generates fourth information.
S1202: The relay node sends the fourth information to a network management system, and correspondingly the network management system receives the fourth information from the relay node.

It may be understood that the relay node in this implementation of this application may be a device equipped with a processor/chip that can be configured to execute computer-executable instructions, or may be a processor/chip that can be configured to execute computer-executable instructions. The relay node in this implementation of this application includes a terminal side part oriented to a parent node and a network side part oriented to a child node, for example, may include an MT and a DU, or may include an MT and a gNB. This is not limited in this implementation of this application. DU migration and MT migration of the relay node are completely decoupled. Therefore, a donor node connected to the MT of the relay node may be different from or the same as a donor node connected to the DU. For example, both the MT and the DU of the relay node are connected to a first donor node. For another example, the MT of the relay node is connected to a second donor node, and the DU of the relay node is connected to the first donor node. When the communication method in this implementation of this application is applied to an IAB network, the relay node may be an IAB node, a DU of the IAB node is connected to the first donor node, and a donor node connected to an MT of the IAB node is not limited in this implementation of this application, for example, may be the first donor node, the second donor node, or a target donor node. For example, the relay node may be the mIAB node in FIG. 8, to perform the communication method in this embodiment of this application, to determine a target CU corresponding to DU migration, thereby ensuring that the IAB node successfully completes DU migration.

It may be understood that the first donor node in this implementation of this application may be a device equipped with a processor/chip that can be configured to execute computer-executable instructions, or may be a processor/chip that can be configured to execute computer-executable instructions. The first donor node in this implementation of this application is a source CU corresponding to the DU of the relay node, and the first donor node is connected to the DU of the relay node before the relay node performs DU migration. When the communication method in this implementation of this application is applied to an IAB network, the relay node may be an IAB node, and the first donor node may be connected to a DU of the IAB node. For example, the first donor node may be CU1 in FIG. 8, to perform the communication method in this embodiment of this application, to determine a target CU corresponding to DU migration, thereby ensuring that the IAB node successfully completes DU migration.

The second donor node and the target donor node in this implementation of this application may be devices equipped with a processor/chip that can be configured to execute computer-executable instructions, or may be processors/chips that can be configured to execute computer-executable instructions. In this implementation of this application, the second donor node is an incorrect donor node after DU migration, and the target donor node is a correct donor node after DU migration. For example, when a triggering conflict occurs, an indication triggered by the network management system prevails. In this case, a donor node indicated by the network management system is a correct donor node, and a donor node indicated by the first donor node is an incorrect donor node. For example, when a triggering conflict occurs, the indication triggered by the network management system prevails, the network management system indicates to migrate the DU of the relay node to a third donor node, and the first CU indicates to migrate the relay node to a fourth donor node. In this case, the third donor node is a correct donor node, and the fourth donor node is an incorrect donor node. For example, the second donor node may be CU4 in FIG. 8, and the target donor node may be CU3 in FIG. 8, to perform the communication method in this embodiment of this application, to determine a target CU corresponding to DU migration, thereby ensuring that the IAB node successfully completes DU migration.

The network management system in this implementation of this application may be a device equipped with a processor/chip that can be configured to execute computer-executable instructions, or may be a processor/chip that can be configured to execute computer-executable instructions. The network management system in this implementation of this application is a network management system of the relay node, and can communicate with the relay node. The network management system generally is an operation, administration and maintenance (orchestration and management, OAM) server, and may be any network element in a core network. OAM triggering mentioned above generally means that the OAM indicates, through pre-configuration or remote control, the relay node to perform DU migration. When the communication method in this implementation of this application is applied to an IAB network, the network management system may be an OAM server, and the OAM server may be connected to an IAB node. For example, the OAM server is connected to an MT of the IAB node, or the OAM server is connected to a DU of the IAB node. This is not limited in this embodiment of this application.

**Optionally, S1201 and/or S1202 are/is performed when the following triggering condition is met:**
The relay node generates the fourth information when a second triggering condition is met. In this case, the second triggering condition may be understood as a condition for triggering the relay node to generate the fourth information. Optionally, the relay node further sends the fourth information when the second triggering condition is met. In this case, the second triggering condition may be understood as a condition for triggering the relay node to generate and send the fourth information.

**The second triggering condition includes but is not limited to the following plurality of conditions:**
(1) The relay node receives fifth information from the first donor node, and correspondingly the first donor node sends the fifth information to the relay node, where the fifth information indicates the relay node to set up a third F1 interface with the target donor node.
(2) Being based on sixth information provided by the network management system. This is equivalent to that the relay node receives triggering information (may be pre-configuration or remote control) from the network management system. Correspondingly, the network management system provides the sixth information for the relay node. This is equivalent to that the network management system pre-configures OAM triggering information on the relay node, or the network management system triggers DU migration through remote control. The sixth information indicates the relay node to set up a fourth F1 interface with the second donor node, and the second donor node is different from the target donor node.
(3) The relay node receives seventh information from the target donor node, and correspondingly the target donor node sends the seventh information to the relay node, where the seventh information indicates that setup of the third F1 interface is completed.

**It should be understood that** the foregoing listed several triggering conditions are merely used as possible examples for triggering execution of S1201 and/or S1202, and should not constitute a limitation on this embodiment of this application. All embodiments obtained based on a supplement to or a proper variation of the foregoing triggering conditions fall within the protection scope of this embodiment of this application.

The fifth information may be carried in an F1AP message, for example, MIAB F1 SETUP TRIGGERING. The fifth information indicates the relay node to set up the third F1 interface with the target donor node, and may indicate the relay node to send an F1 interface setup request message to the target donor node, for example, send an F1 SETUP REQUEST message.

The sixth information may be a message pre-configured by the network management system on the relay node, and pre-configuration time may be, for example, before the relay node accesses a network, or after the relay node accesses a network. This is not limited in this implementation of this application. The pre-configured information can indicate the relay node to perform DU migration at a preset moment and indicate a donor node of DU migration. For example, the pre-configured information can indicate the relay node to start DU migration one hour after the relay node accesses the network, and indicate the relay node to migrate to a CU of the target donor node. Alternatively, the sixth information may be a message sent by the network management system to the relay node through remote control triggering. For example, the sixth message is remotely sent to the relay node through an IP network, to indicate the relay node to set up a second F1 interface with the second donor node.

The seventh information may be carried in an F1AP message, for example, F1 SETUP RESPONSE. The relay node may generate the seventh information after the relay node receives an F1 interface setup complete message (for example, F1 SETUP RESPONSE) returned by the target donor node.

In the IAB network, DU migration of an IAB node supports two triggering manners: source CU triggering and OAM triggering. In the source CU triggering (which is referred to as "CU triggering" subsequently) manner, a source CU sends indication information that carries a target CU to a DU of the IAB node, and the DU completes a migration operation based on the indication information. The source CU is a CU connected to the DU before migration, and the target CU is a CU connected to the DU after migration. In the OAM triggering manner, the OAM server can directly perform pre-configuration on the IAB node or remotely trigger the IAB node to perform DU migration. Apparently, both CU triggering and OAM triggering can indicate the relay node to perform DU migration. If CU triggering and OAM triggering occur at the same time, the relay node may not normally complete DU migration, or may migrate to an incorrect donor node. In addition, when the two triggering manners conflict, at least one triggering indication (for example, OAM triggering) is not completed, which may cause a control failure, an information transmission error, or another exception.

However, in this implementation of this application, a first triggering condition for generating (or generating and sending) an outcome of setting up an F1 interface between the relay node and the target donor node is clearly provided, and the foregoing F1 interface setup outcome can be used to enable the OAM to obtain a latest connection status of the relay node. When the relay node meets the first triggering condition, the relay node can generate (or generate and send) first information in time, so that the OAM updates a connection status of the relay node in time, thereby helping the OAM perform subsequent management of the relay node and trigger DU migration of the relay node again. Apparently, in this case, indication information of CU triggering prevails, and after the relay node sets up an F1 interface connection with a new donor node (the target donor node), the first donor node may send a UE handover indication to the new donor node. The first donor node learns that the relay node completes setup of a new F1 interface. For example, the relay node may send an F1 interface setup complete message to the first donor node. For example, the relay node sends the F1 interface setup complete message to the first donor node by using an F1AP message. Specifically, this is not limited in this implementation of this application.

**In a possible implementation,** the fifth information is further used to trigger release of the fourth F1 interface.

This can enable the relay node to set up the third F1 interface with the target donor node. In addition, this can further save resources of the second donor node, and help the second donor node set up an F1 interface with another relay node.

Optionally, being based on the fifth information provided by the network management system is equivalent to OAM triggering. OAM triggering may occur after CU triggering and before the relay node receives a setup complete message of the fourth F1 interface. For example, OAM triggering may occur after the relay node sends an F1 interface setup message to the second donor node and before the relay node receives an F1 SETUP RESPONSE message from the second donor node.

**In a possible implementation,** the fourth information further includes an identifier of the target donor node and/or a DU migration triggering manner.

The identifier of the target donor node may be, for example, a gNB ID and/or an IP address, and the DU migration triggering manner may be, for example, CU triggering. The fourth information carries the identifier of the target donor node, so that the OAM can learn that the relay node sets up an F1 interface with the target donor node, and adjust a connection relationship of the relay node, thereby facilitating subsequent management and next DU migration of the relay node. The fourth information carries the DU migration triggering manner, so that the OAM can learn whose indication the relay node followed to set up an F1 interface.

**In a possible implementation,** that the fourth information further includes the identifier of the target donor node and/or the DU migration triggering manner includes:
When the second triggering condition includes: the relay node receives the fifth information from the first donor node and/or being based on the sixth information provided by the network management system, the fourth information further includes the identifier of the target donor node and/or the DU migration triggering manner.

In this implementation of this application, that the relay node receives the fifth information from the first donor node is equivalent to that the first donor node indicates the relay node to set up an F1 interface with the target donor node (CU triggering). In this implementation of this application, when a triggering conflict occurs, CU triggering prevails. Therefore, when a triggering conflict occurs and indication information (the fifth information) of CU triggering is received, the fourth information is sent to the OAM, so that the OAM can update the connection relationship of the IAB node in time, thereby facilitating subsequent management. A case of being based on the sixth information provided by the network management system is equivalent to that a triggering conflict occurs, and an indication of CU triggering is different from that of OAM triggering (for example, the target donor node is different from the second donor node). In this case, the fourth information is sent to the OAM, so that the OAM can also update the connection relationship of the IAB node in time, thereby facilitating subsequent management.

FIG. 13 is a schematic flowchart of another communication method according to an embodiment of this application. It may be understood that steps in this embodiment of this application may be considered as a proper variation of or a supplement to the embodiment in FIG. 12. Alternatively, it may be understood that the communication method in this embodiment of this application may be considered as an embodiment that can be independently performed. This is not limited in this application. The communication method provided in this embodiment of this application is applied to the field of communication technologies, for example, communication in an IAB network.

It may be understood that, for an IAB (including an IAB-DU and an IAB-MT) in the communication method provided in this embodiment of this application, refer to the relay node in the communication method shown in FIG. 12; for CU1, refer to the first donor node in the communication method shown in FIG. 12; for CU3 in the communication method provided in this embodiment of this application, refer to the target donor node in the communication method shown in FIG. 12; for CU4 in the communication method provided in this embodiment of this application, refer to the second donor node in the communication method shown in FIG. 12; and for an OAM in the communication method provided in this embodiment of this application, refer to the OAM server in the communication method shown in FIG. 12. Details are not described herein again.

The communication method may include one or more steps in step 1 to step 5. It should be understood that, for ease of description herein, a sequence of step 1 to step 5 is described, but this is not intended to limit execution to the foregoing sequence. An execution sequence, execution time, a quantity of execution times, and the like of the foregoing one or more steps are not limited in embodiments of this application. Step 1 to step 5 are specifically as follows:
Step 1: CU-triggered DU migration.

Specifically, CU1 sends an F1AP message to IAB-DU1, to indicate an IAB node to perform DU migration. Correspondingly, IAB-DU1 receives the F1AP message from CU1. Optionally, the message may carry an identifier of a target CU. For example, the target CU is CU4, and the F1AP message may carry a gNB ID and/or an IP address of CU4.

Step 2: IAB-DU2 initiates an F1 interface setup request to CU4, and correspondingly CU4 receives the F1 interface setup request sent by IAB-DU2.

For example, IAB-DU2 may initiate the F1 interface setup request to CU4 by using an F1AP message. The F1AP message may be, for example, an F1 SETUP REQUEST message. Optionally, the F1AP message may carry an identifier of IAB-DU2, for example, a gNB ID and/or an IP address.

Step 3: OAM-triggered DU migration.

It may be understood that OAM-triggered DU migration may be DU migration triggered through pre-configuration, or may be DU migration triggered through remote control. For details, refer to related descriptions about OAM triggering in FIG. 8. Details are not described herein again.

OAM triggering indicates that a target CU of DU migration of the IAB node is CU3. It should be noted that OAM-triggered DU migration generally means that indication information from the OAM server indicates that the IAB node is performing or is to perform DU migration. Correspondingly, the IAB node receives the indication information from the OAM server, and prepares to generate or is generating indication information for requesting to perform DU migration (for example, F1 SETUP REQUEST). Alternatively, the IAB node determines to perform DU migration based on OAM triggering. The target CU is CU3.

Step 4: CU4 sends F1 interface setup complete information to IAB-DU2, and correspondingly IAB-DU2 receives the F1 interface setup complete information from CU4.

For example, CU4 may send the F1 interface setup complete message to IAB-DU2 by using an F1AP message. The F1AP message may be, for example, an F1 SETUP RESPONSE message.

Optionally, a sequence of performing step 3 and step 4 is not limited in this embodiment of this application. For example, step 3 may be performed before step 4, or step 4 may be performed before step 3.

Step 5: The IAB node sends IAB node information to the OAM server.

For example, IAB-DU1 may send the IAB node information to the OAM server, or IAB-DU2 may send the IAB node information to the OAM server, or the IAB-MT sends the IAB node information to the OAM server. This is not limited in this embodiment of this application.

The IAB node message may indicate an F1 interface setup outcome, for example, indicate an outcome of setting up an F1 interface between the IAB node and CU4. The outcome may be, for example, F1 interface setup complete (complete).

Optionally, the IAB node information may carry an identifier of CU4, for example, a gNB ID and/or an IP address.

Optionally, the IAB node information may further carry a DU migration triggering manner of the IAB node. For example, DU migration of the IAB node is CU-triggered.

Optionally, the IAB node information may carry the DU migration triggering manner of the IAB node when at least one of the following conditions is met.
(1) The DU migration triggering manner of the IAB node is CU triggering.
(2) A target CU of DU migration of the IAB node is different from a target CU indicated by OAM triggering. For example, the IAB node sets up an F1 interface with CU4 based on the indication of CU triggering. However, the target CU indicated by OAM triggering is CU3, and CU4 is different from CU3.

According to this embodiment of this application, it is clarified that CU triggering prevails when a triggering conflict occurs in a DU migration process. This avoids a case in which a target CU of DU migration is not determined due to a triggering conflict, and can ensure that DU migration is successfully completed. In addition, information such as a DU migration outcome of the IAB node is sent to the OAM server, so that the OAM server can adjust a connection relationship of the IAB node in time, thereby helping the OAM server perform subsequent management and next DU migration of the IAB node.

In the implementation shown in FIG. 13, CU triggering is earlier than OAM triggering, and CU triggering prevails. However, alternatively, OAM triggering may be earlier than CU triggering, and CU triggering prevails.

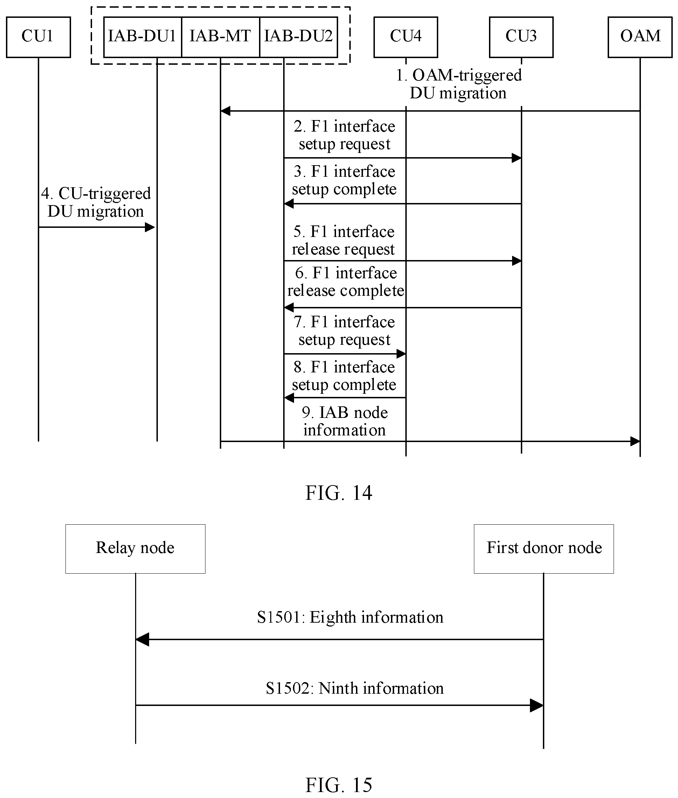

FIG. 14 is a schematic flowchart of another communication method according to an embodiment of this application. It may be understood that steps in this embodiment of this application may be considered as a proper variation of or a supplement to the embodiment in FIG. 12. Alternatively, it may be understood that the communication method in this embodiment of this application may be considered as an embodiment that can be independently performed. This is not limited in this application. The communication method provided in this embodiment of this application is applied to the field of communication technologies, for example, communication in an IAB network.

It may be understood that, for an IAB (including an IAB-DU and an IAB-MT) in the communication method provided in this embodiment of this application, refer to the relay node in the communication method shown in FIG. 12; for CU1, refer to the first donor node in the communication method shown in FIG. 12; for CU3 in the communication method provided in this embodiment of this application, refer to the target donor node in the communication method shown in FIG. 12; for CU4 in the communication method provided in this embodiment of this application, refer to the second donor node in the communication method shown in FIG. 12; and for an OAM in the communication method provided in this embodiment of this application, refer to the OAM server in the communication method shown in FIG. 12. Details are not described herein again.

The communication method may include one or more steps in step 1 to step 9. It should be understood that, for ease of description herein, a sequence of step 1 to step 9 is described, but this is not intended to limit execution to the foregoing sequence. An execution sequence, execution time, a quantity of execution times, and the like of the foregoing one or more steps are not limited in embodiments of this application. Step 1 to step 9 are specifically as follows:
Step 1: OAM-triggered DU migration.

It may be understood that OAM-triggered DU migration may be DU migration triggered through pre-configuration, or may be DU migration triggered through remote control. For details, refer to related descriptions about OAM triggering in FIG. 8. Details are not described herein again.

OAM triggering indicates that a target CU of DU migration of the IAB node is CU3. It should be noted that OAM-triggered DU migration generally means that indication information from the OAM server indicates that the IAB node is performing or is to perform DU migration. Correspondingly, the IAB node receives the indication information from the OAM server, and prepares to generate or is generating indication information for requesting to perform DU migration (for example, F1 SETUP REQUEST). Alternatively, the IAB node determines to perform DU migration based on OAM triggering. The target CU is CU3.

Step 2: IAB-DU2 sends an F1 interface setup request (for example, F1 SETUP REQUEST) to CU3, and correspondingly CU3 receives the F1 interface setup request from IAB-DU2.

Step 3: CU3 sends an F1 interface setup complete message (for example, F1 SETUP RESPONSE) to IAB-DU2, and correspondingly IAB-DU2 receives the F1 interface setup complete message from CU3.

Step 4: CU-triggered DU migration. Specifically, CU1 sends indication information of CU-triggered DU migration to IAB-DU1. For example, the message may be carried in an F1AP message, to indicate that a target CU of DU migration is CU4. Optionally, the message may carry an identifier of CU4, for example, a gNB ID and/or an IP address.

Optionally, a sequence of performing step 3 and step 4 is not limited in this embodiment of this application. For example, step 3 may be performed before step 4, or step 4 may be performed before step 3.

Step 5: IAB-DU2 sends an F1 interface release request to CU3, and correspondingly CU3 receives the F1 interface release request from IAB-DU2.

After receiving indication information of OAM triggering, the IAB node learns that the indication information of OAM triggering needs to prevail. Therefore, IAB-DU2 sends the F1 interface release request to CU3. CU3 needs to release the F1 interface, so that IAB-DU2 can set up an F1 interface with a CU of another donor node.

The F1 interface release request may be carried in an F1AP message, for example, an F1 REMOVAL REQUEST message.

Step 6: CU3 sends F1 interface release complete information to IAB-DU2, and correspondingly IAB-DU2 receives the F1 interface release complete information from CU3.

The F1 interface release complete information may be carried in an F1AP message, for example, an F1 REMOVAL RESPONSE message.

Step 7: IAB-DU2 sends an F1 interface setup request to CU4, and correspondingly CU4 receives the F1 interface setup request sent by IAB-DU2.

After IAB-DU2 receives the F1 interface release complete information sent by CU4, IAB-DU2 may send the F1 interface setup request information to CU4.

Optionally, the message may be carried in an F1AP message, for example, an F1 SETUP REQUEST message.

Step 8: CU4 sends F1 interface setup complete information to IAB-DU2, and correspondingly IAB-DU2 receives the F1 interface setup complete information sent by CU4.

Optionally, the information may be carried in an F1AP message, for example, an F1 SETUP RESPONSE message.

Step 9: The IAB node sends IAB node information to the OAM server.

For example, IAB-DU1 may send the IAB node information to the OAM server, or IAB-DU2 may send the IAB node information to the OAM server, or the IAB-MT sends the IAB node information to the OAM server. This is not limited in this embodiment of this application.

The IAB node message may indicate an F1 interface setup outcome, for example, indicate an outcome of setting up an F1 interface between the IAB node and CU4. The outcome may be, for example, F1 interface setup complete (complete).

Optionally, the IAB node information may carry an identifier of CU4, for example, a gNB ID and/or an IP address.

Optionally, the IAB node information may further carry a DU migration triggering manner of the IAB node. For example, DU migration of the IAB node is CU-triggered.

Optionally, the IAB node information may carry the DU migration triggering manner of the IAB node when at least one of the following conditions is met.
(1) The DU migration triggering manner of the IAB node is CU triggering.
(2) A target CU of DU migration of the IAB node is different from a target CU indicated by OAM triggering. For example, the IAB node sets up an F1 interface with CU4 based on the indication of CU triggering. However, the target CU indicated by OAM triggering is CU3, and CU4 is different from CU3.

According to this embodiment of this application, it is clarified that CU triggering prevails when a triggering conflict occurs in a DU migration process. This avoids a case in which a target CU of DU migration is not determined due to a triggering conflict, and can ensure that DU migration is successfully completed. In addition, information such as a DU migration outcome of the IAB node is sent to the OAM server, so that the OAM server can adjust a connection relationship of the IAB node in time, thereby helping the OAM server perform subsequent management and next DU migration of the IAB node.

FIG. 15 is a schematic flowchart of another communication method according to an embodiment of this application. The communication method is applied to the field of communication technologies, for example, communication in an IAB network. The communication method includes but is not limited to the following steps:
S1501: A first donor node sends eighth information to a relay node, and correspondingly the relay node receives the eighth information from the first donor node.
S1502: The relay node sends ninth information to the first donor node, and correspondingly the first donor node receives the ninth information from the relay node.

For related descriptions of the relay node, the first donor node, a second donor node, a target donor node, and an OAM server, refer to related descriptions in FIG. 9 or FIG. 12. Details are not described herein again.

The eighth information indicates the relay node to perform DU migration, and may include an identifier of a donor node after migration, for example, a gNB ID and/or an IP address.

The ninth information indicates that the relay node rejects DU migration indicated by CU triggering, and is used to enable the first donor node to learn that the relay node does not perform DU migration based on an indication of the first donor node.

Optionally, the eighth information and the ninth information each may be carried in an F1AP message.

In this implementation of this application, when receiving indication information of CU triggering, the relay node directly provides migration reject indication information, so that the relay node can perform a DU migration operation only based on indication information of OAM triggering, thereby avoiding a conflict between DU triggering and OAM triggering.

**In a possible implementation,** the ninth information includes a reason why the relay node rejects the DU migration.

In this implementation of this application, the DU migration reject reason may be, for example, that the relay node accepts only OAM triggering, or the relay node does not support CU triggering. This is not limited in this embodiment of this application. By providing the DU migration reject reason, the first relay node can also learn of and record a specific reason for rejecting DU migration this time. Therefore, the first donor node does not indicate the relay node to perform DU migration again, and the first donor node can further more clearly learn of a situation of the relay node, that is, the relay node rejects DU migration because the relay node does not support CU triggering or supports only OAM triggering, rather than the relay node rejects DU migration due to a reason, for example, because the relay node is abnormal, or the relay node temporarily cannot perform DU migration.

Optionally, the ninth information may be carried in a class 1 RESPONSE message or a REJECT/FAILURE message of an F1AP message of CU triggering, or may be carried in a separate class 2 message. Procedures in F1AP are classified into two types: a class 1 and a class 2. The class 1 procedure is a case requiring feedback in a same procedure, for example, F1 SETUP REQUEST--F1 SETUP RESPONSE/F1 SETUP FAILURE, GNB-DU CONFIGURATION UPDATE--GNB-DU CONFIGURATION UPDATE ACK/GNB-DU CONFIGURATION UPDATE FAILURE. The class 2 procedure is a procedure in which there is only one message in the procedure and no F1AP message needs to be fed back, for example, UL RRC MESSAGE TRANSFER or DL RRC MESSAGE TRANSFER.

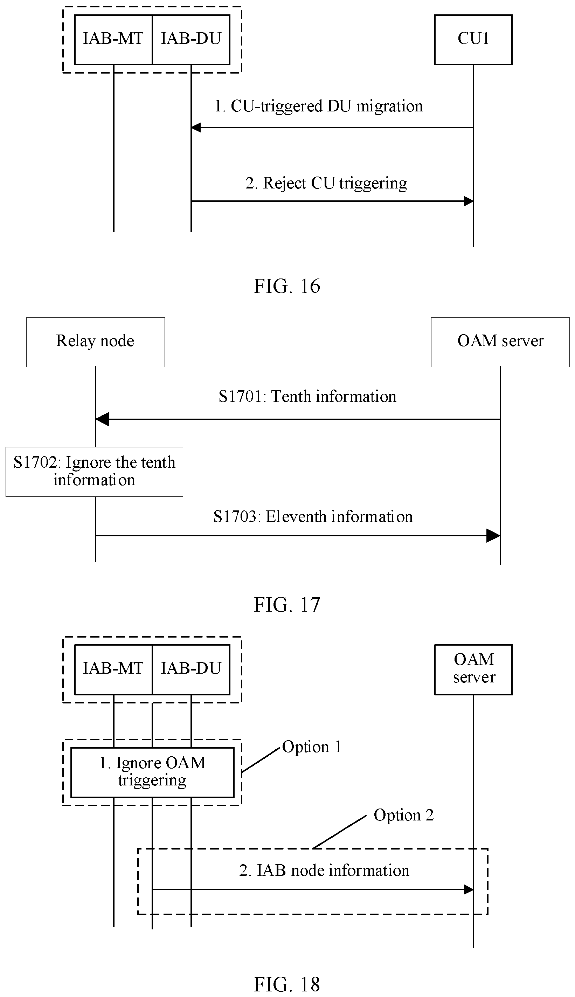

FIG. 16 is a schematic flowchart of a communication method according to an embodiment of this application. It may be understood that steps in this embodiment of this application may be considered as a proper variation of or a supplement to the embodiment in FIG. 15. Alternatively, it may be understood that the communication method in this embodiment of this application may be considered as an embodiment that can be independently performed. This is not limited in this application. The communication method provided in this embodiment of this application is applied to the field of communication technologies, for example, communication in an IAB network.

It may be understood that, for an IAB (including an IAB-DU and an IAB-MT) in the communication method provided in this embodiment of this application, refer to the relay node in the communication method shown in FIG. 15; for CU1, refer to the first donor node in the communication method shown in FIG. 15; for CU3 in the communication method provided in this embodiment of this application, refer to the target donor node in the communication method shown in FIG. 15; for CU4 in the communication method provided in this embodiment of this application, refer to the second donor node in the communication method shown in FIG. 15; and for an OAM in the communication method provided in this embodiment of this application, refer to the OAM server in the communication method shown in FIG. 15. Details are not described herein again.

The communication method may include one or more steps in step 1 and step 2. It should be understood that, for ease of description herein, a sequence of step 1 and step 2 is described, but this is not intended to limit execution to the foregoing sequence. An execution sequence, execution time, a quantity of execution times, and the like of the foregoing one or more steps are not limited in embodiments of this application. Step 1 and step 2 are specifically as follows:
Step 1: CU1 sends indication information of CU-triggered DU migration to the IAB-DU, and correspondingly the IAB-DU receives the indication information of CU-triggered DU migration from CU1.

Specifically, CU1 sends the indication information of CU-triggered DU migration to the IAB-DU. For example, the message may be carried in an F1AP message, for example, an MIAB F1 SETUP TRIGGERING message.

Optionally, the indication information may carry a target CU of DU migration, that is, CU3, CU4, or the like. This is not limited in this embodiment of this application.

Optionally, when CU triggering indicates DU migration to the target CU (for example, CU4), the message may carry an identifier of the target CU, for example, a gNB ID and/or an IP address.

Step 2: The IAB-DU sends CU triggering reject indication information to CU1, and correspondingly CU1 receives the CU triggering reject indication information from the IAB-DU.

The CU triggering reject indication information may be carried in a class 1 RESPONSE message or a REJECT/FAILURE message of an F1AP message of CU triggering, or may be carried in a separate class 2 message. Procedures in F1AP are classified into two types: a class 1 and a class 2. The class 1 procedure is a case requiring feedback in a same procedure, for example, F1 SETUP REQUEST--F1 SETUP RESPONSE/F1 SETUP FAILURE, GNB-DU CONFIGURATION UPDATE--GNB-DU CONFIGURATION UPDATE ACK/GNB-DU CONFIGURATION UPDATE FAILURE. The class 2 procedure is a procedure in which there is only one message in the procedure and no F1AP message needs to be fed back, for example, UL RRC MESSAGE TRANSFER or DL RRC MESSAGE TRANSFER. For example, the message in step 2 may be carried in MIAB F1 SETUP OUTCOME NOTIFICATION.

Optionally, the indication information may further carry a DU migration reject reason. For example, the IAB node accepts only OAM-triggered DU migration.

In this implementation of this application, when receiving the indication information of CU triggering, the relay node directly provides migration reject indication information, so that the relay node can perform a DU migration operation only based on indication information of OAM triggering, thereby avoiding a conflict between DU triggering and OAM triggering.

The implementations shown in FIG. 15 and FIG. 16 show a case in which the IAB node accepts only OAM-triggered DU migration. In the following, FIG. 17 and FIG. 18 show a case in which only CU-triggered DU migration is accepted.

FIG. 17 is a schematic flowchart of another communication method according to an embodiment of this application. The communication method is applied to the field of communication technologies, for example, communication in an IAB network. The communication method includes but is not limited to the following steps:
S1701: An OAM server sends tenth information to a relay node.
S1702 (Optional): The relay node ignores the tenth information.
S1703 (Optional): The relay node sends eleventh information to the OAM server.

For related descriptions of the relay node, a first donor node, a second donor node, a target donor node, and the OAM server, refer to related descriptions in FIG. 9 or FIG. 12. Details are not described herein again.

The tenth information may be information pre-configured by the network management system on the relay node, or may be information sent by the network management system to the relay node through remote control. For descriptions of pre-configuration and remote control, refer to the foregoing descriptions. Details are not described herein again. The tenth information may include an identifier of a donor node after the relay node performs migration, for example, a gNB ID and/or an IP address. The tenth information may further include information such as time when the relay node performs DU migration.

That the DU ignores (ignore) the tenth information may be that the relay node refuses to receive pre-configured information of the network management system; or may be that the relay node deletes pre-configured information when the network management system performs pre-configuration on the relay node; or may be that when pre-configured information indicates that the relay node needs to perform migration, the relay node ignores the indication and does not perform DU migration based on the indication of the pre-configured information; or may be that the relay node ignores DU migration triggered by the network management system through remote control.

In the IAB network, DU migration of an IAB node supports two triggering manners: source CU triggering and OAM triggering. In the source CU triggering (which is referred to as "CU triggering" subsequently) manner, a source CU sends indication information that carries a target CU to a DU of the IAB node, and the DU completes a migration operation based on the indication information. The source CU is a CU connected to the DU before migration, and the target CU is a CU connected to the DU after migration. In the OAM triggering manner, the OAM server can directly perform pre-configuration on the IAB node or remotely trigger the IAB node to perform DU migration. Apparently, both CU triggering and OAM triggering can indicate the relay node to perform DU migration. If CU triggering and OAM triggering occur at the same time, the relay node may not normally complete DU migration, or may migrate to an incorrect donor node. In addition, when the two triggering manners conflict, at least one triggering indication (for example, CU triggering) is not completed, which may cause a control failure, an information transmission error, or another exception.

However, in this implementation of this application, when indication information of OAM triggering indicates the relay node to perform DU migration, the relay node ignores the indication information of OAM triggering, so that the relay node executes only indication information of CU triggering, thereby avoiding a conflict between CU triggering and OAM triggering, and ensuring that the relay node normally completes DU migration.

**In a possible implementation,** the relay node sends the eleventh information to the network management system, where the eleventh information indicates that DU migration triggered by the network management system is rejected or indicates the network management system not to trigger DU migration of the relay node.

In this way, the OAM server learns that DU migration indicated by the OAM server is not performed by the relay node, so that the OAM server does not adjust a connection relationship of the relay node based on the indication information of OAM triggering. The OAM server is indicated not to trigger DU migration, so that some control resources can be saved, and a conflict between OAM triggering and CU triggering is avoided again.

**Optionally,** the relay node sends indication information to the OAM server, where the indication information indicates the relay node to set up an F1 interface with the target donor node.

When the relay node ignores the indication information of OAM triggering, if the relay node performs DU migration based on the indication information of CU triggering, and notifies the OAM server of a DU migration status of the relay node, the OAM server can update a connection relationship of the relay node in time, thereby helping the OAM server perform subsequent management of the relay node.

FIG. 18 is a schematic flowchart of a communication method according to an embodiment of this application. It may be understood that steps in this embodiment of this application may be considered as a proper variation of or a supplement to the embodiment in FIG. 17. Alternatively, it may be understood that the communication method in this embodiment of this application may be considered as an embodiment that can be independently performed. This is not limited in this application. The communication method provided in this embodiment of this application is applied to the field of communication technologies, for example, communication in an IAB network.

It may be understood that, for an IAB (including an IAB-DU and an IAB-MT) in the communication method provided in this embodiment of this application, refer to the relay node in the communication method shown in FIG. 17; for CU1, refer to the first donor node in the communication method shown in FIG. 17; for CU3 in the communication method provided in this embodiment of this application, refer to the target donor node in the communication method shown in FIG. 17; for CU4 in the communication method provided in this embodiment of this application, refer to the second donor node in the communication method shown in FIG. 17; and for an OAM in the communication method provided in this embodiment of this application, refer to the OAM server in the communication method shown in FIG. 17. Details are not described herein again.

The communication method may include one or more steps in step 1 to step 3. It should be understood that, for ease of description herein, a sequence of step 1 to step 3 is described, but this is not intended to limit execution to the foregoing sequence. An execution sequence, execution time, a quantity of execution times, and the like of the foregoing one or more steps are not limited in embodiments of this application. Step 1 to step 3 are specifically as follows:

Before the method shown in FIG. 18 is described, a possible prerequisite for performing the method in FIG. 18 is first described. For example, before the method shown in FIG. 18 is performed, the IAB node needs to receive OAM triggering, or the OAM server sends indication information of OAM triggering to the IAB node.

Step 1: The IAB node ignores OAM triggering (Option 1).

After receiving OAM triggering, the IAB node may select to ignore the indication information of OAM triggering, and specifically may always ignore an OAM configuration. For example, the IAB node directly ignores a message sent by the OAM server when receiving the message. For another example, a DU migration policy pre-configured by the OAM server is ignored.

Optionally, ignoring the indication information of OAM triggering may be, for example, not performing DU migration based on the indication information of OAM triggering, or not returning information to the OAM server based on the indication information of OAM triggering.

Step 2: The IAB node sends IAB node information to the OAM server (Option 2).

The IAB node message may indicate that the IAB node rejects the indication information of OAM triggering, and may further indicate the OAM server not to trigger DU migration of the IAB node, including: not triggering DU migration of the IAB node in a period of time, or not triggering DU migration of the IAB node permanently.

It should be noted that a sequence of performing step 1 and step 2 is not limited in this embodiment of this application. For example, step 1 may be performed before step 2, or step 2 may be performed before step 1. In addition, step 1 and step 2 may alternatively be considered as two parallel methods, that is, only one of the steps may be performed, for example, only step 1 or only step 2 is performed.

In this implementation of this application, OAM triggering is ignored or the IAB node message is sent to the OAM server, to indicate the OAM server not to trigger DU migration of the IAB node, so that the relay node can perform a DU migration operation only based on the indication information of CU triggering, thereby avoiding a conflict between DU triggering and OAM triggering. In addition, the OAM server can further learn that DU migration indicated by the OAM server is not performed by the relay node, so that the OAM server does not adjust a connection relationship of the relay node in time based on the indication information of OAM triggering, thereby facilitating subsequent OAM management.

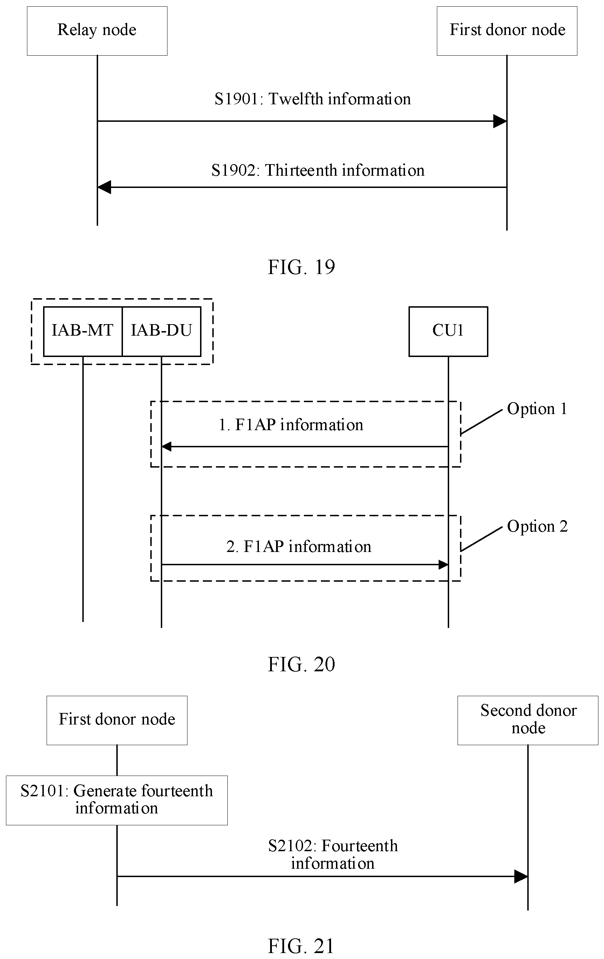

FIG. 19 is a schematic flowchart of another communication method according to an embodiment of this application. The communication method is applied to the field of communication technologies, for example, communication in an IAB network. The communication method includes but is not limited to the following steps:
S1901: A relay node sends twelfth information to a first donor node, and correspondingly the relay node receives the twelfth information from the first donor node.
S1902: The first donor node sends thirteenth information to the relay node, and correspondingly the first donor node receives the thirteenth information from the relay node.

For the relay node, the first donor node, a second donor node, a target donor node, and an OAM server shown in the method shown in FIG. 19, refer to related descriptions in FIG. 9 or FIG. 12. Details are not described herein again.

Specifically, S1901 and/or S1902 are/is performed when the following triggering condition is met:
The relay node generates the twelfth information when a third triggering condition is met. In this case, the third triggering condition may be understood as a condition for triggering the relay node to generate the twelfth information. Optionally, the relay node further sends the twelfth information when the third triggering condition is met. In this case, the third triggering condition may be understood as a condition for triggering the relay node to generate and send the twelfth information. Optionally, the first donor node generates the thirteenth information when the third triggering condition is met. In this case, the third triggering condition may be understood as a condition for triggering the first donor node to generate the thirteenth information. Optionally, the first donor node further sends the thirteenth information when the third triggering condition is met. In this case, the third triggering condition may be understood as a condition for triggering the first donor node to generate and send the thirteenth information.

**The third triggering condition includes but is not limited to one or more of the following:**
(1) The relay node completes network access.
(2) The relay node completes DU migration.

**It should be understood that** the foregoing listed several triggering conditions are merely used as possible examples for triggering execution of S1901 and/or S1902, and should not constitute a limitation on this embodiment of this application. All embodiments obtained based on a supplement to or a proper variation of the foregoing triggering conditions fall within the protection scope of this embodiment of this application.

Both the twelfth information and the thirteenth information indicate a DU migration triggering manner supported by the relay node. For example, only CU triggering is supported, only OAM triggering is supported, or both CU triggering and OAM triggering are supported. When the relay node supports both CU triggering and OAM triggering, priorities of CU triggering and OAM triggering may be further set, for example, OAM triggering prevails (equivalent to the method shown in FIG. 9) or CU triggering prevails (equivalent to the method shown in FIG. 12).

Optionally, the twelfth information may be carried in a class 1 procedure of F1AP, for example, an F1 SETUP REQUEST message or a GNB-DU CONFIGURATION UPDATE message; or may be carried in a class 2 procedure of F1AP. A specific message to be used is not limited in this embodiment of this application.

Optionally, the thirteenth information may be carried in a class 1 procedure of F1AP, for example, an F1 SETUP RESPONSE message or a GNB-CU CONFIGURATION UPDATE message; or may be carried in a class 2 procedure of F1AP. A specific message to be used is not limited in this embodiment of this application.

Optionally, S1901 and/or S1902 are/is performed when at least one of the following conditions is met.
(1) The relay node completes network access.
(2) The relay node completes DU migration.

That the relay node completes network access generally means that a parent node of the relay node is already in a network, and the relay node and a donor node in the network complete F1 interface setup; or the relay node may serve a UE or a next-hop MT.

That the relay node completes DU migration may mean that the relay node sets up a new F1 interface with a new donor node, a UE of the relay node has been handed over to the new DU, and an old F1 interface is released.

**In a possible implementation,** the foregoing supported DU migration triggering manner includes CU triggering and/or network management system triggering.

If the foregoing triggering manner includes only CU triggering or only network management system triggering, the relay node can avoid a triggering conflict, thereby ensuring that the relay node normally completes DU migration. If the foregoing triggering manner includes both CU triggering and OAM triggering, a possible conflict may be processed by using the methods provided in FIG. 9 to FIG. 14, thereby ensuring that the relay node normally completes DU migration.

FIG. 20 is a schematic flowchart of a communication method according to an embodiment of this application. It may be understood that steps in this embodiment of this application may be considered as a proper variation of or a supplement to the embodiment in FIG. 19. Alternatively, it may be understood that the communication method in this embodiment of this application may be considered as an embodiment that can be independently performed. This is not limited in this application. The communication method provided in this embodiment of this application is applied to the field of communication technologies, for example, communication in an IAB network.

It may be understood that, for an IAB (including an IAB-DU and an IAB-MT) in the communication method provided in this embodiment of this application, refer to the relay node in the communication method shown in FIG. 19; for CU1, refer to the first donor node in the communication method shown in FIG. 19; for CU3 in the communication method provided in this embodiment of this application, refer to the target donor node in the communication method shown in FIG. 19; for CU4 in the communication method provided in this embodiment of this application, refer to the second donor node in the communication method shown in FIG. 19; and for an OAM in the communication method provided in this embodiment of this application, refer to the OAM server in the communication method shown in FIG. 19. Details are not described herein again.

The communication method may include one or more steps in step 1 and step 2. It should be understood that, for ease of description herein, a sequence of step 1 and step 2 is described, but this is not intended to limit execution to the foregoing sequence. An execution sequence, execution time, a quantity of execution times, and the like of the foregoing one or more steps are not limited in embodiments of this application. Step 1 and step 2 are specifically as follows:
Step 1: CU1 sends F1AP information to the IAB-DU, and correspondingly the IAB-DU receives the F1AP information from CU1 (Option 1).

The F1AP information indicates a DU migration triggering manner that can be received by the IAB node, for example, may indicate that the IAB node supports CU triggering, or may indicate that the IAB node supports OAM triggering, or may indicate that the IAB node supports both CU triggering and OAM triggering. In addition, when it is indicated that the IAB node supports both CU triggering and OAM triggering, priorities of CU triggering and OAM triggering may be further indicated.

Optionally, the F1AP message may be carried in a class 1 message, for example, an F1 SETUP RESPONSE message or a GNB-CU CONFIGURATION UPDATE message.

Step 2: The IAB-DU sends F1AP information to CU1, and correspondingly CU1 receives the information from the IAB-DU (Option 2).

The F1AP information indicates a DU migration triggering manner that can be received by the IAB node, for example, may indicate that the IAB node supports CU triggering, or may indicate that the IAB node supports OAM triggering, or may indicate that the IAB node supports both CU triggering and OAM triggering. In addition, when it is indicated that the IAB node supports both CU triggering and OAM triggering, priorities of CU triggering and OAM triggering may be further indicated.

Optionally, the F1AP message may be carried in a class 1 message, for example, an F1 SETUP REQUEST message or a GNB-DU CONFIGURATION UPDATE message.

It should be noted that a sequence of performing step 1 and step 2 is not limited in this embodiment of this application. For example, step 1 may be performed before step 2, or step 2 may be performed before step 1. In addition, step 1 and step 2 may alternatively be considered as two parallel methods, that is, only one of the steps may be performed, for example, only step 1 or only step 2 is performed.

In this embodiment of this application, the DU migration triggering manner supported by the IAB node is set, so that CU triggering conflicts can be reduced, thereby ensuring that the IAB node successfully completes DU migration. When the IAB node supports the two triggering manners, the methods shown in FIG. 9 to FIG. 14 may be further performed to determine a target CU of DU migration when a conflict occurs, thereby ensuring that the IAB node successfully completes DU migration.

FIG. 21 is a schematic flowchart of another communication method according to an embodiment of this application. The communication method is applied to the field of communication technologies, for example, communication in an IAB network. The communication method includes but is not limited to the following steps:
S2101: A first donor node generates fourteenth information.
S2102: The first donor node sends the fourteenth information to a second donor node.

For descriptions of a relay node, the first donor node, the second donor node, a target donor node, and an OAM server shown in the method shown in FIG. 21, refer to related descriptions in FIG. 9 or FIG. 12. Details are not described herein again.

Specifically, S2101 and/or S2102 are/is performed when the following triggering condition is met:
The first donor node generates the fourteenth information when a fourth triggering condition is met. In this case, the fourth triggering condition may be understood as a condition for triggering the first donor node to generate the fourteenth information. Optionally, the first donor node further sends the fourteenth information when the fourth triggering condition is met. In this case, the fourth triggering condition may be understood as a condition for triggering the relay node to generate and send the fourteenth information.

**The fourth triggering condition includes but is not limited to one or more of the following:**
(1) The first donor node receives indication information from the relay node, where the indication information indicates that F1 interface setup between the relay node and the target donor node is completed.
(2) The first donor node interacts with the second donor node.
(3) There is a pre-configuration in the second donor node, and the pre-configuration indicates the second donor node to set up an F1 interface with the relay node.

Optionally, the condition 2 and the condition 3 occur in a DU migration process of the IAB node.

**It should be understood that** the foregoing listed several triggering conditions are merely used as possible examples for triggering execution of S2101 and/or S2102, and should not constitute a limitation on this embodiment of this application. All embodiments obtained based on a supplement to or a proper variation of the foregoing triggering conditions fall within the protection scope of this embodiment of this application.

The fourteenth information indicates to cancel F1 interface setup between the second donor node and the relay node. This avoids an exception caused when the second donor node attempts to set up an F1 interface with the relay node again. In addition, the second donor node can further use a valid resource to set up an F1 interface with another relay node.

Optionally, the fourteenth information may carry an identifier of the target donor node, for example, a gNB ID and/or an IP address.

In this implementation of this application, the first donor node sends the fourteenth information to the second donor node when the fourth triggering condition is met, where the fourteenth information indicates to cancel F1 interface setup between the second donor node and the relay node. This avoids an exception caused when the second donor node attempts to set up an F1 interface with the relay node again. In addition, the second donor node can further use a valid resource to set up an F1 interface with another relay node.

For a specific implementation of the method shown in FIG. 21, refer to related descriptions of step 6 in FIG. 10. Details are not described herein again.

The foregoing describes in detail the methods provided in embodiments of this application. The following provides an apparatus for implementing any one of the methods in embodiments of this application. For example, an apparatus including units (or means) for implementing steps performed by a device in any one of the foregoing methods is provided.

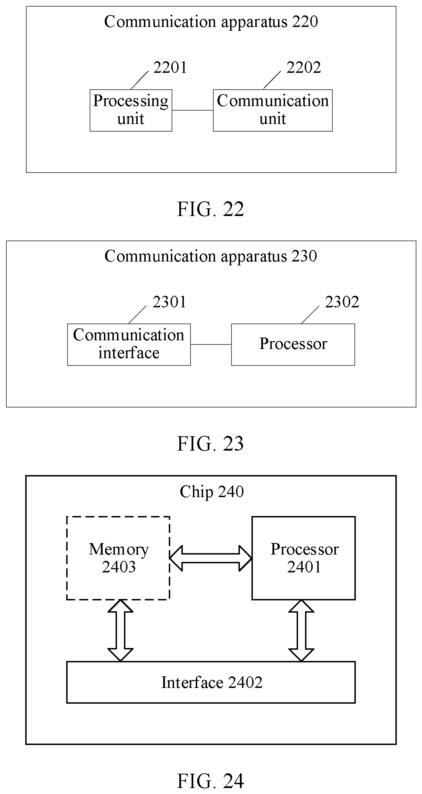

As shown in FIG. 22, a communication apparatus 220 may include a processing unit 2201 and a communication unit 2202. The processing unit 2201 and the communication unit 2202 may be software, hardware, or a combination of software and hardware.

The processing unit 2201 may implement a sending function and/or a receiving function, and the processing unit 2201 may also be described as a transceiver unit. Alternatively, the processing unit 2201 may be a unit integrating an obtaining unit and a sending unit, the obtaining unit is configured to implement a receiving function, and the sending unit is configured to implement a sending function. Optionally, the processing unit 2201 may be configured to receive information sent by another apparatus, and may be further configured to send information to another apparatus.

In a possible design, the communication apparatus 220 may correspond to the relay node in the method embodiments shown in FIG. 9 to FIG. 21. For example, the communication apparatus 220 may be the relay node, or may be a chip in the relay node. The communication apparatus 220 may include units configured to perform operations performed by the first donor node in the method embodiments shown in FIG. 9 to FIG. 21. In addition, the units in the communication apparatus 220 are configured to implement the operations performed by the first donor node in the method embodiments shown in FIG. 9 to FIG. 21. The units are described as follows:

The processing unit 2201 is configured to generate first information when a first triggering condition is met, where the first information includes an outcome of setting up a first F1 interface between the relay node and a target donor node and an identifier of the target donor node; or the first information includes an outcome of setting up a first F1 interface between the relay node and a target donor node, an identifier of the target donor node, and a DU migration triggering manner of the relay node.

The first triggering condition includes at least one of the following:
being based on second information provided by a network management system, where the second information indicates the relay node to set up the first F1 interface with the target donor node; or the relay node receives third information from a first donor node, where the third information indicates the relay node to set up a second F1 interface with a second donor node, and the second donor node is different from the target donor node.

The communication unit 2202 is configured to send the first information.

Alternatively,
the processing unit 2201 is configured to generate fourth information, where the fourth information includes an outcome of setting up a third F1 interface between the relay node and a target donor node.

The communication unit 2202 is configured to send the fourth information to a network management system.

Alternatively,
the processing unit 2201 is configured to generate fourth information when a second triggering condition is met.

The second triggering condition includes at least one of the following:
the relay node receives fifth information from a first donor node, where the fifth information indicates the relay node to set up a third F1 interface with a target donor node; or being based on sixth information provided by a network management system, where the sixth information indicates the relay node to set up a fourth F1 interface with a second donor node, and the second donor node is different from the target donor node; or the relay node receives seventh information from the target donor node, where the seventh information indicates that setup of the third F1 interface is completed.

The communication unit 2202 is configured to send the fourth information to the network management system.

Alternatively,
the processing unit 2201 is configured to generate ninth information, where the ninth information indicates that the relay node rejects DU migration.

The communication unit 2202 is configured to send the ninth information to a first donor node. In addition, the communication unit 2202 is further configured to receive eighth information from the first donor node, where the eighth information indicates the relay node to perform DU migration.

Alternatively,
the processing unit 2201 is configured to process tenth information, for example, ignore the tenth information.

The communication unit 2202 is configured to receive the tenth information from a network management system, where the tenth information indicates the relay node to perform DU migration.

Alternatively,
the processing unit 2201 is configured to: generate twelfth information, where
the twelfth information indicates a DU migration triggering manner supported by the relay node; and/or process thirteenth information from a first donor node, where the thirteenth information indicates the DU migration triggering manner supported by the relay node; and the triggering manner includes CU triggering and/or network management system triggering.

The communication unit 2202 is configured to send the twelfth information and/or receive the thirteenth information.

Alternatively,
the processing unit 2201 is configured to generate fourteenth information when a fourth triggering condition is met, where the fourteenth information indicates to cancel F1 interface setup between a second donor node and the relay node.

The fourth triggering condition includes:
receiving fifteenth information from the relay node, where the fifteenth information includes that the relay node and a target donor node complete F1 interface setup, and the target donor node is different from the second donor node.

The communication unit 2202 is configured to send the fourteenth information when the fourth triggering condition is met.

For the methods performed by the processing unit 2201 and the communication unit 2202, refer to the methods corresponding to FIG. 9 to FIG. 21. Details are not described herein again.

For technical effects brought by any one of the foregoing designs and any possible implementation, refer to descriptions of technical effects of the methods corresponding to FIG. 9 to FIG. 21. Details are not described herein again.

Optionally, in the communication apparatus according to any one of the foregoing designs and any possible implementation:

In an implementation, the communication apparatus is a communication device. When the communication apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is a chip (system) or a circuit used in a communication device, the communication unit may be a communication interface (input/output interface), an interface circuit, an output circuit, an input circuit, a pin, a related circuit, or the like on the chip (system) or the circuit, and the processing unit may be at least one processor, processing circuit, logic circuit, or the like.

According to this embodiment of this application, the units in the apparatus shown in FIG. 22 may be separately or all combined into one or more other units, or a specific unit (or some specific units) in the apparatus may be further split into a plurality of units with more detailed functions. This can implement a same operation without affecting implementation of technical effects of this embodiment of this application. The foregoing units are divided based on logical functions. During actual application, a function of one unit may alternatively be implemented by a plurality of units, or functions of a plurality of units are implemented by one unit. In another embodiment of this application, an electronic device may further include another unit. During actual application, the functions may alternatively be implemented with assistance of the another unit, and may be implemented by a plurality of units in collaboration.

It should be noted that for implementation of the units, refer to corresponding descriptions of the method embodiments shown in FIG. 9 to FIG. 21.

According to the communication apparatus 220 described in FIG. 22, a triggering conflict can be avoided, or a target CU of DU migration can be determined when a triggering conflict occurs, thereby ensuring that DU migration is successfully completed.

In another possible design, the communication apparatus 220 may correspond to the first donor node in the method embodiments shown in FIG. 9 to FIG. 21. For example, the communication apparatus 220 may be the first donor node, or may be a chip in the first donor node. The communication apparatus 220 may include units configured to perform operations performed by the first donor node in the method embodiments shown in FIG. 9 to FIG. 16 and FIG. 19 to FIG. 21. In addition, the units in the communication apparatus 220 are configured to implement the operations performed by the first donor node in the method embodiments shown in FIG. 9 to FIG. 16 and FIG. 19 to FIG. 21. The units are described as follows:

The communication unit 2202 is configured to receive first information from a relay node, where the first information includes an outcome of setting up a first F1 interface between the relay node and a target donor node and an identifier of the target donor node; or the first information includes an outcome of setting up a first F1 interface between the relay node and a target donor node, an identifier of the target donor node, and a DU migration triggering manner of the relay node.

The processing unit 2201 is configured to process the first information.

Alternatively,
the communication unit 2202 is configured to receive fourth information from a relay node, where the fourth information includes an outcome of setting up a third F1 interface between the relay node and a target donor node.

The processing unit 2201 is configured to process the fourth information.

Alternatively,
the processing unit 2201 is configured to generate eighth information, where the eighth information indicates a relay node to perform DU migration.

The communication unit 2202 is configured to send the eighth information to the relay node.

Alternatively,
the processing unit 2201 is configured to: generate thirteenth information, where the thirteenth information indicates a DU migration triggering manner supported by a relay node; and/or process twelfth information from the relay node, where the twelfth information indicates the DU migration triggering manner supported by the relay node; and the triggering manner includes CU triggering and/or network management system triggering.

The communication unit 2202 is configured to send the thirteenth information and/or receive the twelfth information.

Alternatively,
the processing unit 2201 is configured to generate fourteenth information when a fourth triggering condition is met, where the fourteenth information indicates to cancel F1 interface setup between a second donor node and a relay node.

The fourth triggering condition includes:
receiving fifteenth information from the relay node, where the fifteenth information includes that the relay node and a target donor node complete F1 interface setup, and the target donor node is different from the second donor node.

The communication unit 2202 is configured to send the fourteenth information when the fourth triggering condition is met.

For the methods performed by the processing unit 2201 and the communication unit 2202, refer to the methods corresponding to FIG. 9 to FIG. 16 and FIG. 19 to FIG. 21. Details are not described herein again.

For technical effects brought by any one of the foregoing designs and any possible implementation, refer to descriptions of technical effects of the methods corresponding to FIG. 9 to FIG. 16 and FIG. 19 to FIG. 21. Details are not described herein again.

Optionally, in the communication apparatus according to any one of the foregoing designs and any possible implementation:

In an implementation, the communication apparatus is a communication device. When the communication apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is a chip (system) or a circuit used in a communication device, the communication unit may be a communication interface (input/output interface), an interface circuit, an output circuit, an input circuit, a pin, a related circuit, or the like on the chip (system) or the circuit, and the processing unit may be at least one processor, processing circuit, logic circuit, or the like.

According to this embodiment of this application, the units in the apparatus shown in FIG. 22 may be separately or all combined into one or more other units, or a specific unit (or some specific units) in the apparatus may be further split into a plurality of units with more detailed functions. This can implement a same operation without affecting implementation of technical effects of this embodiment of this application. The foregoing units are divided based on logical functions. During actual application, a function of one unit may alternatively be implemented by a plurality of units, or functions of a plurality of units are implemented by one unit. In another embodiment of this application, an electronic device may further include another unit. During actual application, the functions may alternatively be implemented with assistance of the another unit, and may be implemented by a plurality of units in collaboration.

It should be noted that for implementation of the units, refer to corresponding descriptions of the method embodiments shown in FIG. 9 to FIG. 16 and FIG. 19 to FIG. 21.

According to the communication apparatus 220 described in FIG. 22, a triggering conflict can be avoided, or a target CU of DU migration can be determined when a triggering conflict occurs, thereby ensuring that DU migration is successfully completed.

In still another possible design, the communication apparatus 220 may correspond to the OAM server in the method embodiments shown in FIG. 12, FIG. 13, FIG. 14, FIG. 17, and FIG. 18. For example, the communication apparatus 220 may be the OAM server, or may be a chip in the OAM server. The communication apparatus 220 may include units configured to perform operations performed by the first donor node in the method embodiments shown in FIG. 12, FIG. 13, FIG. 14, FIG. 17, and FIG. 18. In addition, the units in the communication apparatus 220 are configured to implement the operations performed by the OAM server in the method embodiments shown in FIG. 12, FIG. 13, FIG. 14, FIG. 17, and FIG. 18. The units are described as follows:

The communication unit 2202 is configured to receive fourth information from a relay node, where the fourth information includes an outcome of setting up a third F1 interface between the relay node and a target donor node.

The processing unit 2201 is configured to process the fourth information.

Alternatively,
the processing unit 2201 is configured to generate tenth information, where the tenth information indicates a relay node to perform DU migration.

The communication unit 2202 is configured to send the tenth information to the relay node.

For the methods performed by the processing unit 2201 and the communication unit 2202, refer to the methods corresponding to FIG. 12, FIG. 13, FIG. 14, FIG. 17, and FIG. 18. Details are not described herein again.

For technical effects brought by any one of the foregoing designs and any possible implementation, refer to descriptions of technical effects of the methods corresponding to FIG. 12, FIG. 13, FIG. 14, FIG. 17, and FIG. 18. Details are not described herein again.

Optionally, in the communication apparatus according to any one of the foregoing designs and any possible implementation:

In an implementation, the communication apparatus is a communication device. When the communication apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is a chip (system) or a circuit used in a communication device, the communication unit may be a communication interface (input/output interface), an interface circuit, an output circuit, an input circuit, a pin, a related circuit, or the like on the chip (system) or the circuit, and the processing unit may be at least one processor, processing circuit, logic circuit, or the like.

According to this embodiment of this application, the units in the apparatus shown in FIG. 22 may be separately or all combined into one or more other units, or a specific unit (or some specific units) in the apparatus may be further split into a plurality of units with more detailed functions. This can implement a same operation without affecting implementation of technical effects of this embodiment of this application. The foregoing units are divided based on logical functions. During actual application, a function of one unit may alternatively be implemented by a plurality of units, or functions of a plurality of units are implemented by one unit. In another embodiment of this application, an electronic device may further include another unit. During actual application, the functions may alternatively be implemented with assistance of the another unit, and may be implemented by a plurality of units in collaboration.

It should be noted that for implementation of the units, refer to corresponding descriptions of the method embodiments shown in FIG. 12, FIG. 13, FIG. 14, FIG. 17, and FIG. 18.

According to the communication apparatus 220 described in FIG. 22, the network management system can obtain a connection relationship of the relay node in time, so that the network management system can manage the relay node and perform next DU migration, thereby ensuring that DU migration is successfully completed.

In still another possible design, the communication apparatus 220 may correspond to the second donor node in the method embodiment shown in FIG. 21. For example, the communication apparatus 220 may be the second donor node, or may be a chip in the second donor node. The communication apparatus 220 may include units configured to perform operations performed by the second donor node in the method embodiment shown in FIG. 21. In addition, the units in the communication apparatus 220 are configured to implement the operations performed by the second donor node in the method embodiment shown in FIG. 21. The units are described as follows:

The communication unit 2202 is configured to receive fourteenth information from a first donor node, where the fourteenth information indicates to cancel F1 interface setup between the second donor node and a relay node.

The processing unit 2201 is configured to process the fourteenth information.

For the method performed by the processing unit 2201 and the communication unit 2202, refer to the method corresponding FIG. 21. Details are not described herein again.

For technical effects brought by any one of the foregoing designs and any possible implementation, refer to descriptions of technical effects of the method corresponding to FIG. 21. Details are not described herein again.

Optionally, in the communication apparatus according to any one of the foregoing designs and any possible implementation:

In an implementation, the communication apparatus is a communication device. When the communication apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is a chip (system) or a circuit used in a communication device, the communication unit may be a communication interface (input/output interface), an interface circuit, an output circuit, an input circuit, a pin, a related circuit, or the like on the chip (system) or the circuit, and the processing unit may be at least one processor, processing circuit, logic circuit, or the like.

According to this embodiment of this application, the units in the apparatus shown in FIG. 22 may be separately or all combined into one or more other units, or a specific unit (or some specific units) in the apparatus may be further split into a plurality of units with more detailed functions. This can implement a same operation without affecting implementation of technical effects of this embodiment of this application. The foregoing units are divided based on logical functions. During actual application, a function of one unit may alternatively be implemented by a plurality of units, or functions of a plurality of units are implemented by one unit. In another embodiment of this application, an electronic device may further include another unit. During actual application, the functions may alternatively be implemented with assistance of the another unit, and may be implemented by a plurality of units in collaboration.

It should be noted that for implementation of the units, refer to corresponding descriptions of the method embodiment shown in FIG. 21.

According to the communication apparatus 220 described in FIG. 22, an exception caused when the second donor node attempts to set up an F1 interface with the relay node again can be avoided. In addition, the second donor node can further use a valid resource to set up an F1 interface with another relay node.

FIG. 23 is a diagram of a structure of a communication apparatus according to an embodiment of this application.

It should be understood that the communication apparatus 230 shown in FIG. 23 is merely an example. The communication apparatus in this embodiment of this application may further include another component, or a component with a function similar to that of each component in FIG. 23, or does not necessarily need to include all components in FIG. 23.

The communication apparatus 230 includes a communication interface 2301 and at least one processor 2302.

The communication apparatus 230 may correspond to any node or device of a relay node, a first donor node, a second donor node, a target donor node, and an OAM server. The communication interface 2301 is configured to receive and send signals, and the at least one processor 2302 executes program instructions, so that the communication apparatus 230 implements a corresponding procedure of a method performed by a corresponding device in the method embodiments.

In a possible design, the communication apparatus 230 may correspond to the relay node in the method embodiments shown in FIG. 9 to FIG. 21. For example, the communication apparatus 230 may be the relay node, or may be a chip in the relay node. The communication apparatus 230 may include units configured to perform operations performed by the first donor node in the method embodiments shown in FIG. 9 to FIG. 21. In addition, the units in the communication apparatus 230 are configured to implement the operations performed by the first donor node in the method embodiments shown in FIG. 9 to FIG. 21. The units are described as follows:

The processor 2302 is configured to generate first information when a first triggering condition is met, where the first information includes an outcome of setting up a first F1 interface between the relay node and a target donor node and an identifier of the target donor node; or the first information includes an outcome of setting up a first F1 interface between the relay node and a target donor node, an identifier of the target donor node, and a DU migration triggering manner of the relay node.

The first triggering condition includes at least one of the following:
being based on second information provided by a network management system, where the second information indicates the relay node to set up the first F1 interface with the target donor node; or the relay node receives third information from a first donor node, where the third information indicates the relay node to set up a second F1 interface with a second donor node, and the second donor node is different from the target donor node.

The communication interface 2301 is configured to send the first information.

Alternatively,
the processor 2302 is configured to generate fourth information, where the fourth information includes an outcome of setting up a third F1 interface between the relay node and a target donor node.

The communication interface 2301 is configured to send the fourth information to a network management system.

Alternatively,
the processor 2302 is configured to generate fourth information when a second triggering condition is met.

The second triggering condition includes at least one of the following:
the relay node receives fifth information from a first donor node, where the fifth information indicates the relay node to set up a third F1 interface with a target donor node; or being based on sixth information provided by a network management system, where the sixth information indicates the relay node to set up a fourth F1 interface with a second donor node, and the second donor node is different from the target donor node; or the relay node receives seventh information from the target donor node, where the seventh information indicates that setup of the third F1 interface is completed.

The communication interface 2301 is configured to send the fourth information to the network management system.

Alternatively,
the processor 2302 is configured to generate ninth information, where the ninth information indicates that the relay node rejects DU migration.

The communication interface 2301 is configured to send the ninth information to a first donor node. In addition, the communication interface 2301 is further configured to receive eighth information from the first donor node, where the eighth information indicates the relay node to perform DU migration.

Alternatively,
the processor 2302 is configured to process tenth information, for example, ignore the tenth information.

The communication interface 2301 is configured to receive the tenth information from a network management system, where the tenth information indicates the relay node to perform DU migration.

Alternatively,
the processor 2302 is configured to: generate twelfth information, where the twelfth information indicates a DU migration triggering manner supported by the relay node; and/or process thirteenth information from a first donor node, where the thirteenth information indicates the DU migration triggering manner supported by the relay node; and the triggering manner includes CU triggering and/or network management system triggering.

The communication interface 2301 is configured to send the twelfth information and/or receive the thirteenth information when a third triggering condition is met.

Alternatively,
the processor 2302 is configured to generate fourteenth information when a fourth triggering condition is met, where the fourteenth information indicates to cancel F1 interface setup between a second donor node and the relay node.

The fourth triggering condition includes:
receiving fifteenth information from the relay node, where the fifteenth information includes that the relay node and a target donor node complete F1 interface setup, and the target donor node is different from the second donor node.

The communication interface 2301 is configured to send the fourteenth information when the fourth triggering condition is met.

For the methods performed by the processor 2302 and the communication interface 2301, refer to the methods corresponding to FIG. 9 to FIG. 21. Details are not described herein again.

For technical effects brought by any one of the foregoing designs and any possible implementation, refer to descriptions of technical effects of the methods corresponding to FIG. 9 to FIG. 21. Details are not described herein again.

Optionally, in the communication apparatus according to any one of the foregoing designs and any possible implementation:

In an implementation, the communication apparatus is a communication device. When the communication apparatus is a communication device, the communication interface may be a transceiver or an input/output interface, and the processor may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is a chip (system) or a circuit used in a communication device, the communication interface may be a communication interface (input/output interface), an interface circuit, an output circuit, an input circuit, a pin, a related circuit, or the like on the chip (system) or the circuit, and the processor may be at least one processor, processing circuit, logic circuit, or the like.

According to this embodiment of this application, the units in the apparatus shown in FIG. 23 may be separately or all combined into one or more other units, or a specific unit (or some specific units) in the apparatus may be further split into a plurality of units with more detailed functions. This can implement a same operation without affecting implementation of technical effects of this embodiment of this application. The foregoing units are divided based on logical functions. During actual application, a function of one unit may alternatively be implemented by a plurality of units, or functions of a plurality of units are implemented by one unit. In another embodiment of this application, an electronic device may further include another unit. During actual application, the functions may alternatively be implemented with assistance of the another unit, and may be implemented by a plurality of units in collaboration.

It should be noted that for implementation of the units, refer to corresponding descriptions of the method embodiments shown in FIG. 9 to FIG. 21.

According to the communication apparatus 230 described in FIG. 23, a triggering conflict can be avoided, or a target CU of DU migration can be determined when a triggering conflict occurs, thereby ensuring that DU migration is successfully completed.

In another possible design, the communication apparatus 230 may correspond to the first donor node in the method embodiments shown in FIG. 9 to FIG. 21. For example, the communication apparatus 230 may be the first donor node, or may be a chip in the first donor node. The communication apparatus 230 may include units configured to perform operations performed by the first donor node in the method embodiments shown in FIG. 9 to FIG. 16 and FIG. 19 to FIG. 21. In addition, the units in the communication apparatus 230 are configured to implement the operations performed by the first donor node in the method embodiments shown in FIG. 9 to FIG. 16 and FIG. 19 to FIG. 21. The units are described as follows:

The communication interface 2301 is configured to receive first information from a relay node, where the first information includes an outcome of setting up a first F1 interface between the relay node and a target donor node and an identifier of the target donor node; or the first information includes an outcome of setting up a first F1 interface between the relay node and a target donor node, an identifier of the target donor node, and a DU migration triggering manner of the relay node.

The processor 2302 is configured to process the first information.

Alternatively,
the communication interface 2301 is configured to receive fourth information from a relay node, where the fourth information includes an outcome of setting up a third F1 interface between the relay node and a target donor node.

The processor 2302 is configured to process the fourth information.

Alternatively,
the processor 2302 is configured to generate eighth information, where the eighth information indicates a relay node to perform DU migration.

The communication interface 2301 is configured to send the eighth information to the relay node.

Alternatively,
the processor 2302 is configured to: generate thirteenth information, where the thirteenth information indicates a DU migration triggering manner supported by a relay node; and/or process twelfth information from the relay node, where the twelfth information indicates the DU migration triggering manner supported by the relay node; and the triggering manner includes CU triggering and/or network management system triggering.

The communication interface 2301 is configured to send the thirteenth information and/or receive the twelfth information.

Alternatively,
the processor 2302 is configured to generate fourteenth information when a fourth triggering condition is met, where the fourteenth information indicates to cancel F1 interface setup between a second donor node and a relay node.

The fourth triggering condition includes:
receiving fifteenth information from the relay node, where the fifteenth information includes that the relay node and a target donor node complete F1 interface setup, and the target donor node is different from the second donor node.

The communication interface 2301 is configured to send the fourteenth information when the fourth triggering condition is met.

For the methods performed by the processor 2302 and the communication interface 2301, refer to the methods corresponding to FIG. 9 to FIG. 16 and FIG. 19 to FIG. 21. Details are not described herein again.

For technical effects brought by any one of the foregoing designs and any possible implementation, refer to descriptions of technical effects of the methods corresponding to FIG. 9 to FIG. 16 and FIG. 19 to FIG. 21. Details are not described herein again.

Optionally, in the communication apparatus according to any one of the foregoing designs and any possible implementation:

In an implementation, the communication apparatus is a communication device. When the communication apparatus is a communication device, the communication interface may be a transceiver or an input/output interface, and the processor may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is a chip (system) or a circuit used in a communication device, the communication interface may be a communication interface (input/output interface), an interface circuit, an output circuit, an input circuit, a pin, a related circuit, or the like on the chip (system) or the circuit, and the processor may be at least one processor, processing circuit, logic circuit, or the like.

According to this embodiment of this application, the units in the apparatus shown in FIG. 23 may be separately or all combined into one or more other units, or a specific unit (or some specific units) in the apparatus may be further split into a plurality of units with more detailed functions. This can implement a same operation without affecting implementation of technical effects of this embodiment of this application. The foregoing units are divided based on logical functions. During actual application, a function of one unit may alternatively be implemented by a plurality of units, or functions of a plurality of units are implemented by one unit. In another embodiment of this application, an electronic device may further include another unit. During actual application, the functions may alternatively be implemented with assistance of the another unit, and may be implemented by a plurality of units in collaboration.

It should be noted that for implementation of the units, refer to corresponding descriptions of the method embodiments shown in FIG. 9 to FIG. 16 and FIG. 19 to FIG. 21.

According to the communication apparatus 230 described in FIG. 23, a triggering conflict can be avoided, or a target CU of DU migration can be determined when a triggering conflict occurs, thereby ensuring that DU migration is successfully completed.

In still another possible design, the communication apparatus 230 may correspond to the OAM server in the method embodiments shown in FIG. 12, FIG. 13, FIG. 14, FIG. 17, and FIG. 18. For example, the communication apparatus 230 may be the OAM server, or may be a chip in the OAM server. The communication apparatus 230 may include units configured to perform operations performed by the first donor node in the method embodiments shown in FIG. 12, FIG. 13, FIG. 14, FIG. 17, and FIG. 18. In addition, the units in the communication apparatus 230 are configured to implement the operations performed by the OAM server in the method embodiments shown in FIG. 12, FIG. 13, FIG. 14, FIG. 17, and FIG. 18. The units are described as follows:

The communication interface 2301 is configured to receive fourth information from a relay node, where the fourth information includes an outcome of setting up a third F1 interface between the relay node and a target donor node.

The processor 2302 is configured to process the fourth information.

Alternatively,
the processor 2302 is configured to generate tenth information, where the tenth information indicates a relay node to perform DU migration.

The communication interface 2301 is configured to send the tenth information to the relay node.

For the methods performed by the processor 2302 and the communication interface 2301, refer to the methods corresponding to FIG. 12, FIG. 13, FIG. 14, FIG. 17, and FIG. 18. Details are not described herein again.

For technical effects brought by any one of the foregoing designs and any possible implementation, refer to descriptions of technical effects of the methods corresponding to FIG. 12, FIG. 13, FIG. 14, FIG. 17, and FIG. 18. Details are not described herein again.

Optionally, in the communication apparatus according to any one of the foregoing designs and any possible implementation:

In an implementation, the communication apparatus is a communication device. When the communication apparatus is a communication device, the communication interface may be a transceiver or an input/output interface, and the processor may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is a chip (system) or a circuit used in a communication device, the communication interface may be a communication interface (input/output interface), an interface circuit, an output circuit, an input circuit, a pin, a related circuit, or the like on the chip (system) or the circuit, and the processor may be at least one processor, processing circuit, logic circuit, or the like.

According to this embodiment of this application, the units in the apparatus shown in FIG. 23 may be separately or all combined into one or more other units, or a specific unit (or some specific units) in the apparatus may be further split into a plurality of units with more detailed functions. This can implement a same operation without affecting implementation of technical effects of this embodiment of this application. The foregoing units are divided based on logical functions. During actual application, a function of one unit may alternatively be implemented by a plurality of units, or functions of a plurality of units are implemented by one unit. In another embodiment of this application, an electronic device may further include another unit. During actual application, the functions may alternatively be implemented with assistance of the another unit, and may be implemented by a plurality of units in collaboration.

It should be noted that for implementation of the units, refer to corresponding descriptions of the method embodiments shown in FIG. 12, FIG. 13, FIG. 14, FIG. 17, and FIG. 18.

According to the communication apparatus 230 described in FIG. 23, the network management system can obtain a connection relationship of the relay node in time, so that the network management system can manage the relay node and perform next DU migration, thereby ensuring that DU migration is successfully completed.

In still another possible design, the communication apparatus 230 may correspond to the second donor node in the method embodiment shown in FIG. 21. For example, the communication apparatus 230 may be the second donor node, or may be a chip in the second donor node. The communication apparatus 230 may include units configured to perform operations performed by the second donor node in the method embodiment shown in FIG. 21. In addition, the units in the communication apparatus 230 are configured to implement the operations performed by the second donor node in the method embodiment shown in FIG. 21. The units are described as follows:

The communication interface 2301 is configured to receive fourteenth information from a first donor node, where the fourteenth information indicates to cancel F1 interface setup between the second donor node and a relay node.

The processor 2302 is configured to process the fourteenth information.

For the method performed by the processor 2302 and the communication interface 2301, refer to the method corresponding to FIG. 21. Details are not described herein again.

For technical effects brought by any one of the foregoing designs and any possible implementation, refer to descriptions of technical effects of the method corresponding to FIG. 21. Details are not described herein again.

Optionally, in the communication apparatus according to any one of the foregoing designs and any possible implementation:

In an implementation, the communication apparatus is a communication device. When the communication apparatus is a communication device, the communication interface may be a transceiver or an input/output interface, and the processor may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is a chip (system) or a circuit used in a communication device, the communication interface may be a communication interface (input/output interface), an interface circuit, an output circuit, an input circuit, a pin, a related circuit, or the like on the chip (system) or the circuit, and the processor may be at least one processor, processing circuit, logic circuit, or the like.

According to this embodiment of this application, the units in the apparatus shown in FIG. 23 may be separately or all combined into one or more other units, or a specific unit (or some specific units) in the apparatus may be further split into a plurality of units with more detailed functions. This can implement a same operation without affecting implementation of technical effects of this embodiment of this application. The foregoing units are divided based on logical functions. During actual application, a function of one unit may alternatively be implemented by a plurality of units, or functions of a plurality of units are implemented by one unit. In another embodiment of this application, an electronic device may further include another unit. During actual application, the functions may alternatively be implemented with assistance of the another unit, and may be implemented by a plurality of units in collaboration.

It should be noted that for implementation of the units, refer to corresponding descriptions of the method embodiment shown in FIG. 21.

According to the communication apparatus 230 described in FIG. 23, an exception caused when the second donor node attempts to set up an F1 interface with the relay node again can be avoided. In addition, the second donor node can further use a valid resource to set up an F1 interface with another relay node.

For a case in which the communication apparatus may be a chip or a chip system, refer to a diagram of a structure of a chip shown in FIG. 24.

As shown in FIG. 24, the chip 240 includes a processor 2401 and an interface 2402. There may be one or more processors 2401, and there may be a plurality of interfaces 2402. It should be noted that functions corresponding to the processor 2401 and the interface 2402 may be implemented by using a hardware design, or may be implemented by using a software design, or may be implemented by using a combination of software and hardware. This is not limited herein.

Optionally, the chip 240 may further include a memory 2403, and the memory 2403 is configured to store necessary program instructions and data.

In this application, the processor 2401 may be configured to invoke, from the memory 2403, an implementation program of the communication method provided in one or more embodiments of this application on one or more devices or nodes of the relay node, the first donor node, the second donor node, the target donor node, and the OAM server, and execute instructions included in the program. The interface 2402 may be configured to output an execution outcome of the processor 2401. In this application, the interface 2402 may be specifically configured to output messages or information about the processor 2401.

For the communication methods provided in one or more embodiments of this application, refer to the embodiments shown in FIG. 9 to FIG. 21. Details are not described herein again.

The processor in embodiments of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The memory in embodiments of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the methods provided in embodiments of this application, an embodiment of this application further provides a computer-readable storage medium. The computer-readable storage medium stores a computer program. When the computer program is run on one or more processors, the methods shown in FIG. 9 to FIG. 21 may be implemented.

According to the methods provided in embodiments of this application, an embodiment of this application further provides a computer program product. The computer program product includes a computer program. When the computer program is run on a processor, the methods shown in FIG. 9 to FIG. 21 may be implemented.

An embodiment of this application further provides a system. The system includes at least one communication apparatus 220, communication apparatus 230, or chip 240, to perform steps performed by a corresponding device in any one of the embodiments in FIG. 9 to FIG. 21.

An embodiment of this application further provides a system. The system includes at least one of a relay node, a first donor node, a second donor node, a target donor node, and an OAM server. The relay node is configured to perform steps performed by the relay node in any one of the embodiments in FIG. 9 to FIG. 21. The first donor node is configured to perform steps performed by the first donor node in any one of the embodiments in FIG. 9 to FIG. 21. The second donor node is configured to perform steps performed by the second donor node in the embodiment in FIG. 21. The OAM server is configured to perform steps performed by the OAM server in FIG. 12, FIG. 13, FIG. 14, FIG. 17, and FIG. 18.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), or may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component, or may be a system on chip (system on chip, SoC), or may be a central processing unit (central processing unit, CPU), or may be a network processor (network processor, NP), or may be a digital signal processing circuit (digital signal processor, DSP), or may be a microcontroller unit (microcontroller unit, MCU), or may be a programmable logic device (programmable logic device, PLD) or another integrated chip. The methods, the steps, and the logical block diagrams that are disclosed in embodiments of this application may be implemented or performed. The general-purpose processor may be a microprocessor, or the processor may be any conventional processor or the like. The steps of the methods disclosed with reference to embodiments of this application may be directly performed by a hardware decoding processor, or may be performed by using a combination of hardware in a decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

All or some of the foregoing embodiments may be implemented by using software, hardware, firmware, or any combination thereof. When software is used for implementation, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

The units in the foregoing apparatus embodiments totally correspond to the electronic devices in the method embodiments, and corresponding modules or units perform corresponding steps. For example, the communication unit (transceiver) performs receiving or sending steps in the method embodiments, and steps other than sending and receiving steps may be performed by the processing unit (processor). For a function of a specific unit, refer to a corresponding method embodiment. There may be one or more processors.

It may be understood that in embodiments of this application, the electronic device may perform some or all steps in embodiments of this application. These steps or operations are merely examples. In embodiments of this application, other operations or variations of various operations may be performed. In addition, the steps may be performed in a sequence different from a sequence presented in embodiments of this application, and not all operations in embodiments of this application need to be performed.

A person of ordinary skill in the art may be aware that, in combination with the examples described in embodiments disclosed in this specification, units and algorithm steps may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be or may not be physically separate, and parts displayed as units may be or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, wherein the method comprises:
sending, by a relay node, first information to a first donor node when a first triggering condition is met, wherein the first information comprises an outcome of setting up a first F1 interface between the relay node and a target donor node and an identifier of the target donor node; or the first information comprises an outcome of setting up a first F1 interface between the relay node and a target donor node, an identifier of the target donor node, and a DU migration triggering manner of the relay node, wherein
the first triggering condition comprises at least one of the following:
being based on second information provided by a network management system, wherein the second information indicates the relay node to set up the first F1 interface with the target donor node; or the relay node receives third information from the first donor node, wherein the third information indicates the relay node to set up a second F1 interface with a second donor node, and the second donor node is different from the target donor node.

2. The method according to claim 1, wherein the outcome of the first F1 interface is that F1 interface setup between the relay node and the target donor node is completed.

3. The method according to claim 1 or 2, wherein the second information is further used to trigger release of the second F1 interface.

4. A communication method, wherein the method comprises:
receiving, by a first donor node, first information from a relay node when a first triggering condition is met, wherein the first information comprises an outcome of setting up a first F1 interface between the relay node and a target donor node and an identifier of the target donor node; or the first information comprises an outcome of setting up a first F1 interface between the relay node and a target donor node, an identifier of the target donor node, and a DU migration triggering manner of the relay node, wherein
the first triggering condition comprises at least one of the following:
being based on second information provided by a network management system, wherein the second information indicates the relay node to set up the first F1 interface with the target donor node; or the relay node receives third information from the first donor node, wherein the third information indicates the relay node to set up a second F1 interface with a second donor node, and the second donor node is different from the target donor node.

5. A communication method, wherein the method comprises:
sending, by a relay node, fourth information to a network management system, wherein the fourth information comprises an outcome of setting up a third F1 interface between the relay node and a target donor node.

6. The method according to claim 5, wherein the sending, by the relay node, the fourth information to the network management system comprises:
sending, by the relay node, the fourth information to the network management system when a second triggering condition is met, wherein
the second triggering condition comprises at least one of the following:
the relay node receives fifth information from a first donor node, wherein the fifth information indicates the relay node to set up the third F1 interface with the target donor node; or being based on sixth information provided by the network management system, wherein the sixth information indicates the relay node to set up a fourth F1 interface with a second donor node, and the second donor node is different from the target donor node; or the relay node receives seventh information from the target donor node, wherein the seventh information indicates that setup of the third F1 interface is completed.

7. The method according to claim 5 or 6, wherein the fifth information is further used to trigger release of the fourth F1 interface.

8. The method according to any one of claims 5 to 7, wherein the fourth information further comprises an identifier of the target donor node and/or the DU migration triggering manner.

9. The method according to claim 8, wherein that the fourth information further comprises the identifier of the target donor node and/or the DU migration triggering manner comprises:
when the second triggering condition comprises: the relay node receives the fifth information from the first donor node and/or being based on the sixth information provided by the network management system, the fourth information further comprises the identifier of the target donor node and/or the DU migration triggering manner.

10. A communication method, wherein the method comprises:
receiving, by a network management system, fourth information from a relay node, wherein the fourth information comprises an outcome of setting up a third F1 interface between the relay node and a target donor node.

11. A communication method, wherein the method comprises:
receiving, by a relay node, eighth information from a first donor node, and sending ninth information to the first donor node, wherein the eighth information indicates the relay node to perform DU migration, and the ninth information indicates that the relay node rejects the DU migration.

12. The method according to claim 11, wherein the ninth information comprises a reason why the relay node rejects the DU migration.

13. A communication method, wherein the method comprises:
sending, by a first donor node, eighth information to a relay node, and receiving ninth information from the relay node, wherein the eighth information indicates the relay node to perform DU migration, and the ninth information indicates that the relay node rejects the DU migration.

14. A communication method, wherein the method comprises:
receiving, by a relay node, tenth information from a network management system, wherein the tenth information indicates the relay node to perform DU migration; and
ignoring, by the DU, the tenth information.

15. The method according to claim 14, wherein the method further comprises:
sending, by the relay node, eleventh information to the network management system, wherein the eleventh information indicates that DU migration triggered by the network management system is rejected or indicates the network management system not to trigger DU migration of the relay node.

16. A communication method, wherein the method comprises:
sending, by a network management system, tenth information to a relay node, wherein the tenth information indicates the relay node to perform DU migration; and
receiving, by the network management system, eleventh information from the relay node, wherein the eleventh information indicates that DU migration triggered by the network management system is rejected or indicates the network management system not to trigger DU migration of the relay node.

17. A communication method, wherein the method comprises:
sending, by a relay node, twelfth information to a first donor node, wherein
the twelfth information indicates a DU migration triggering manner supported by the relay node; and/or receiving, by the relay node, thirteenth information from the first donor node, wherein the thirteenth information indicates the DU migration triggering manner supported by the relay node; and the triggering manner comprises CU triggering and/or network management system triggering.

18. The method according to claim 17, wherein the sending, by the relay node, the twelfth information to the first donor node comprises:
sending, by the relay node, the twelfth information to the first donor node when a third triggering condition is met, wherein
the third triggering condition comprises at least one of the following:
the relay node completes network access; or the relay node completes DU migration.

19. A communication method, wherein the method comprises:
sending, by a first donor node, thirteenth information to a relay node, wherein
the thirteenth information indicates a DU migration triggering manner supported by the relay node; and/or receiving, by the first donor node, twelfth information from the relay node, wherein the twelfth information indicates the DU migration triggering manner supported by the relay node; and the triggering manner comprises CU triggering and/or network management system triggering.

20. A communication method, wherein the method comprises:
sending, by a first donor node, fourteenth information to a second donor node when a fourth triggering condition is met, wherein the fourteenth information indicates to cancel F1 interface setup between the second donor node and a relay node, wherein
the fourth triggering condition comprises:
receiving fifteenth information from the relay node, wherein the fifteenth information comprises that the relay node and a target donor node complete F1 interface setup, and the target donor node is different from the second donor node.

21. A communication method, wherein the method comprises:
receiving, by a second donor node, fourteenth information from a first donor node, wherein the fourteenth information indicates to cancel F1 interface setup between the second donor node and a relay node.

22. A communication apparatus, comprising units configured to perform the method according to any one of claims 1 to 21.

23. A communication apparatus, comprising a processor, wherein the processor is configured to perform the method according to any one of claims 1 to 21.

24. A communication apparatus, comprising a logic circuit and an interface, wherein the logic circuit is coupled to the interface; and
the interface is configured to input and/or output information, and the logic circuit is configured to perform the method according to any one of claims 1 to 21.

25. A computer-readable storage medium, wherein the computer-readable storage medium is configured to store a computer program, and when the computer program is executed, the method according to any one of claims 1 to 21 is performed.

26. A communication system, comprising at least one of the following: a relay node, a first donor node, a second donor node, and a network management system, wherein
the relay node is configured to perform the method according to any one of claims 1 to 3, 5 to 9, 11 and 12, 14 and 15, and 17 and 18, the first donor node is configured to perform the method according to any one of claims 4, 13, and 17 to 20, the second donor node is configured to perform the method according to claim 21, and the network management system is configured to perform the method according to claim 10 or 16.
